# EUROPEAN PATENT SPECIFICATION

(11) **EP 1 503 624 B1**
(45) Date of publication and mention of the grant of the patent: **12.09.2007**
(21) Application number: 03731187.5
(22) Date of filing: 15.05.2003
(51) Int. Cl.: A01N 51/00

(54) **INCREASING PLANT YIELD BY SEED TREATMENT WITH A NEONICOTINOID COMPOUND**
ERHÖHUNG DER PFLANZENAUSBEUTE DURCH BEHANDLUNG DES SAATGUTS MIT EINER NEONICOTINOID-VERBINDUNG
AUGMENTATION DU RENDEMENT VEGETAL AU MOYEN D'UN TRAITEMENT DE SEMENCE A L'AIDE D'UN COMPOSE DE NEONICOTINOIDE

(30) Priority: 16.05.2002 US 381186 P; 14.04.2003 US 413343
(43) Date of publication of application: 09.02.2005
(73) Proprietor: Monsanto Technology LLC, St. Louis, Missouri 63167 (US)
(72) Inventor: ASRAR, Jawed, Chesterfield, MO 63017 (US); SANDERS, Ernest, F., Lake St. Louis, MO 63367 (US); KOHN, Frank, C., St. Louis, MO 63146 (US)
(74) Representative: Bosch, Henry
(86) International application number: PCT/US2003/015249
(87) International publication number: WO 2003/096811

(56) References cited:
- WO-A-01/26468

## Description

### (1) Field of the Invention:

The present invention relates to the improvement of the yield and/or the vigor of agronomic plants, and more particularly to a method of improving the yield and/or vigor of agronomic plants grown from a seed comprising a foreign polynucleotide sequence encoding for the production of an insecticidal protein in a foreign polynucleotide sequence which provides herbicide resistance, or both, by treatment of a seed of the plant with a neonicotinoid compound when insecticidal protection is not indicated.

### (2) Description of the Related Art:

Plants are a critical source of food, animal feed, fiber, lumber, structural materials, and useful chemicals and medicaments. Increasing demands for these plant products have driven continuing worldwide efforts to increase the productivity of arable lands. These efforts have resulted in large increases in land productivity and crop yield. Most of these increases can be attributed to improved plant varieties and increased use of pesticides, new types of pesticides with higher activities, new types of herbicides and increased use of herbicides, and the continued use of fertilizers.

In contrast to the benefits provided by these factors, however, each of them has disadvantages. For example, higher yielding varieties of crops can be less robust and may be subject to catastrophic loss to pests or environmental stresses to which they are not acclimated; the toxic activities of pesticides and herbicides are often not limited to pests and can be harmful to non-target species - including humans; and fertilizers can be lost by leaching and runoff to surface waters and cause serious disruption of natural stream life and water quality.

New types of pesticides have been discovered that are very effective against targeted pests. One family of insecticides, in particular, has been found that shows great potential for protecting the seeds and plants of important agronomic crops from insect damage. This family, the neonicotinoids, include such agents as thiamethoxam (available commercially as HELIX^{®} and CRUISER^{®}), imidacloprid (available commercially as GAUCHO^{®}), as well as several other related compounds.
The use of thiamethoxam as a pesticidal seed treatment has been reported, at least on cotton, sorghum, maize, sweet corn, and sugar beet, for the control of wireworm, cotton seedling thrips, tomato thrips, cotton aphid, black field earwig, and other insects. Seed treatment with imidacloprid has been reported, at least for winter cereals, corn, wheat, barley, sugar beets, sorghum, potato, cotton and canola, for the control of aphids, flea beetles, Lygus bugs, cabbage Seedpod Weevil larvae, corn root worm, chinch bug, wireworms, and other insect pests. The use of these insecticides as seed treatments, rather than as field-applied formulations, is believed to reduce the exposure and odor of the pesticide, and to reduce the amount of post-planting cultivation and application. For further information, see, *e.g.,* U.S. Patent No. 6,331,531 B1, and WO 99/35913.

Another area of agricultural pest control in which significant progress has been made is with the genetic engineering of plants to express insecticidally toxic proteins, in particular, the delta endotoxins of *Bacillus thuringiensis* (Bt). A comprehensive listing of such Bt endotoxins can be found, for example, at http://epunix.biols.susx.ac.uk/Home/Neil_Crickmore/Bt/index.html; on 04/27/2002.

Several reports have discussed the combination of treating transgenic plants that produce insect toxins with pesticidal compounds for the purpose of insect control. For example, Lee, B. et al., in WO 99/35913, describe a method of controlling pests by treating plants that express one or more naturally occurring Bt insect toxins with a neonicotinoid compound. In WO 99/35910, a method of controlling pests is described that includes applying pymetrozine, profenofos, a benzoylurea-derivative, or a carbamate-derivative to the pests, their environment, or to a transgenic plant that can contain one or more of the natural Bt delta-endotoxin genes. In U.S. Patent No. 6,331,531, Kern describes the treatment of transgenic crops with certain compounds, including imidacloprid, in order to obtain synergistic control of harmful insects. Commercially, Monsanto Company, St. Louis, MO, has offered GAUCHO^{®}-treated corn that is Roundup Ready^{®} (hybrids RX738RR and RX740RR), corn that has YieldGuard^{®} corn borer (hybrid DK626BtY), and corn that has both Roundup Ready^{®} and YieldGuard^{®} corn borer transgenic events (hybrids DK440RR/YG, DK520RR/YG, DK551 RR/YG, and RX601 RR/YG). The purpose of applying the insecticide to the seed is described as being for protection to the first true leaf stage against pests like wireworms, seed corn maggots, imported fire ants, and flea beetles.

With the continued development of molecular cloning techniques, various delta-endotoxin genes have been isolated and their DNA sequences determined. These genes have been used to construct certain genetically engineered Bt products that have been approved for commercial use. Recent developments have seen new delta-endotoxin delivery systems developed, including plants that contain and express genetically engineered delta-endotoxin genes.

The cloning and sequencing of a number of delta-endotoxin genes from a variety of Bt strains have been described and are summarized by Hofte and Whiteley, Microbiol. R., 53:242-255 (1989). Plasmid shuttle vectors designed for the cloning and expression of delta-endotoxin genes in *E. coli* or *B. thuringiensis* are described by Gawron-Burke and Baum, Genet. Engineer, 13:237-263 (1991). U.S. Pat. No. 5,441,884 discloses a site-specific recombination system for constructing recombinant *B. thuringiensis* strains containing delta-endotoxin genes that are free of DNA not native to *B*. *thuringiensis.*

In recent years, researchers have focused effort on the construction of hybrid delta-endotoxins with the hope of producing proteins with enhanced activity or improved properties. Advances in the art of molecular genetics over the past decade have facilitated a logical and orderly approach to engineering proteins with improved properties. Site-specific and random mutagenesis methods, the advent of polymerase chain reaction (PCR^{™}) methodologies, and the development of recombinant methods for generating gene fusions and constructing chimeric proteins have facilitated an assortment of methods for changing amino acid sequences of proteins, fusing portions of two or more proteins together in a single recombinant protein, and altering genetic sequences that encode proteins of commercial interest.

However, in earlier work with crystal proteins, these techniques were only exploited in limited fashion. The likelihood of arbitrarily creating a chimeric protein with enhanced properties from portions of the numerous native proteins which have been identified was remote given the complex nature of protein structure, folding, oligomerization, activation, and correct processing of the chimeric protoxin to an active moiety. Only by careful selection of specific target regions within each protein, and subsequent protein engineering can toxins be synthesized which have improved insecticidal activity.

In U.S. Patent No. 6,281,016, however, English *et al.* disclosed reliable methods and compositions comprising recombinantly-engineered crystal proteins which have improved insecticidal activity, broad-host-range specificities, and which are suitable for commercial production in *B. thuringiensis.* That work describes methods for the construction of *B. thuringiensis* hybrid delta-endotoxins comprising amino acid sequences from native Cry1Ac and Cry1F crystal proteins. These hybrid proteins, in which all or a portion of Cry1Ac domain 2, all or a portion of Cry1 Ac domain 3, and all or a portion of the Cry1Ac protoxin segment is replaced by the corresponding portions of Cry1 F, possess not only the insecticidal characteristics of the parent delta-endotoxins, but also have the unexpected and remarkable properties of enhanced broad-range specificity which is not proficiently displayed by either of the native delta-endotoxins from which the chimeric proteins were engineered.

One method of using genes which encode insect toxins is to incorporate the gene into the plant requiring protection. Techniques for carrying out this transformation are known in the art, and can be found in, for example, U.S. Patent Nos. 6,023,013 and 6,284,949, among others. In commercial practice, it is common to transfer desired insecticidal toxin genes into genetic stock of the agronomic plant that is stable and vigorous, but is not the top yielding variety. Once the transgenic event is stabilized in the selected recipient, a normal hybrid breeding and selection process is used to cross the transgenic plants with higher-yielding varieties in order to obtain high-yielding varieties that express the desired transgenic event. Finally, when a hybrid is selected that demonstrates suitable yield and vigor, while also expressing the transgenic event, it can proceed to commercial use.

A disadvantage to this technique which remains, however, is that it is not uncommon for hybrid varieties of the plant, and, in particular, for transgenic hybrids, to demonstrate lower vigor, such as, for example, less vigorous root growth and development, than parent and non-transgenic varieties.

Therefore, even with such advances as described above, the demand continues for increased productivity from useful agricultural land, irrespective of whether these increases are due to pest control or to other factors. Accordingly, it remains a high priority to provide methods for increasing the yield and vigor of agronomic plants. It would be useful if these methods were safe and easy to use. Moreover, it would be useful if these methods could help reduce the amount of in-field cultivation and chemical application to plants during growth. It would also be useful if these methods could be carried out with reduced exposure of farmers and surrounding land and water, and non-target plants and animals to toxic pesticides. It would also be useful if these methods could be used in beneficial combination with other emerging technologies, such as to enhance the vigor of hybrid and, in particular, transgenic hybrid plants that express insecticidal toxins.

### SUMMARY OF THE INVENTION

Briefly therefore, the present invention is directed to a novel method of increasing the yield and/or vigor of an agronomic plant that is grown from a seed comprising a foreing polynucleotide sequence encoding for the production of an insecticidal protein, or a foreign polynucleotide sequence which provides herbicide resistance, or both the method comprising:
a. determining whether the seed is to be planted in a location having a level of insect pest infestation that would indicate treatment with an insecticide; and, if such treatment is not indicated,
b. carrying out an action that is selected from the group consisting of:
   i. treating the seed with a neonicotinoid compound, and
   iv. planting in the location a seed that has been treated with a neonicotinoid compound.

The present invention is also directed to a novel method of increasing the yield and/or vigor of an agronomic plant that is grown from a seed comprising a foreing polynucleotide sequence encoding for the production of an insecticidal protein, or a foreign polynucleotide sequence which provides herbicide resistance, or both where the seed is planted in a location having a level of infestation by an insect that is a pest for the agronomic plant and against which a neonicotinoid compound has insecticidal activity, the method comprising:
a. determining whether the level of infestation by the insect that is a pest for the agronomic plant indicates treatment with an insecticide; and, if treatment is not indicated,
b. treating the seed with a neonicotinoid compound.

The present invention is also directed to a novel method of breeding a hybrid plant comprising a foreing polynucleotide sequence encoding for the production of an insecticidal protein, or a foreign polynucleotide sequence which provides herbicide resistance, or both having increased yield and/or vigor from two parent plants, the method comprising:
treating the seeds of one or both of the parent plants with a neonicotinoid compound prior to planting the seeds;
pollinating the female parent with pollen of the male parent; and
gathering the seed produced by the female parent plant.

The present invention is also directed to a novel method of increasing the yield and/or vigor of an agronomic plant that is grown from a seed that is planted in a location where treatment of the seed or the agronomic plant with an insecticide is not indicated, the method comprising treating a seed comprising a foreign polynucleotide sequence encoding for the production of an insecticidal protein, or a foreign polynucleotide sequence which provides herbicide resistance, or both, with a neonicotinoid compound and planting the treated seed in a location where treatment of the seed or the agronomic plant with an insecticide is not practiced.

The present invention is also directed to a novel method of increasing the yield and/or vigor of an agronomic plant that is grown from a seed that is planted in a location having a level of infestation by an insect that is a pest for the agronomic plant and against which a neonicotinoid insecticide has insecticidal activity, the method comprising treating a seed comprising a foreign polynucleotide sequence encoding for the production of an insecticidal protein, or a foreign polynucleotide sequence which provides herbicide resistance, or both, with a neonicotinoid compound and planting the treated seed in a location where insecticide treatment of the seed or the agronomic plant is not practiced.

The present invention is also directed to a novel method of increasing the yield and/or vigor of an agronomic plant that is grown from a seed that is planted in a location having a level of infestation by an insect that is a pest for the agronomic plant and against which a neonicotinoid insecticide has insecticidal activity, the method comprising:
a. treating a seed comprising a foreign polynucleotide sequence encoding for the production of an insecticidal protein, or a foreign polynucleotide sequence which provides herbicide resistance, or both, with a neonicotinoid insecticide; and
b. planting the treated seed in a location having a level of insect infestation below that at which such insecticide treatment is indicated.

The present invention is also directed to a novel method of increasing the yield and/or vigor of an agronomic plant that is grown from a seed comprising a foreign polynucleotide sequence encoding for the production of an insecticidal protein, or a foreign polynucleotide sequence which provides herbicide resistance, or both, the method comprising:
a. selecting a location in which the seed is to be planted where the level of insect pest infestation is below that at which treatment with an insecticide is indicated; and
b. carrying out an action that is selected from the group consisting of:
   i. treating the seed with a neonicotinoid compound, and planting in the location a seed that has been treated with a neonicotinoid compound.

The present invention is also directed to a novel seed that is treated by the method described first above.

Among the several advantages found to be achieved by the present invention, therefore, may be noted the provision of a method of increasing the yield and vigor of agronomic plants, and also the provision of such methods that are safe and easy to use, and also the provision of such methods that can help reduce the amount of in-field cultivation and chemical application to plants during growth, and also the provision of such methods that can be carried out with reduced exposure of farmers and surrounding land and water, and non-target plants and animals to toxic pesticides, and also the provision of methods that can be used in beneficial combination with other emerging technologies, such as to enhance the vigor of hybrid, and in particular, transgenic hybrid plants that express insecticidal toxins.

### BRIEF DESCRIPTION OF THE DRAWINGS

Figure 1 is a map illustrating levels of insecticide use on corn acreage in the United States in the year 2001 by crop reporting district;

Figure 2 is a bar chart showing the com yield (in bu/ac) from seed having a seed treatment with imidacloprid (GAUCHO^{®}) relative to the yield of control com without such seed treatment for twelve different com hybrids; and

Figure 3 is a bar chart showing the corn yield (in bu/ac) from seed having a seed treatment with imidacloprid (GAUCHO^{®}) relative to the yield of control corn without such seed treatment for twenty-four different locations.

### DETAILED DESCRIPTION OF THE PREFERRED EMBODIMENTS

In accordance with the present invention, it has been discovered that the vigor and/or the yield of an agronomic plant can be increased by treating the seed of the plant comprising a foreign polynucleotide sequence encoding for the production of an insecticidal protein, or a foreign polynucleotide sequence which provides herbicide resistance, or both, with an effective amount of a neonicotinoid compound of the type that has heretofore been principally identified as an insecticide. Surprisingly, it has been shown that such neonicotinoid compounds have the capability of causing an improvement in the yield and/or the vigor of the plant whether or not the plant is under pest pressure from insect pathogens. In fact, the increase in yield and/or vigor can be shown to take place even when the treated seed and plant are under no pest pressure at all, for example, as in tests where germination, sprouting and plant growth take place under substantially sterile conditions.

The increase in yield and/or vigor is entirely unexpected because it is brought about by the use of a compound that has previously been identified as an insecticide, but occurs even in the absence of pest pressure by insect pathogens against which the compound is known to be active. By way of example, the method is useful to increase plant yield and/or vigor in geographic areas, or with cultivation practices, where the particular insecticide is not normally used -- and even under conditions where the use of the insecticide is explicitly not indicated.

In fact, it is believed that it would be counterintuitive for someone having skill in the art of controlling insect pathogens in crops to apply a chemical compound to a seed or a plant -- at significant expensein instances where the known activity of the compound was believed not to be needed. Moreover, given the care expended upon minimizing the use of resources in modern farming practices, such an application would be considered to be a waste. But, surprisingly, the inventors have found that this is not the case. The inventors have found that some neonicotinoid compounds -- neonicotinoid insecticides, in particular -- can be applied to plant seeds with the result that the plants that are grown from the seeds demonstrate increased yield and/or vigor.

It is also believed that the novel method demonstrates particularly useful and unexpected results in situations where the treated seed or plant is subjected to some stress during or after germination. For example, such stress could be caused by environmental stress, such as drought, cold, cold and wet, and other such conditions. It is believed, in fact, that side-by-side comparisons of plants grown from seeds treated by preferred embodiments of the novel method and plants grown from untreated seeds are subjected to drought conditions sometime after sprouting will demonstrate the superior yield and/or vigor of the plants grown from the treated seeds.

Since the neonicotinoid compounds that are useful in the novel method can be applied to seed prior to planting, the present method provides an easy method of achieving the advantages of improved plant yield and/or vigor without the added effort and expense of cultivation or in-field application after germination and sprouting.

In another embodiment, the neonicotinoid compound can be applied with good results to the seeds of plants having particular transgenic events, whether or not insect infestation level indicates the use of an insecticide. In one example of this embodiment, the neonicotinoid compound is applied to a seed that contains one or more genes capable of expressing a *B. thuringeinsis* delta-endotoxin of any type, when such neonicotinoid treatment is not indicated on account of insect pressure. In another example of this embodiment, the neonicotinoid compound is applied to a seed that contains one or more genes capable of expressing a chimeric or modified Bt delta-endotoxin, which has an amino acid sequence that is different from that of any natural, unmodified, endotoxin, such as those described in WO 99/35910 and WO 99/35913. An unexpected advantage of the treatment of the seed of a transgenic plant is the surprising increase in vigor that the method provides to the transgenic plant. In preferred embodiments, the combination of neonicotinoid seed treatment with a transgenic plant provides a synergistic advantage. This is of particular value, for example, in breeding programs for transgenic plants.

As mentioned above, the application of the neonicotinoid compound has the capability of increasing the yield and/or vigor of a plant grown from a seed comprising a foreign polynucleotide sequence encoding for the production of an insecticidal protein, or a foreign polynucleotide sequence which provides herbicide resistance, or both, even in the absence of insect pests against which the compound has insecticidal activity. In fact, the neonicotinoid compound is capable of increasing the yield and/or the vigor of a plant even when the seed is germinated and sprouted and the plant is grown under sterile conditions. In other words, in the absence of any plant pests at all.

When it is said that the seed is germinated and sprouted and the plant is grown under sterile conditions, what is meant is that a seed, which has been subjected to a non-phytotoxic surface sterilization procedure, such as contact with 0.1 % - 0.15% sodium hypochlorite solution containing 0.5% household detergent for 10 minutes, followed with rinsing 3 times with sterile distilled water, or to other appropriate sanitization procedures as are known in the art, is planted in a growing medium that has been sterilized, or is otherwise substantially free of insect pests and other organisms that are pathogenic for the plant.

Unless otherwise indicated, when an "insect pest", or an "insect that is a pest for the agronomic plant", is referred to, what is meant is an insect species known to be an important pest of a particular agronomic plant. A pest would normally be considered to be an important pest of a particular plant or crop if that pest was capable of reducing the yield and/or the vigor of the plant or crop to a level below that which the plant or crop would provide in the absence of the pest.

As used herein, the terms "agronomic plant" and "agronomically important plant" mean the same thing, and both refer to a plant of which a part or all is, or has been, harvested or cultivated on a commercial scale, or serves as an important source of feed, food, fiber, lumber, or other chemical compounds. Examples of such agronomic plants include, without limitation, corn, cereals, including wheat, barley, rye, and rice, vegetables, clovers, legumes, including beans, peas and alfalfa, sugar cane, sugar beets, tobacco, cotton, rapeseed (canola), sunflower, safflower, and sorghum. Other agronomic plants will be described below.

When the subject method is described herein as "increasing the yield" of an agronomic plant, what is meant is that the yield of a product of the plant is increased by a measurable amount over the yield of the same product of the plant produced under the same conditions, but without the application of the subject method. It is preferred that the yield be increased by at least about 0.5%, more preferred that the increase be at least about 1 %, even more preferred is about 2%, and yet more preferred is about 4%, or more. Yield can be expressed in terms of an amount by weight or volume of a product of the plant on some basis. The basis can be expressed in terms of time, growing area, weight of plants produced, amount of a raw material used, or the like. By way of example, if untreated soybeans yielded 35 bu/ac, and if soybeans that received the subject treatment yielded 38 bu/ac under the same growing conditions, then the yield of soybeans would be said to have been increased by ((38-35)/35) x 100 = 8.5%. This increase in yield would be considered to be within the definition of "increasing the yield" of soybeans as those terms are used herein.

In the same manner, if a particular desired component of an agronomic plant is increased by a measurable amount over the yield of the same component of the plant produced under the same conditions, but without the application of the subject method, then the yield of the agronomic plant is increased. By way of example, if untreated soybeans (weighing 60 lb/bu) yielded 35 bu/ac of beans having an oil content of 20% by weight, and if soybeans that received the subject treatment yielded 35 bu/ac of beans having an oil content of 22% by weight under the same growing conditions, then the yield of soybean oil would be said to have been increased by ((0.22*60*35) -(0.2*60*35))/(.2*60*35) x 100 = 10%. This increase in oil yield would be considered to be within the definition of "increasing the yield" of an agronomic crop as those terms are used herein.

When the subject method is described herein as "increasing the vigor" of an agronomic plant, what is meant is that the vigor rating, or the stand (the number of plants per unit of area), or the plant weight, or the plant height, or the plant canopy, or the visual appearance, or the root rating, or any combination of these factors, is increased or improved by a measurable or noticeable amount over the same factor of the plant produced under the same conditions, but without the application of the subject method. It is preferred that such factor(s) is increased or improved by a significant amount.

When it is said that the present method is capable of "increasing the yield and/or vigor" of an agronomic plant, it is meant that the method results in an increase in either the yield, as described above, or the vigor of the plant, as described above, or both the yield and the vigor of the plant.

As used herein, the term "location" means the place where the seed is planted, and when the seed is planted in a field, garden or seedbed, it includes the geographic area around the field, garden or seedbed that would be expected to have the same level of insect pest infestation as the place where a seed is planted. By way of example, adjacent fields and fields located within reasonable proximity to the place where a seed is planted would normally be expected to have the same level of insect pest infestation. In some cases, an entire growing region, such as a county, or several counties, or a crop reporting district, or even a state, or larger region, would be expected to have the same level of insect pest infestation. It is believed that the delineation of such regions, and methods for determining their extent, are common knowledge within the skill of an ordinary practitioner in the art of agricultural pest control.

The terms "level of infestation", as used herein, mean the capacity for plant damage by the infesting entity expressed on some basis. The basis can be per unit area, per unit time, per plant, or the like. In the present case, a level of infestation can include zero infestation. Common parameters for the level of infestation of insects include, for example, the concentration of the insects in terms of number per unit area, and the number of insects found, caught, or otherwise counted, per unit time in a specific location.

When it is said that an insect is one "against which a neonicotinoid compound has insecticidal activity", it is meant that a neonicotinoid insecticide, such as imidacloprid, thiamethoxam, or clothianidin, for example, has a toxic effect against the insect. Such toxic effect can include direct or indirect actions such as inducing the death of the insect, repelling the insect from the plant seeds, roots, shoots and/or foliage, inhibiting feeding of the insect or its larval stages on, or the laying of its eggs on, the plant seeds, roots, shoots and/or foliage, and inhibiting or preventing reproduction of the insect.

In an embodiment of the subject method the yield and/or the vigor of an agronomic plant that is grown from a seed comprising a foreign polynucleotide sequence encoding for the production of an insecticidal protein, or a foreign polynucleotide sequence which provides herbicide resistance, or both, can be increased by determining whether the seed is to be planted in a location having a level of insect pest infestation that would indicate treatment with an insecticide; and, if such treatment is not indicated, carrying out an action that is selected from the group consisting of: (i) treating the seed comprising a foreign polynucleotide sequence encoding for the production of an insecticidal protein, or a foreign polynucleotide sequence which provides herbicide resistance, or both, with a neonicotinoid compound, and planting in the location a seed that has been treated with a neonicotinoid compound.

In an alternative embodiment, the method can be carried out by selecting a location in which the seed is to be planted where the level of insect pest infestation is below that at which treatment with an insecticide is indicated; and treating the seed comprising a foreign polynucleotide sequence encoding for the production of an insecticidal protein, or a foreign polynucleotide sequence which provides herbicide resistance, or both, with a neonicotinoid compound, or planting in the location a seed that has been treated with a neonicotinoid compound.

Surprisingly, the present method requires one to do precisely what the present state of knowledge in pesticide practice would teach one not to do -- to treat the seed with a neonicotinoid compound known heretofore as an insecticide -- when the use of an insecticide is not indicated.

The determination of whether the level of infestation by the insect that is a pest for the agronomic plant indicates treatment with an insecticide can be made in any one of several ways and is a determination that is well known to one having ordinary skill in the art of pest control. By way of example, one method for making this determination is to compare the yield or vigor of the agronomic plant when it is grown in the location without any insecticide treatment (for example, as an untreated control) with the yield or vigor of the plant when it is grown in the same location with a standard soil treatment of insecticide. If the soil treatment with the insecticide does not result in improvement of the yield or vigor of the plant, this would be considered to be a determination that treatment with an insecticide was not indicated. In making this determination, it is preferred that the soil-applied insecticide is a neonicotinoid insecticide.

Another method for determining that treatment with an insecticide is not indicated is to review historical data for a particular location, and, if seeds of the agronomic plant have not historically been treated with an insecticide at that location -- even when such seed treatment was approved for use and was commercially available -- then it can be determined that such a treatment was not indicated.

An example of a method for determining that treatment with an insecticide is not indicated by reviewing historical data for a particular location is exemplified by reference to pertinent data showing actual insecticide treatment patterns for a selected crop. In the United States, for example, certain crop reporting districts (CRDs) have been defined, which delineate geographical areas within which growing conditions are the same or similar. Data is historically compiled for each of these CRDs on the types and acreage of crops planted, as well as for insecticide usage. Commercial companies that serve the agricultural sector, such as Doane Market Research, Doane Agricultural Services, Inc., St. Louis, MO, provide such information. By way of example, data showing planted acreage, acreage treated with insecticide, acreage treated with foliar insecticide, acreage treated with soil applied insecticide, and acreage that is not treated with insecticide, can be provided for crops such as corn, cotton, and soybeans. Inspection of this information by a skilled practitioner would readily permit the determination of whether treatment of the pertinent crop was indicated for a particular location. In particular, treatment would not be indicated for a CRD, or other reporting region, in which no insecticide treatment is shown. In fact, without knowledge that treatment would provide benefits of yield and/or vigor in a manner other than as a pesticide, the election to use an insecticide in a location where no insecticide use is reported would be counterintuitive.

Because information on infestation and insecticide usage is commonly available to seed companies, seed distributors and sellers, and farmers, it must be assumed that this information is well known to the pertinent public. Therefore, seed treatment would not be indicated for any location where treatment is not practiced. As used herein, the terms "treatment is not practiced", as they modify a location or region where crops are planted, means that under 1% of the total acreage planted to a crop have been reported as being treated. A preferred level of determining where treatment is not practiced is that 0.5%, or under, of the total acreage planted to a crop is treated, even more preferred that under 0.1% of the total acreage planted to a crop is treated, and yet more preferred that none of the total acreage planted to a crop is treated.

Maps and tables can be provided that show the locations where the insecticidal treatment of corn is not practiced. It is believed, therefore, that seed treatment of corn with a neonicotinoid compound having insecticidal properties would not be indicated for those locations. Similar data can be shown for cotton and soybeans, among other crops, and this data can serve, likewise, as the basis for indicating that seed treatment of these crops with a neonicotinoid compound having insecticidal properties is not indicated.

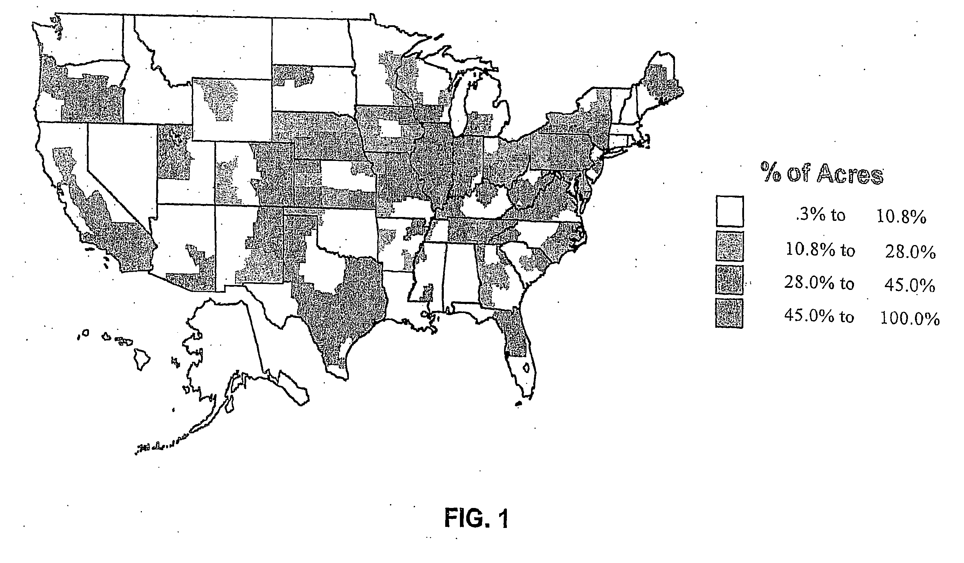

By way of example, data is available that shows the total acreage in each CRD that is planted to a particular crop in the U.S., and how many, and which, of those acres receive insecticide treatment. For corn in the U.S., for example, Table 1 shows that of the about 76 million acres that were planted to corn, only about 21 million acres, or less than 30% of the total acreage, received an insecticide treatment. That means that over 70% of the corn acreage received no insecticide treatment. Figure 1 shows this same information in a graphic format. (Source of Fig.1: 2001 Doane AgroTrak Study -- Doane Marketing Research, Inc., St. Louis, Missouri). Because insecticides approved for corn, and corn seeds treated with insecticides, were approved for use and were readily available on the market, It is believed that such insecticides and insecticidally treated seeds would have been used in locations where their use would have been economically justified. It is believed that non-use in a particular location, therefore, would indicate a level of insect infestation at that location below that indicating insecticide treatment.

**Table 1: Corn acreage that is treated and untreated with insecticide by U.S. crop reporting district in 2001.**

| CRD Numeric | Planted | Treated Base Acres | Soil Treated Base Acres | Foliar Treated Base Acres | Non Treated Base Acres |
|---|---|---|---|---|---|
| 01010 | 36,638 | | | | 36,638 |
| 01020 | 46,741 | | | | 46,741 |
| 01030 | 17,041 | | | | 17,041 |
| 01040 | 30,183 | 2,040 | 2,040 | 0 | 28,143 |
| 01050 | 30,700 | | | | 30,700 |
| 01060 | 38,696 | | | | 38,696 |
| 04020 | 5,165 | | | | 5,165 |
| 04050 | 8,983 | | | | 8,983 |
| 04090 | 45,852 | 34,434 | 0 | 34,434 | 11,418 |
| 05030 | 120,971 | 40,443 | 40,443 | 0 | 80,528 |
| 05040 | 46,341 | 7,583 | 0 | 7,583 | 38,758 |
| 05050 | 1,354 | | | | 1,354 |
| 05070 | 3,009 | | | | 3,009 |
| 05090 | 8,325 | 1,204 | 0 | 1,204 | 7,121 |
| 06050 | 153,489 | 78,097 | 16,801 | 61,296 | 75,392 |
| 06051 | 346,903 | 293,405 | 212,328 | 81,077 | 53,498 |
| 06060 | 8,231 | | | | 8,231 |
| 06080 | 11,381 | 11,381 | 0 | 11,381 | 0 |
| 08020 | 287,677 | 173,554 | 172,422 | 2,788 | 114,123 |
| 08060 | 858,921 | 305,532 | 186,717 | 209,179 | 553,389 |
| 08070 | 26,419 | 6,860 | 3,299 | 6,860 | 19,559 |
| 08090 | 26,990 | 12,296 | 11,086 | 1,660 | 14,694 |
| 09010 | 33,000 | 1,062 | 1,062 | 0 | 31,938 |
| 10020 | 13,600 | 10,880 | 10,880 | 0 | 2,720 |
| 10050 | 139,681 | 120,364 | 120,364 | 0 | 19,317 |
| 10080 | 16,719 | 2,253 | 2,253 | 0 | 14,466 |
| 12010 | 32,103 | 2,122 | 2,122 | 0 | 29,981 |
| 12030 | 23,846 | 13,291 | 13,291 | 0 | 10,555 |
| 12050 | 22,052 | 21,016 | 21,016 | 0 | 1,036 |
| 13010 | 23,207 | 16,258 | 16,258 | 0 | 6,949 |
| 13020 | 405 | | | | 405 |
| 13030 | 244 | 244 | 244 | 0 | 0 |
| 13040 | 1,143 | 259 | 259 | 0 | 884 |
| 13050 | 11,472 | 2,126 | 2,126 | 0 | 9,346 |
| 13060 | 45,531 | 1,099 | 1,099 | 0 | 44,432 |
| 13070 | 116,002 | 21,994 | 21,212 | 782 | 94,008 |
| 13080 | 50,999 | 2,469 | 2,469 | 0 | 48,530 |
| 13090 | 31,000 | 2,094 | 2,094 | 0 | 28,906 |
| 16070 | 67,128 | 2,186 | 2,186 | 0 | 64,942 |
| 16080 | 54,926 | 5,155 | 4,791 | 364 | 49,771 |
| 16090 | 52,946 | | | | 52,946 |
| 17010 | 1,710,990 | 785,864 | 723,053 | 62,811 | 925,126 |
| 17020 | 1,046,005 | 298,635 | 298,635 | 0 | 747,370 |
| 17030 | 1,025,010 | 413,595 | 402,051 | 11,545 | 611,415 |
| 17040 | 1,482,998 | 576,869 | 576,869 | 0 | 906,129 |
| 17050 | 1,526,002 | 1,194,112 | 1,194,112 | 0 | 331,890 |
| 17060 | 1,461,016 | 578,679 | 551,175 | 80,172 | 882,337 |
| 17070 | 1,493,004 | 607,656 | 586,697 | 21,239 | 885,348 |
| 17080 | 599,186 | 254,277 | 240,301 | 13,976 | 344,909 |
| 17090 | 555,803 | 113,776 | 107,804 | 5,972 | 442,027 |
| 18010 | 943,999 | 738,560 | 738,560 | 142,408 | 205,439 |
| 18020 | 791,003 | 305,422 | 305,422 | 0 | 485,581 |
| 18030 | 583,994 | 147,091 | 125,942 | 23,948 | 436,903 |
| 18040 | 714,001 | 385,669 | 385,669 | 0 | 328,332 |
| 18050 | 1,208,995 | 396,205 | 371,516 | 24,689 | 812,790 |
| 18060 | 443,044 | 112,696 | 112,696 | 0 | 330,348 |
| 18070 | 797,000 | 447,838 | 439,723 | 8,116 | 349,162 |
| 18080 | 74,274 | 21,105 | 21,105 | 0 | 53,169 |
| 18090 | 343,679 | 17,763 | 17,763 | 0 | 325,916 |
| 19010 | 1,805,002 | 298,391 | 298,391 | 0 | 1,506,611 |
| 19020 | 1,675,995 | 222,223 | 201,472 | 20,752 | 1,453,772 |
| 19030 | 1,439,993 | 452,420 | 452,100 | 320 | 987,573 |
| 19040 | 1,734,002 | 234,033 | 219,639 | 14,394 | 1,499,969 |
| 19050 | 1,676,001 | 86,720 | 62,098 | 24,622 | 1,589,281 |
| 19060 | 1,238,998 | 231,582 | 217,701 | 13,881 | 1,007,416 |
| 19070 | 817,029 | 103,263 | 103,263 | 0 | 713,766 |
| 19080 | 613,195 | 93,235 | 93,235 | 0 | 519,960 |
| 19090 | 799,771 | 231,685 | 231,685 | 0 | 568,086 |
| 20010 | 520,286 | 205,947 | 52,107 | 175,889 | 314,339 |
| 20020 | 329,087 | 91,171 | 91,171 | 0 | 237,916 |
| 20030 | 922,629 | 567,295 | 52,476 | 514,819 | 355,334 |
| 20040 | 356,067 | 34,488 | 34,488 | 0 | 321,579 |
| 20050 | 100,346 | | | | 100,346 |
| 20060 | 286,587 | 41,491 | 10,280 | 31,211 | 245,096 |
| 20070 | 408,997 | 75,816 | 75,816 | 0 | 333,181 |
| 20080 | 245,222 | 4,281 | 4,281 | 0 | 240,941 |
| 20090 | 130,775 | 36,633 | 36,633 | 0 | 94,142 |
| 21010 | 256,998 | 54,926 | 32,008 | 28,284 | 202,072 |
| 21020 | 605,999 | 246,798 | 246,798 | 0 | 359,201 |
| 21030 | 242,002 | 20,838 | 20,838 | 797 | 221,164 |
| 21040 | 37,001 | 13,238 | 13,238 | 0 | 23,763 |
| 21050 | 101,001 | 43,725 | 43,725 | 7,108 | 57,276 |
| 21060 | 37,001 | 1,616 | 1,616 | 0 | 35,385 |
| 22010 | 1,816 | | | | 1,816 |
| 22030 | 81,802 | 3,550 | 3,308 | 242 | 78,252 |
| 22040 | 121,344 | | | | 121,344 |
| 22050 | 59,904 | 5,263 | 2,991 | 2,877 | 54,641 |
| 22060 | 13,984 | | | | 13,984 |
| 22070 | 1,151 | | | | 1,151 |
| 23010 | 321 | | | | 321 |
| 23020 | 25,412 | | | | 25,412 |
| 23030 | 267 | 10,414 | 10,414 | 6,521 | -10,147 |
| 24010 | 18,682 | 2,877 | 2,877 | 0 | 15,805 |
| 24020 | 109,943 | 30,999 | 30,999 | 0 | 78,944 |
| 24030 | 141,353 | 35,081 | 35,081 | 0 | 106,272 |
| 24080 | 71,884 | 2,197 | 2,197 | 0 | 69,687 |
| 24090 | 168,138 | 79,227 | 71,886 | 7,341 | 88,911 1 |
| 25010 | 21,999 | 1,925 | 1,925 | 0 | 20,074 |
| 26010 | 39,610 | | | | 39,610 |
| 26020 | 49,386 | | | | 49,386 |
| 26030 | 36,792 | | | | 36,792 |
| 26040 | 73,651 | 2,321 | 0 | 2,321 | 71,330 |
| 26050 | 227,563 | 724 | 724 | 0 | 226,839 |
| 26060 | 440,003 | 35,321 | 8,620 | 26,701 | 404,682 |
| 26070 | 342,997 | 192,417 | 189,293 | 3,124 | 150,580 |
| 26080 | 673,003 | 136,123 | 136,123 | 0 | 536,880 |
| 26090 | 317,001 | 12,838 | 12,838 | 0 | 304,163 |
| 27010 | 134,703 | 1,942 | 0 | 1,942 | 132,761 |
| 27020 | 79,289 | | | | 79,289 |
| 27030 | 9,331 | | | | 9,331 |
| 27040 | 1,276,004 | 54,269 | 50,523 | 3,746 | 1,221,735 |
| 27050 | 1,387,005 | 69,225 | 69,225 | 0 | 1,317,780 |
| 27060 | 211,681 | 39,881 | 39,881 | 0 | 171,800 |
| 27070 | 1,373,005 | 66,975 | 66,975 | 0 | 1,306,030 |
| 27080 | 1,449,004 | 33,880 | 30,328 | 3,552 | 1,415,124 |
| 27090 | 979,997 | 208,649 | 201,523 | 7,127 | 771,348 |
| 28010 | 3,286 | 2,091 | 2,091 | 1,494 | 1,195 |
| 28020 | 4,722 | | | | 4,722 |
| 28030 | 97,282 | 6,049 | 0 | 6,049 | 91,233 |
| 28040 | 118,945 | | | | 118,945 |
| 28050 | 3,454 | 259 | 259 | 0 | 3,195 |
| 28060 | 5,783 | 597 | 597 | 0 | 5,186 |
| 28070 | 86,611 | | | | 86,611 |
| 28080 | 39,820 | 39,820 | 39,820 | 0 | 0 |
| 28090 | 40,096 | | | | 40,096 |
| 29010 | 672,003 | 172,209 | 172,209 | 0 | 499,794 |
| 29020 | 284,000 | 164,480 | 148,445 | 16,035 | 119,520 |
| 29030 | 445,995 | 165,808 | 165,808 | 0 | 280,187 |
| 29040 | 225,434 | 95,208 | 88,755 | 27,963 | 130,226 |
| 29050 | 394,580 | 239,525 | 222,532 | 41,192 | 155,055 |
| 29060 | 230,238 | 103,647 | 103,647 | 0 | 126,591 |
| 29070 | 32,087 | 5,039 | 5,039 | 0 | 27,048 |
| 29080 | 8,898 | | | | 8,898 |
| 29090 | 406,763 | 32,955 | 32,955 | 0 | 373,808 |
| 30030 | 23,263 | | | | 23,263 |
| 30080 | 13,709 | | | | 13,709 |
| 30090 | 23,028 | | | | 23,028 |
| 31010 | 590,588 | 107,660 | 102,570 | 5,090 | 482,928 |
| 31020 | 483,283 | 106,178 | 70,248 | 35,930 | 377,105 |
| 31030 | 1,509,002 | 270,563 | 251,209 | 21,560 | 1,238,439 |
| 31050 | 1,107,003 | 753,000 | 721,393 | 31,608 | 354,003 |
| 31060 | 1,943,012 | 633,976 | 628,575 | 5,401 | 1,309,036 |
| 31070 | 632,129 | 294,402 | 240,537 | 53,865 | 337,727 |
| 31080 | 852,999 | 496,185 | 496,185 | 509 | 356,814 |
| 31090 | 1,082,001 | 345,958 | 345,958 | 0 | 736,043 |
| 32010 | 3,000 | | | | 3,000 |
| 33010 | 15,000 | | | | 15,000 |
| 34020 | 36,403 | 1,126 | 1,126 | 0 | 35,277 |
| 34050 | 21,313 | 9,264 | 8,260 | 1,004 | 12,049 |
| 34080 | 22,284 | | | | 22,284 |
| 35030 | 133,606 | 112,550 | 64,228 | 48,322 | 21,056 |
| 35090 | 16,394 | 4,592 | 0 | 4,592 | 11,802 |
| 36020 | 108,144 | 1,199 | 1,199 | 0 | 106,945 |
| 36030 | 55,989 | 11,211 | 8,963 | 2,248 | 44,778 |
| 36040 | 328,494 | 75,713 | 75,713 | 0 | 252,781 |
| 36050 | 256,998 | 68,960 | 68,960 | 0 | 188,038 |
| 36060 | 98,870 | 29,128 | 29,128 | 0 | 69,742 |
| 36070 | 146,507 | 51,823 | 51,823 | 0 | 94,684 |
| 36080 | 33,660 | 10,348 | 10,348 | 0 | 23,312 |
| 36090 | 57,142 | 34,577 | 34,577 | 0 | 22,565 |
| 36091 | 14,199 | 1,493 | 1,493 | 0 | 12,706 |
| 37010 | 25,568 | 2,213 | 2,213 | 0 | 23,355 |
| 37020 | 32,430 | 27,038 | 27,038 | 0 | 5,392 |
| 37040 | 37,000 | | | | 37,000 |
| 37050 | 96,564 | 5,113 | 5,113 | 0 | 91,451 |
| 37060 | 27,436 | 2,763 | 2,763 | 0 | 24,673 |
| 37070 | 154,001 | 100,040 | 100,040 | 948 | 53,961 |
| 37080 | 176,001 | 96,540 | 96,540 | 0 | 79,461 |
| 37090 | 161,000 | 40,415 | 40,415 | 0 | 120,585 |
| 38010 | 2,240 | | | | 2,240 |
| 38020 | 22,893 | | | | 22,893 |
| 38030 | 71,865 | | | | 71,865 |
| 38040 | 5,208 | | | | 5,208 |
| 38050 | 83,792 | | | | 83,792 |
| 38060 | 145,000 | 2,017 | 0 | 2,017 | 142,983 |
| 38070 | 44,260 | | | | 44,260 |
| 38080 | 76,740 | | | | 76,740 |
| 38090 | 348,006 | 2,481 | 2,481 | 0 | 345,525 |
| 39010 | 697,004 | 69,185 | 69,065 | 120 | 627,819 |
| 39020 | 478,999 | 68,168 | 53,278 | 14,890 | 410,831 |
| 39030 | 208,683 | 52,027 | 52,027 | 0 | 156,656 |
| 39040 | 697,000 | 132,273 | 132,273 | 0 | 564,727 |
| 39050 | 660,000 | 112,302 | 102,950 | 9,353 | 547,698 |
| 39060 | 151,314 | 68,099 | 68,099 | 0 | 83,215 |
| 39070 | 266,340 | 102,430 | 100,620 | 1,810 | 163,910 |
| 39080 | 108,257 | 22,596 | 22,596 | 0 | 85,661 |
| 39090 | 132,402 | 23,481 | 23,481 | 0 | 108,921 |
| 40010 | 153,277 | 30,046 | 8,456 | 25,188 | 123,231 |
| 40020 | 5,437 | | | | 5,437 |
| 40030 | 14,992 | | | | 14,992 |
| 40040 | 301 | | | | 301 |
| 40050 | 18,160 | | | | 18,160 |
| 40060 | 2,988 | | | | 2,988 |
| 40070 | 19,344 | | | | 19,344 |
| 40080 | 47,264 | | | | 47,264 |
| 40090 | 8,237 | | | | 8,237 |
| 41010 | 5,997 | 2,679 | 2,679 | 0 | 3,318 |
| 41080 | 54,003 | 39,310 | 39,310 | 0 | 14,693 |
| 42010 | 145,235 | 19,454 | 18,410 | 2,800 | 125,781 |
| 42020 | 66,765 | 23,979 | 22,574 | 1,405 | 42,786 |
| 42030 | 52,215 | 25,696 | 25,696 | 0 | 26,519 |
| 42040 | 108,257 | 26,123 | 26,123 | 0 | 82,134 |
| 42050 | 299,996 | 107,700 | 107,700 | 0 | 192,296 |
| 42060 | 77,787 | 35,874 | 35,874 | 0 | 41,913 |
| 42070 | 57,742 | 14,613 | 14,613 | 0 | 43,129 |
| 42080 | 287,001 | 85,994 | 85,994 | 0 | 201,007 |
| 42090 | 405,000 | 251,399 | 248,596 | 2,803 | 153,601 |
| 44010 | 2,000 | | | | 2,000 |
| 45010 | 10,229 | | | | 10,229 |
| 45030 | 80,610 | 62,042 | 62,042 | 0 | 18,568 |
| 45040 | 8,617 | | | | 8,617 |
| 45050 | 80,322 | 10,020 | 10,020 | 0 | 70,302 |
| 45080 | 100,221 | 4,880 | 4,880 | 0 | 95,341 |
| 46010 | 62,090 | 42,785 | 42,785 | 0 | 19,305 |
| 46020 | 589,000 | | | | 589,000 |
| 46030 | 554,998 | 3,496 | 0 | 3,496 | 551,502 |
| 46040 | 5,785 | | | | 5,785 |
| 46050 | 561,995 | | | | 561,995 |
| 46060 | 877,994 | 86,155 | 86,155 | 0 | 791,839 |
| 46070 | 43,786 | | | | 43,786 |
| 46080 | 188,339 | | | | 188,339 |
| 46090 | 915,998 | 37,148 | 37,148 | 0 | 878,850 |
| 47010 | 209,194 | 24,142 | 20,135 | 4,007 | 185,052 |
| 47020 | 170,806 | 7,012 | 7,012 | 0 | 163,794 |
| 47030 | 74,000 | 22,152 | 22,152 | 0 | 51,848 |
| 47040 | 72,000 | 20,433 | 15,801 | 4,631 | 51,567 |
| 47050 | 60,000 | 7,399 | 7,399 | 0 | 52,601 |
| 47060 | 44,002 | 18,133 | 15,891 | 2,242 | 25,869 |
| 48011 | 469,812 | 207,087 | 17,895 | 194,491 | 262,725 |
| 48012 | 126,373 | 57,116 | 0 | 57,116 | 69,257 |
| 48021 | 1,957 | | | | 1,957 |
| 48040 | 405,026 | 160,434 | 160,434 | 0 | 244,592 |
| 48051 | 20,945 | 14,301 | 14,301 | 0 | 6,644 |
| 48052 | 148,432 | 148,432 | 148,432 | 0 | 0 |
| 48070 | 11,431 | 7,647 | 7,647 | 0 | 3,784 |
| 48081 | 223,875 | 198,273 | 197,776 | 497 | 25,602 |
| 48082 | 3,731 | 281 | 281 | 0 | 3,450 |
| 48090 | 136,539 | 115,662 | 115,662 | 0 | 20,877 |
| 48096 | 18,226 | 6,182 | 6,182 | 0 | 12,044 |
| 48097 | 33,670 | 3,288 | 0 | 3,288 | 30,382 |
| 49010 | 22,056 | 8,347 | 6,997 | 1,350 | 13,709 |
| 49050 | 31,284 | 9,148 | 9,148 | 0 | 22,136 |
| 49060 | 6,661 | | | | 6,661 |
| 50010 | 90,002 | 6,739 | 5,638 | 1,201 | 83,263 |
| 51020 | 123,132 | 41,110 | 41,110 | 0 | 82,022 |
| 51040 | 22,210 | 11,677 | 11,677 | 0 | 10,533 |
| 51050 | 31,930 | 18,875 | 18,875 | 0 | 13,055 |
| 51060 | 158,936 | 30,416 | 22,726 | 7,690 | 128,520 |
| 51070 | 24,789 | 8,953 | 8,953 | 0 | 15,836 |
| 51080 | 13,790 | 4,325 | 4,325 | 0 | 9,465 |
| 51090 | 55,213 | 5,992 | 5,992 | 0 | 49,221 |
| 53010 | 50,293 | | | | 50,293 |
| 53020 | 8,801 | | | | 8,801 |
| 53050 | 35,326 | 416 | 0 | 416 | 34,910 |
| 53090 | 20,581 | | | | 20,581 |
| 54020 | 8,181 | 862 | 862 | 0 | 7,319 |
| 54040 | 21,439 | 17,962 | 17,962 | 0 | 3,477 |
| 54060 | 25,379 | 12,507 | 12,507 | 3,250 | 12,872 |
| 55010 | 313,822 | 39,424 | 38,795 | 629 | 274,398 |
| 55020 | 216,400 | | | | 216,400 |
| 55030 | 129,776 | | | | 129,776 |
| 55040 | 534,002 | 131,838 | 115,623 | 16,214 | 402,164 |
| 55050 | 271,999 | 28,785 | 28,785 | 0 | 243,214 |
| 55060 | 513,001 | 65,281 | 65,281 | 0 | 447,720 |
| 55070 | 496,001 | 159,547 | 149,901 | 9,646 | 336,454 |
| 55080 | 700,001 | 224,248 | 224,248 | 0 | 475,753 |
| 55090 | 225,002 | 23,648 | 23,648 | 0 | 201,354 |
| 56010 | 36,158 | 5,348 | 5,348 | 0 | 30,810 |
| 56050 | 48,843 | 3,679 | 3,679 | 1,982 | 45,164 |
| Total | 76,009,055 | 21,168,694 | 19,184,522 | 2,387,397 | 54,840,361 |

| | | | | | |
|---|---|---|---|---|---|
| Note: Source: 2001 Doane Agro-Trak Study -- Doane Marketing Research, Inc., St. Louis, Missouri. | | | | | |

Data is also available to indicate those crop reporting districts in which no insecticide use on corn was reported anywhere in the CRD. For the year 2001, for example, Table 2 shows that CRD's having a total of over 3 million acres reported no insecticide use on corn.

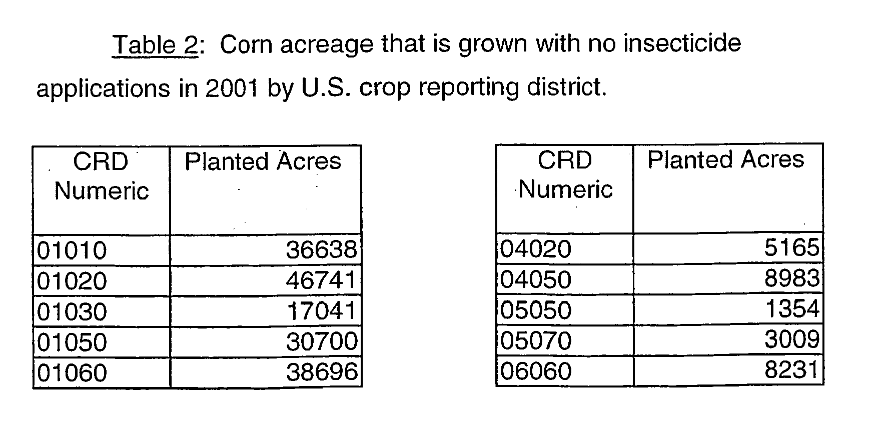

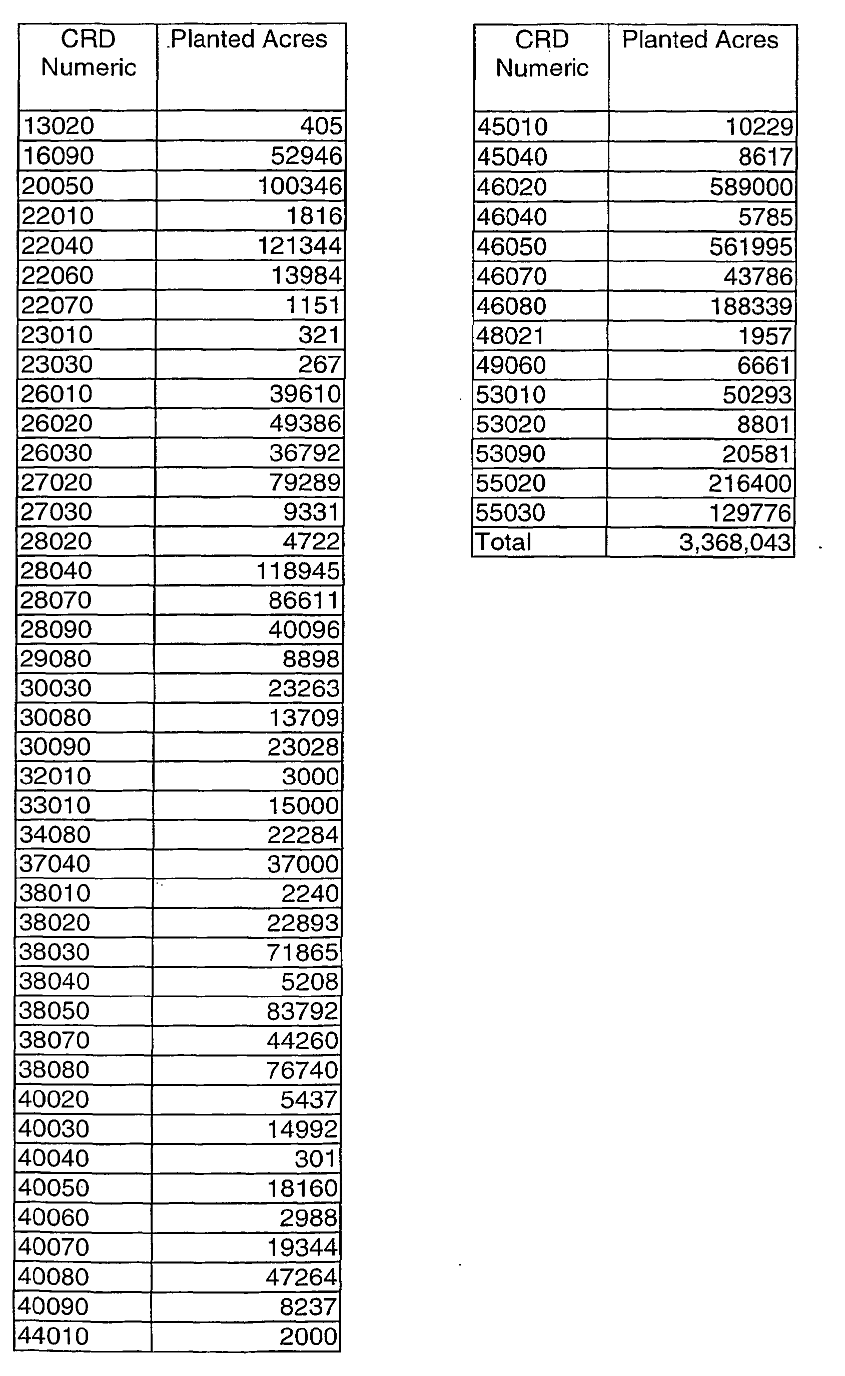

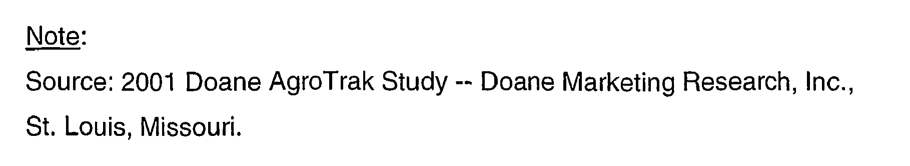

In some CRD's, very little insecticide is used on corn. This is believed to indicate that while insecticide may be used in one, or a few, locations within a CRD, other locations within a CRD have no insecticide use at all. For example, it may be that while insecticides are used on corn in one county within a CRD, other counties within the same CRD would have no insecticide use on corn. Accordingly, it is believed that the level of insect infestation in those counties is below that where insecticide use is indicated.

Data on insecticide use for crops other than corn is also available. Table 3, for example, shows insecticide use on cotton acreage in the U.S. in 2001 by CRD. It can be seen that over one-half of the 16.1 million acres planted to cotton received no insecticide treatment. These locations, therefore, would be presumed to have levels of insect infestation that were below that at which insecticide treatment would be indicated.

**Table 3: Cotton acreage that is treated and untreated with insecticide in the U.S. in 2001 by crop reporting district.**

| CRD Numeric | Planted | Treated Base Acres | Soil Treated Base Acres | Foliar Treated Base Acres | Non Treated Base Acres |
|---|---|---|---|---|---|
| 01010 | 224,001 | 134,050 | 118,985 | 25,580 | 89,951 |
| 01020 | 38,403 | 31,735 | 7,987 | 23,748 | 6,668 |
| 01030 | 31,597 | | | | 31,597 |
| 01040 | 62,001 | 42,975 | 10,565 | 37,231 | 19,026 |
| 01050 | 104,006 | 84,789 | 73,099 | 56,933 | 19,217 |
| 01060 | 149,998 | 62,011 | 26,082 | 42,084 | 87,987 |
| 04050 | 194,001 | 131,763 | 115,677 | 34,987 | 62,238 |
| 04070 | 42,675 | 19,287 | 7,826 | 11,461 | 23,388 |
| 04090 | 49,326 | 20,057 | 20,057 | 1,690 | 29,269 |
| 05030 | 559,973 | 459,015 | 359,296 | 254,736 | 100,958 |
| 05050 | 16,277 | | | | 16,277 |
| 05060 | 274,725 | 233,754 | 215,278 | 178,615 | 40,971 |
| 05070 | 16,747 | 16,301 | 16,301 | 7,377 | 446 |
| 05090 | 302,249 | 257,163 | 222,557 | 148,460 | 45,086 |
| 06040 | 15,187 | 9,051 | 9,051 | 0 | 6,136 |
| 06050 | 9,621 | 9,621 | 6,591 | 9,621 | 0 |
| 06051 | 781,186 | 686,973 | 583,146 | 338,150 | 94,213 |
| 06080 | 19,002 | 14,457 | 14,457 | 11,467 | 4,545 |
| 12010 | 119,913 | 57,852 | 36,184 | 34,611 | 62,061 |
| 12030 | 5,088 | 5,088 | 5,088 | 5,088 | 0 |
| 13030 | 2,692 | 2,692 | 2,692 | 2,692 | 0 |
| 13040 | 11,428 | 2,244 | 2,244 | 0 | 9,184 |
| 13050 | 150,878 | 63,620 | 55,109 | 27,358 | 87,258 |
| 13060 | 197,001 | 103,669 | 82,338 | 35,975 | 93,332 |
| 13070 | 448,002 | 223,152 | 166,067 | 121,489 | 224,850 |
| 13080 | 576,007 | 326,073 | 251,726 | 174,616 | 249,934 |
| 13090 | 114,001 | 83,146 | 64,927 | 66,139 | 30,855 |
| 20060 | 32,193 | 22,771 | 19,041 | 7,459 | 9,422 |
| 20090 | 11,807 | | | | 11,807 |
| 22010 | 72,173 | 70,476 | 69,028 | 59,652 | 1,697 |
| 22020 | 9,827 | 8,828 | 8,828 | 2,876 | 999 |
| 22030 | 610,005 | 495,803 | 348,946 | 276,107 | 114,202 |
| 22050 | 217,772 | 207,064 | 203,484 | 28,891 | 10,708 |
| 22060 | 227 | 53,474 | | | -53,247 |
| 28010 | 434,001 | | 400,361 | 66,967 | 434,001 |
| 28020 | 138,726 | | 88,401 | 31,703 | 138,726 |
| 28030 | 46,270 | | 24,404 | 18,768 | 46,270 |
| 28040 | 745,992 | | 681,705 | 280,740 | 745,992 |
| 28050 | 201,999 | | 126,604 | 110,239 | 201,999 |
| 28060 | 97,411 | | 41,721 | 46,020 | 97,411 |
| 28070 | 29,569 | 20,116 | 20,116 | 3,545 | 9,453 |
| 28090 | 6,022 | 5,751 | 5,751 | 0 | 271 |
| 29040 | 7,074 | 7,074 | 0 | 7,074 | 0 |
| 29070 | 6,082 | 1,839 | 0 | 1,839 | 4,243 |
| 29090 | 386,848 | 212,146 | 120,555 | 99,647 | 174,702 |
| 35030 | 22,987 | 1,379 | 276 | 1,379 | 21,608 |
| 35070 | 15,013 | 1,021 | 1,021 | 1,021 | 13,992 |
| 35090 | 44,002 | 18,691 | 17,706 | 1,773 | 25,311 |
| 37050 | 9,129 | 9,129 | 3,485 | 8,839 | 0 |
| 37060 | 39,869 | 19,251 | 0 | 19,251 | 20,618 |
| 37070 | 449,006 | 342,415 | 310,303 | 150,380 | 106,591 |
| 37080 | 316,004 | 172,135 | 165,404 | 98,612 | 143,869 |
| 37090 | 246,001 | 128,661 | 102,906 | 87,010 | 117,340 |
| 40010 | 984 | | | | 984 |
| 40020 | 52,039 | 1,326 | 1,326 | 0 | 50,713 |
| 40030 | 192,993 | 95,247 | 93,644 | 10,215 | 97,746 |
| 40040 | 2,531 | 1,205 | 1,205 | 0 | 1,326 |
| 40060 | 1,446 | | | | 1,446 |
| 45010 | 1,262 | | | | 1,262 |
| 45020 | 769 | 769 | 0 | 769 | 0 |
| 45030 | 142,003 | 100,010 | 94,434 | 30,444 | 41,993 |
| 45040 | 13,463 | 9,076 | 9,076 | 5,169 | 4,387 |
| 45050 | 100,998 | 73,675 | 69,726 | 18,080 | 27,323 |
| 45080 | 41,506 | 37,499 | 37,499 | 22,273 | 4,007 |
| 47010 | 207,001 | 83,399 | 77,836 | 24,830 | 123,602 |
| 47020 | 373,391 | 284,890 | 248,742 | 117,732 | 88,501 |
| 47030 | 13,284 | | | | 13,284 |
| 47040 | 10,325 | | | | 10,325 |
| 47060 | 6,003 | 6,003 | 6,003 | 6,003 | 0 |
| 48011 | 889,009 | 180,233 | 83,983 | 111,518 | 708,776 |
| 48012 | 2,872,020 | 434,271 | 154,605 | 326,335 | 2,437,749 |
| 48021 | 398,000 | 37,833 | 18,984 | 18,848 | 360,167 |
| 48022 | 678,000 | 34,887 | 34,887 | 0 | 643,113 |
| 48030 | 3,228 | | | | 3,228 |
| 48040 | 175,713 | 160,882 | 159,683 | 68,330 | 14,831 |
| 48052 | 14,058 | 14,058 | 14,058 | 8,461 | 0 |
| 48060 | 31,084 | | | | 31,084 |
| 48070 | 266,914 | 18,415 | 18,415 | 11,112 | 248,499 |
| 48081 | 42,452 | 42,452 | 26,957 | 40,651 | 0 |
| 48082 | 297,998 | 290,816 | 241,938 | 48,878 | 7,182 |
| 48090 | 293,549 | 270,302 | 257,790 | 90,542 | 23,247 |
| 48096 | 21,951 | 21,951 | 21,951 | 16,978 | 0 |
| 48097 | 233,052 | 186,088 | 186,088 | 21,027 | 46,964 |
| 51060 | 11,167 | 6,890 | 6,890 | 2,284 | 4,277 |
| 51090 | 93,835 | 62,536 | 54,292 | 31,510 | 31,299 |
| Total | 16,194,022 | 7,167,490 | 7,026,416 | 4,042,561 | 9,026,532 |

| | | | | | |
|---|---|---|---|---|---|
| Note: Source: 2001 Doane AgroTrak Study -- Doane Marketing Research, Inc., St. Louis, Missouri. | | | | | |

Another method of determining whether the level of infestation by the insect that is a pest for the agronomic plant indicates treatment with an insecticide involves comparing a level of infestation by the insect at the location with a level of infestation by the insect at which treatment with an insecticide would be indicated. By way of example, this can be accomplished by determining the level of infestation by the insect at the location, and determining a level of infestation by the insect at which treatment with an insecticide would be indicated. When these two levels of infestation have been determined, they are compared to see which is higher. In other words, to determine whether or not to treat the seed with an insecticide in order to reduce or avoid expected insect damage. Then, if the level of infestation of the location by the insect is lower than the level of infestation at which treatment is indicated, to treat the seed with a neonicotinoid insecticide.

In the present method, the step of "determining the level of infestation by the insect at the location" is meant to include the acquisition of knowledge about the level of infestation in any manner and from any source, including, without limitation, direct tests, written or oral reports, discussions with agricultural extension personnel, county agents, radio reports, agricultural bulletins, anecdotal data derived from discussions with neighboring farmers or other persons knowledgeable about the level of insect pest infestation of the location, such as agricultural equipment and materials suppliers, producers, wholesalers, retailers, and consultants, as well as from historical data, recommendations by seed or pesticide manufacturers and suppliers, and the like.

In preferred embodiments, the level of insect pest infestation at the location is determined by measurement of the level of infestation of insects against which neonicotinoid insecticides have insecticidal activity, and which are pests for the agronomic plants that one expects to grow, where the measurement is carried out at or near the location one expects to grow the plants. Examples of how such measurements can be made include the visual inspection of plants, setting out non-specific lures and traps, and by setting out genus or species-specific lures and traps. Such testing and measurement techniques are well known in the art of insect pest management.

The level of infestation by the insect at which treatment with an insecticide would be indicated can be determined on any basis that is of interest to the practitioner. By way of example, one common basis is an economic determination -- *e.g.* cost vs. value. One can compare the cost of applying a neonicotinoid insecticide with the expected value of the added yield due to reduced insect damage. If the cost is less than the expected added value, then treatment with an insecticide would be indicated. On the other hand, if the cost is more than the expected value of the yield added due to reduced insect damage, then treatment with an insecticide would not be indicated. Of course, if the level of insect infestation is zero, or close to zero, then treatment with an insecticide would not be indicated in any case.

An example of another basis for this determination is an objective standard, such as the expected level of corn rootworm (CRW) damage. A test for corn rootworm damage can be carried out by the lowa Root Rating Method, which is described below and is a test that assesses damage on a 1 - 6 scale (from least damage to worst damage). If historical data show CRW damage level of less than about 3, then treatment with an insecticide active against CRW would not be indicated, whereas CRW damage of above about 3 would indicate the need for insecticide treatment. In preferred embodiments, a CRW damage level of below 2.6 would indicate that no insecticide for corn rootworm protection was needed, more preferred would be a CRW damage level of below 2.0.

After the level of infestation by the insect at the location and a level of infestation by the insect at which treatment with an insecticide would be indicated are determined, the two are compared. In one embodiment of the present invention, if the level of infestation at the location is below the level at which treatment with an insecticide would be indicated, the seed is treated with a neonicotinoid compound.

In another embodiment, if the level of infestation at the location is below the level at which treatment with an insecticide would be indicated, the method involves planting in the location a seed comprising a foreign polynucleotide sequence encoding for the production of an insecticidal protein, or a foreign polynucleotide sequence which provides herbicide resistance, or both, that has been treated with a neonicotinoid compound. The act of planting includes planting a seed directly in the ground as well as the transplantation of a plant that is grown from a seed. Planting can be by hand, by machine, commercial, or non-commercial, without limitation.

The "neonicotinoid compound" of the present invention is any neonicotinoid compound that provides the yield and/or vigor-enhancing properties that are the advantages of the present invention when the compound is used as a seed treatment according to the method described herein. In preferred embodiments, the neonicotinoid compound is one having insecticidal properties.

Neonicotinoid compounds that are useful in the present invention include those listed in *The Pesticide Manual, 12 ed.,* namely, acetamiprid, imidacloprid, thiamethoxam, clothianidin (TI-435), dinotefuran and nitenpyram. Useful neonicotinoid compounds can include nicotinoid insecticides of the type of nitroguanidine insecticides, nitromethylene insecticides, and pyridylmethylamine insecticides, as listed in the *Compendium of insecticide common names,* at http://www.hclrss.demon.co.uk/class_insecticides.html (02/19/2002). Useful neonicotinoid compounds can include the nitroguanidine compounds described at http://www.nigu.de/pdf/nq-chemistry21.pdf (07/08/02). Neonicotinoid compounds such as flonicamid, nithiazine and thiacloprid are also included.

When the neonicotinoid compound is a nicotinoid insecticide of the nitroguanidino type, compounds that are useful in the present invention include a compound having the formula: 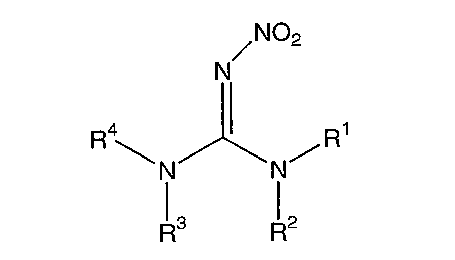 where:
R¹ is hydrogen, or C₁- C₄ alkyl;
R² is hydrogen, C₁ - C₄ alkyl, C₁ - C₄ alkenyl, C₁ - C₄ alkynyl, hydroxyl, amino, aryl, thio, alkylaryl, arylalkyl, or C₄ - C₆ heterocyclic;
R³ is hydrogen, C₁ - C₄ alkyl, C₁ - C₄ alkenyl, C₁ - C₄ alkynyl, hydroxyl, amino, aryl, thio, alkylaryl, arylalkyl, or 4 - 6-member heterocyclic; and R² and R³ can join to form a 4 - 6 member heterocyclic, that may optionally be substituted or unsubstituted; and
R⁴ is hydrogen, C₁ - C₄ alkyl, C₁ - C₄ alkenyl, C₁ - C₄ alkynyl, hydroxyl, amino, aryl, thio, alkylaryl, arylalkyl, C₄ - C₆ heterocyclic, halothiazoylalkyl, or furylalkyl.

When the neonicotinoid compound is a nicotinoid insecticide of the nitroguanidino type, compounds that are preferred for use in the present invention include a compound having the formula: 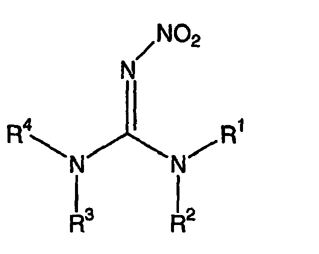 where:
R¹ is hydrogen, or methyl;
R² is hydrogen, or methyl;
R³ is hydrogen, or methyl, or of a form that can join with R² to form an oxadiazine ring or a 2,3-diazol ring; and
R⁴, if present, is chlorothiazoymethyl, or furylmethyl.

It is believed that the present method of increasing yield and/or vigor can be used with the seeds of non-transgenic plants, or with the seeds of plants that have at least one transgenic event. The foreign polynucleotide sequence, along with all other genes necessary for the expression of the active protein at useful levels, can be referred to herein as a "transgenic event". A transgenic event in a seed, or plant, therefore, includes the ability to express a protein. When it is said that a "transgenic event has activity against a pest", it is to be understood that it is the protein that is encoded by the gene that actually has such activity when the protein is expressed and brought into contact with the pest.

Examples of transgenic events that are useful in the present invention, seeds and plants that comprise such events, as well as examples of methods for their use, can be found in U.S. Patent Nos. 6,329,504, 6,326,351, 6,326,169, 6,316,407, 6,313,378; 6,288,312; 6,284,949; 6,281,016; 6,255,560, 6,248,536, 6,242,241; 6,221,649; 6,218,145; 6,215,048; 6,211,430; 6,197,747; 6,177,615; 6,174,724, 6,156,573; 6,153,814; 6,140,075; 6,121,436, 6,114,610; 6,110,464; 6,093,695; 6,063,756; 6,063,597; 6,060,594, 6,023,013; 6,018,100; 5,962,264; 5,959,091; 5,942,658, 5,880,275; 5,877,012, 5,869,720; 5,859,347; 5,763,241; 5,759,538; 5,679,343; 5,616,319; 5,495,071; 5,424,412; 5,378,619; 5,349,124; 5,250,515; and 5,229,112, among others, and in WO 01/49834, WO 98/13498, WO 00/66742, and WO 99/31248.

WO 99/31248 and U.S. Patent Nos. 6,326,351, 6,281,016, 6,063,597, 6,060,594 and 6,023,013 describe methods for genetically engineering *B. thuringiensis* δ-endotoxin genes so that modified δ-endotoxins can be expressed. The modified δ-endotoxins differ from the wild-type proteins by having specific amino acid substitutions, additions or deletions as compared with the proteins produced by the wild-type organism. Such modified δ-endotoxins are identified herein by the use of an asterisk (*), or by reference to a specific protein by its identifying number.

Preferred types of genetically modified Cry* insect toxins are described in U.S. Patent No. 6,326,169, and include the proteins encoded by polynucleotide sequences that are contained in the *B. thuringiensis* strains deposited as NRRL B-21579, NRRL B-21580, NRRL B-21581, NRRL B-21635, and NRRL B-21636.

Preferred types of genetically modified Cry* insect toxins are described in U.S. Patent No. 6,281,016, and include those produced by *B thuringiensis* strains EG 11060, EG 11062, EG 11063, EG 11065, EG 11067, EG11071, EG11073, EG11074, EG11087, EG11088, EG11090, EG11091, EG 11092, EG 11735, EG 11751 and EG 11768.

Preferred types of genetically modified Cry* insect toxins are described in U.S. Patent No. 6,023,013, and include the proteins encoded by polynucleotide sequences that are contained in the *B. thuringiensis* strains deposited as NRRL B-21744, NRRL B-21745, NRRL B-21746, NRRL B-21747, NRRL B-21748, NRRL B-21749, NRRL B-21750, NRRL B-21751, NRRL B-21752, NRRL B-21753,NRRL B-21754, NRRL B-21755, NRRL B-21756, NRRL B-21757, NRRL B-21758, NRRL B-21759, NRRL B-21760, NRRL B-21761, NRRL B-21762, NRRL B-21763, NRRL B-21764, NRRL B-21765, NRRL B-21766, NRRL B-21767, NRRL B-21768, NRRL B-21769, NRRL B-21770, NRRL B-21771, NRRL B-21772, NRRL B-21773, NRRL B-21774, NRRL B-21775, NRRL B-21776, NRRL B-21777, NRRL B-21778, and NRRL B-21779.

Preferred types of genetically modified Cry* insect toxins are described in U.S. Patent No. 6,063,597, and include , without limitation: Cry3Bb.11230, Cry3Bb.11231, Cry3Bb.11232, Cry3Bb.11233, Cry3Bb.11234, Cry3Bb.11235, Cry3Bb.11236, Cry3Bb.11237, Cry3Bb.11238, Cry3Bb.11239, Cry3Bb.11241, Cry3Bb.11242, and Cry3Bb.11098.

Some of the modified δ-endotoxins that were described in WO 99/31248 and in U.S. Patent No. 6,063,597 were found to have enhanced activity against coleopteran insects, and in particular against *Diabrotica spp.,* including corn rootworm. As used herein, the terms "enhanced activity" refer to the increased insecticidal activity of a modified toxin as compared with the activity of the same toxin without the amino acid modifications when both are tested under the same conditions. In particular, it was found that Cry3* δ-endotoxins had enhanced activity against corn rootworm, and are therefore preferred for use in the present invention when corn seed is being treated. More preferred are Cry3B* δ-endotoxins, and even more preferred are Cry3Bb* δ-endotoxins. Even more preferred transgenic events are those that comprise the ability to express the modified δ-endotoxins that are listed below in Table 4. Also shown in the table are strains of transgenic *B. thuringiensis* that include genes for expression of the respective novel endotoxins, and the date and accession number of their deposit with the Agricultural Research Service Culture Collection (NRRL) at 1815 N. University Street, Peoria, IL 61604.

**Table 4: B. thuringiensis strains expressing modified toxic proteins.**

| STRAIN | DEPOSIT DATE | PROTEIN | ACCESSION NUMBER (NRRL NUMBER) |
|---|---|---|---|
| EG11230 | 5/27/97 | Cry3Bb.11230 | B-21768 |
| EG11231 | 5/27/97 | Cry3Bb.11231 | B-21769 |
| EG 11232 | 5/27/97 | Cry3Bb.11232 | B-21770 |
| EG 11233 | 5/27/97 | Cry3Bb.11233 | B-21771 |
| EG11234 | 5/27/97 | Cry3Bb.11234 | B-21772 |
| EG11235 | 5/27/97 | Cry3Bb.11235 | B-21773 |
| EG11236 | 5/27/97 | Cry3Bb.11236 | B-21774 |
| EG 11237 | 5/27/97 | Cry3Bb.11237 | B-21775 |
| EG 11238 | 5/27/97 | Cry3Bb.11238 | B-21776 |
| EG11239 | 5/27/97 | Cry3Bb.11239 | B-21777 |
| EG11241 | 5/27/97 | Cry3Bb.11241 | B-21778 |
| EG11242 | 5/27/97 | Cry3Bb.11242 | B-21779 |
| EG11098 | 11/28/97 | Cry3Bb.11098 | B-21903 |

The present invention also includes the treatment of seeds having more that one transgenic event. Such combinations are referred to as "stacked" transgenic events. These stacked transgenic events can be events that are directed at the same target pest, or they can be directed at different target pests. In one preferred method, a seed having the ability to express a Cry 3 protein also has the ability to express at least one other insecticidal protein that is different from a Cry 3 protein.

The present invention also includes the treatment of seeds having one or more transgenic event which encodes for the production of binary insecticidal proteins including, but not limited to, CryET33 and CryET34, CryET80 and CryET76, tIC100 and tIC101, and PS149B1.

The present invention also includes the treatment of seeds having Herculex® I transgenic events (available from Dow Agrosciences, Mycogen Seeds, and Pioneer Hi-Bred International).

In an embodiment of the present invention where the subject method includes treatment of the seed and/or the foliage of a plant with a herbicide or with a pesticide other than a neonicotinoid, it is preferred that the plant be a transgenic plant having a transgenic event that confers resistance to the particular herbicide or other pesticide that is employed.

When a herbicide such as glyphosate is included in the treatment, it is preferred that the transgenic plant or plant propagation material be one having a transgenic event that provides glyphosate resistance. Some examples of such preferred transgenic plants having transgenic events that confer glyphosate resistance are described in U.S. Patent Nos. 6,248,876, 6,225,114, 6,107,549, 5,866,775, 5,804,425, 5,776,760, 5,633,435, 5,627,061, 5,463,175, 5,312,910, 5,310,667, 5,188,642, 5,145,783, 4,971,908 and 4,940,835. When the transgenic plant is a transgenic soybean plant, such plants having the characteristics of "Roundup-Ready" transgenic soybeans (available from Monsanto Company, St. Louis, MO) are preferred.

The present invention is also useful for application to the seeds of plants which have been improved by a program of selective breeding based on quantitative trait loci (QTL) information. Further information about the use of such breeding programs can be found in U.S. Patent No. 5,476,524, and in Edwards, M. D. et al., Genetics, 116:113 - 125 (1987); Edwards, M. D. et al., Theor. Appl. Genet., 83:765 - 774 (1992); Paterson, A. H. et al., Nature, 335:721 - 726 (1988); and Lander, E. S. et al., Mapping Medelian Factors Underlying Quantitative Traits Using RFLP Linkage Maps, Genetics Society of America, pp. 185 - 199 (1989).

In one embodiment, the present method is particularly useful when used as a part of a conventional yield-enhancing breeding program for a crop. This is particularly useful when the breeding program is for a transgenic crop. As mentioned above, transgenic events are initially transferred into plant strains that are stable, vigorous and have good records as parents in hybridizing trials, but are not usually themselves high-yielding hybrids. The transgenic strains are then hybridized with other parents in conventional breeding programs, to arrive at high-yielding hybrids that also contain the desired transgenic event(s). As mentioned above, one disadvantage that is a common feature of the commercial high-yielding hybrids -- and particularly for transgenic hybrids, is that they are not as vigorous as the parent. In some cases, for example, transgenic hybrid com plants have significantly smaller root systems than their parents. This can cause higher sensitivity to root-damaging pests, as well as to lodging.

In one embodiment, the present method is applied to the seeds that are used in a breeding program. In particular, the method can be applied to a breeding program in which at least one parent is a transgenic plant. Also, the present method is useful, as explained above, as a treatment for high-yielding transgenic seeds that are the product of the breeding trial.

In a method of breeding a hybrid plant from two parent plants, the method comprises treating the seeds of one or both of the parent plants with a neonicotinoid compound prior to planting the seeds wherein the seed of one or both of the parent plants contain a foreign polynucleotide sequence encoding for the production of an insecticidal protein, or a foreign polynucleotide sequence which provides herbicide resistance, or both, pollinating the female parent with pollen of the male parent; and gathering the seed produced by the female parent plant.

In a preferred embodiment, one or both of the parent plants contain a foreign gene that encodes for the production of a pesticidal protein. It is further preferred that the pesticidal protein comprises an insect toxin.

Plants which are suitable for the practice of the present invention include any gymnosperm and angiosperm, including dicotyledons and monocotyledons. Preferred plants are those which are agronomically important. Examples of agronomically important plants include, for example, plants that are edible in part or in whole by a human or an animal. Edible plants that may be useful in the present invention are not particularly limited and may be gymnosperms, angiosperms, including monocotyledons and dicotyledons. Such plants include cereals (wheat, barley, rye, oats, rice, sorghum, related crops, etc.), beet, pear-like fruits, stone fruits, and soft fruits (apple, pear, plum, peach, Japanese apricot, prune, almond, cherry, strawberry, raspberry, and black berry, etc.), legumes (kidney bean, lentil, pea, soybean), oil plants (rape, mustard, poppy, olive, sunflower, coconut, castor-oil plant, cocoa bean, peanut, etc.), Cucurbitaceae (pumpkin, cucumber, melon, etc.), citrus (orange, lemon, grape fruit, mandarin, Watson pomelo (citrus natsudaidai), etc.), vegetables (lettuce, cabbage, celery cabbage, Chinese radish, carrot, onion, tomato, potato, green pepper, etc.), camphor trees (avocado, cinnamon, camphor, etc.), corn, tobacco, nuts, coffee, sugar cane, tea, grapevine, hop and banana.

Edible plants that are particularly useful include rice, wheat, barley, rye, corn, potato, carrot, sweet potato, sugar beet, bean, pea, chicory, lettuce, cabbage, cauliflower, broccoli, turnip, radish, spinach, asparagus, onion, garlic, eggplant, pepper, celery, canot, squash, pumpkin, zucchini, cucumber, apple, pear, quince, melon, plum, cherry, peach, nectarine, apricot, strawberry, grape, raspberry, blackberry, pineapple, avocado, papaya, mango, banana, soybean, tomato, sorghum and raspberries, banana and other such edible varieties.

The present invention can also be useful for increasing the yield and/or vigor of fiber producing plants including cotton, flax, hemp, jute, ramie, sisal; lumber producing trees including hardwoods and softwoods, such as, pine, oak, redwood, poplar, gum, ash, fir, birch, hemlock, larch, mahogany, ebony, and the like, as well as ornamental shrubs and trees.

In the method of the present invention, the neonicotinoid compound is applied to a seed. Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. In one embodiment, for example, the treatment can be applied to seed corn that has been harvested, cleaned and dried to a moisture content below about 15% by weight.

In an alternative embodiment, the seed can be one that has been dried and then primed with water and/or another material and then re-dried before or during the treatment with the neonicotinoid compound. Within the limitations just described, it is believed that the treatment can be applied to the seed at any time between harvest of the seed and sowing of the seed. As used herein, the term "unsown seed" is meant to include seed at any period between the harvest of the seed and the sowing of the seed in the ground for the purpose of germination and growth of the plant.

In preferred embodiments, the neonicotinoid compound is applied directly to the seed, rather than to the soil in which the seed is, or is to be, planted. In other embodiments, the neonicotinoid compound can be applied to the soil -- for example, by deposition in bands, "T"-bands, or in-furrow, at the same time as the seed is sowed -- as well as directly to the seed. In other embodiments, the neonicotinoid compound can be applied to the seed indirectly, such as by applying the compound to the soil in which the seed is sown.

The neonicotinoid compound can be applied "neat", that is, without any diluting or additional components present. However, the compound is typically applied to the seeds in the form of a formulation. This formulation may contain one or more other desirable components including but not limited to liquid diluents, binders to serve as a matrix for the neonicotinoid compound, fillers for protecting the seeds during stress conditions, and plasticizers to improve flexibility, adhesion and/or spreadability of the coating. In addition, for oily formulations containing little or no filler, it may be desirable to add to the formulation drying agents such as calcium carbonate, kaolin or bentonite clay, perlite, diatomaceous earth or any other adsorbent material. Use of such components in seed treatments is known in the art. See, *e.g.,* U.S. Patent No. 5,876,739. The skilled artisan can readily select desirable components to use in the neonicotinoid compound formulation depending on the seed type to be treated and the particular neonicotinoid compound that is selected. In addition, readily available commercial formulations of known insecticides and other pesticides may be used, as demonstrated in the examples below.

The seeds may also be treated with one or more of the following ingredients: pesticides other than neonicotinoid compounds, including compounds which act only below the ground; fungicides, such as captan, thiram, metalaxyl, mefenoxam (resolved isomer of metalaxyl), fludioxonil, oxadixyl, azoxystrobin, ipconazole, and isomers of each of those materials, and the like; herbicides, including compounds selected from carbamates, thiocarbamates, acetamides, triazines, dinitroanilines, glycerol ethers, pyridazinones, uracils, phenoxys, ureas, and benzoic acids; herbicidal safeners such as benzoxazine, benzhydryl derivatives, N,N-diallyl dichloroacetamide, various dihaloacyl, oxazolidinyl and thiazolidinyl compounds, ethanone, naphthalic anhydride compounds, and oxime derivatives; fertilizers; and biocontrol agents such as naturally-occurring or recombinant bacteria and fungi from the genera *Rhizobium, Bacillus, Pseudomonas, Serratia, Trichoderma, Glomus, Gliocladium* and mycorrhizal fungi. These ingredients may be added as a separate layer on the seed or alternatively may be added as part of the treating composition.

When the seed is treated with pesticides other than neonicotinoid compounds, such pesticides can include fungicides and herbicides; herbicidal safeners; fertilizers and/or biocontrol agents. These ingredients may be added as a separate layer or alternatively may be added in the pesticidal coating layer.

When the seed is treated with other pesticides, such pesticides can be selected from acaracides, bactericides, fungicides, nematocides and molluscicides.

When the seed is treated with a fungicide, it is preferably selected from a group consisting of tebuconazole, tetraconazole, simeconazole, difenoconazole, fluquinconazole, fludioxonil, captan, metalaxyl, carboxin, azoxystrobin, ipconazole, and thiram.

When the seed is treated with a herbicide, it can be selected from the following useful herbicides:
growth regulators, including
   phenoxy acetic acids, such as, 2,4-D and MCPA,
   phenoxy propionic acids, such as, dichlorprop and mecoprop,
   phenoxy butyric acids, such as, 2,4-DB and MCPB,
   benzoic acids, such as, dicamba,
   picolinic acid and related compounds, such as, picloram, triclopyr,
clopyralid and quinclorac;
inhibitors of auxin transport, including
   naptalam,
   semicarbones, such as, diflufenzopyr-sodium,
   s-triazines, such as, atrazine, simazine, cyanazine, prometon, ametryn and prometryn,
   other triazines, such as, hexazinone and metribuzin,
   substituted ureas, such as, diuron, fluometuron, linuron and tebuthiuron,
   uracils, such as, bromacil and terbacil,
   benzothiadiazoles, such as, bentazon,
   benzonitroles, such as, bromoxymil,
   phenylcarbamates, such as, desmediphram and phenmedipham,
   pyridazinones, such as, pyrazon,
   phenypyriddazines, such as, pyridate, and
   others, such as, propanil;
pigment inhibitors, including
   amitrole, clomazone and fluridone,
   pyridazinones, such as, norflurazon,
   isoxazoles, such as, isoxaflutole;
growth inhibitors, including
mitotic disruptors, of the types,
   dinitroanilines, such as, benefin, ethalfluralin, oryzalin, pendimethalin, prodiamine and trifluralin,
   oxysulfurons, such as, fluthiamide,
   pyridines, such as, dithiopyr and thiazopyr,
   amides, such as, pronamide, and
   others, such as, DCPA;
inhibitors of shoots of emerging seedlings, of the types,
   carbamothioates, such as, EPTC, cycloate, pebulate, triallate, butylate, molinate, thiobencarb and bernolate;
inhibitors of roots only of seedlings, of the types,
   amides, such as, napropamide,
   phenylureas, such as, siduron, and
   others, such as bensulide, betasan and bensumec;
inhibitors of roots and shoots of seedlings, of the types,
   chloroacetamides, such as, acetochlor, dimetenamid, propachlor, alachlor and metolachlor;
inhibitors of amino acid synthesis, including,
   inhibitors of aromatic amino acid synthesis, such as, glyphosate and sulfosate,
   inhibitors of branched chain amino acid synthesis, of the types,
   sulfonylureas, such as, bensulfuron, chlorsulfuron, halosulfuron,
nicosulfuron, prosulfuron, fimsulfuron, thifensulfuron, tribenuron,
chlorimuron, ethametsulfuron, metsulfuron, primisulfuron, oxasulfuron, sulfometuron, triasulfuron and triflusulfuron,
   imidazolinones, such as, imazamethabenz, imazamox, imazapic, imazapyr, imazaquin and imazethapyr,
   triazolopyrimidines, such as, chloransulam and flumetsulam,
   tyrimidinyloxybenzoates, such as, pyrithiobac;
lipid biosynthesis inhibitors, including,
   aryoxyphenoxyproprionates, such as, ciclofop-methyl, fenoxaprop-ethyl, fenoxaprop-p-ethyl, fluazifop-p-butyl, haloxyfop and quizalofop-p-ethyl,
   cyclohexanediones, such as, clethodim, sethoxydim and tralkoxydim;
inhibitors of cell wall biosynthesis, including,
   nitriles, such as, dichlobenil,
   benzamides, such as, isoxaben, and
   others, such as, quinclorac;
cell membrane disrupters, including,
   dilute sulfuric acid, monocarbamide dihydrogen sulfate and
herbicidal oils,
   bipyridyliums, such as, diquat and paraquat,
   diphenylethers, such as, acifluorfen, fomesafen, lactofen and
oxyfluorfen,
   oxidiazoles, such as, fluthiacet and oxadiazon,
   N-phenylheterocycles, such as carfentrazone, flumiclorac and sulfentrazone;
inhibitors of glutamine synthetase, such as glufosinate; and
others, such as, DSMA, MSMA, asulam, endothall, ethofumesate, difenzoquat and TCA.

Preferred herbicides include chlorimuron-ethyl, chloroacetic acid, chlorotoluron, chlorpropham, chlorsulfuron, chlorthal-dimethyl, chlorthiamid, cinmethylin, cinosulfuron, clethodim, clodinafop-propargyl, clomazone, clomeprop, clopyralid, cloransulam-methyl, cyanazine, cycloate, cyclosulfamuron, cycloxydim, cyhalofop-butyl, 2,4-D, daimuron, dalapon, dazomet, 2,4DB, desmedipham, desmetryn, dicamba, dichlobenil, dichlorprop, dichlorprop-P, diclofop-methyl, difenzoquat metilsulfate, diflufenican, dimefuron, dimepiperate, dimethachlor, dimethametryn, dimethenamid, dimethipin, dimethylarsinic acid; dinitramine, dinocap, dinoterb, diphenamid, diquat dibromide, dithiopyr, diuron, DNOC, EPTC, esprocarb, ethalfluralin, ethametsulfuron-methyl, ethofumesate, ethoxysulfuron, etobenzanid, fenoxaprop-P-ethyl, fenuron, ferrous sulfate, flamprop-M, flazasulfuron, fluazifop-butyl, fluazifop-P-butyl, fluchloralin, flumetsulam, flumiclorac-pentyl, flumioxazin, fluometuron, fluoroglycofen-ethyl, flupoxam, flupropanate, flupyrsulfuron-methyl-sodium, flurenol, fluridone, flurochloridone, fluroxypyr, flurtamone, fluthiacet-methyl, fomesafen, fosamine, glufosinate-ammonium, glyphosate, halosulfuron-methyl, haloxyfop, HC-252, hexazinone, imazamethabenz-methyl, imazamox, imazapyr, imazaquin, imazethapyr, imazosuluron, imidazilinone, indanofan, ioxynil, isoproturon, isouron, isoxaben, isoxaflutole, lactofen, lenacil, linuron, MCPA, MCPA-thioethyl, MCPB, mecoprop, mecoprop-P, mefenacet, metamitron, metazachlor, methabenzthiazuron, methylarsonic acid, methyldymron, methyl isothiocyanate, metobenzuron, metobromuron, metolachlor, metosulam, metoxuron, metribuzin, metsulfuron-methyl, molinate, monolinuron, naproanilide, napropamide, naptalam, neburon, nicosulfuron, nonanoic acid, norflurazon, oleic acid (fatty acids), orbencarb, oryzalin, oxadiargyl, oxadiazon, oxasulfuron, oxyfluorfen, paraquat dichloride, pebulate, pendimethalin, pentachlorophenol, pentanochlor, pentoxazone, petroleum oils, phenmedipham, picloram, piperophos, pretilachlor, primisulfuron-methyl, prodiamine, prometon, prometryn, propachlor, propanil, propaquizafop, propazine, propham, propisochlor, propyzamide, prosulfocarb, prosulfuron, pyraflufen-ethyl, pyrazolynate, pyrazosulfuron-ethyl, pyrazoxyfen, pyributicarb, pyridate, pyriminobac-methyl, pyrithiobac-sodium, quinclorac, quinmerac, quinoclamine, quizalofop, quizalofop-P, rimsulfuron, sethoxydim, siduron, simazine, simetryn, sodium chlorate, STS-system, sulcotrione, sulfentrazone, sulfometuron-methyl, sulfosulfuron, sulfuric acid, tar oils, 2,3,6-TBA, TCA-sodium, tebutam, tebuthiuron, terbacil, terbumeton, terbuthylazine, terbutryn, thenylchlor, thiazopyr, thifensulfuron-methyl, thiobencarb, tiocarbazil, tralkoxydim, tri-allate, triasulfuron, triaziflam, tribenuron-methyl, triclopyr, trietazine, trifluralin, triflusulfuron-methyl, vernolate

Preferably, the amount of the neonicotinoid compound or other ingredients used in the seed treatment should not inhibit germination of the seed, or cause phytotoxic damage to the seed.

The neonicotinoid compound formulation that is used to treat the seed in the present invention can be in the form of a suspension; emulsion; slurry of particles in an aqueous medium (e.g., water); wettable powder; wettable granules (dry flowable); and dry granules. If formulated as a suspension or slurry, the concentration of the neonicotinoid compound in the formulation is preferably about 0.5% to about 99% by weight (w/w), preferably 5-40%.

As mentioned above, other conventional inactive or inert ingredients can be incorporated into the formulation. Such inert ingredients include but are not limited to: conventional sticking agents, dispersing agents such as methylcellulose (Methocel A15LV or Methocel A15C, for example, serve as combined dispersant/sticking agents for use in seed treatments), polyvinyl alcohol (*e.g*., Elvanol 51-05), lecithin *(e.g.,* Yelkinol P), polymeric dispersants (*e.g*., polyvinylpyrrolidone/vinyl acetate PVP/VA S-630), thickeners (*e.g*., clay thickeners such as Van Gel B to improve viscosity and reduce settling of particle suspensions), emulsion stabilizers, surfactants, antifreeze compounds (*e.g*., urea), dyes, colorants, and the like. Further inert ingredients useful in the present invention can be found in McCutcheon's, vol. 1, "Emulsifiers and Detergents," MC Publishing Company, Glen Rock, New Jersey, U.S.A., 1996. Additional inert ingredients useful in the present invention can be found in McCutcheon's, vol. 2, "Functional Materials," MC Publishing Company, Glen Rock, New Jersey, U.S.A., 1996.

The neonicotinoid compounds and formulations of the present invention can be applied to seeds by any standard seed treatment methodology, including but not limited to mixing in a container (e.g., a bottle or bag), mechanical application, tumbling, spraying, and immersion. Any conventional active or inert material can be used for contacting seeds with pesticides according to the present invention, such as conventional film-coating materials including but not limited to water-based film coating materials such as Sepiret (Seppic, Inc., Fairfield, NJ) and Opacoat (Berwind Pharm. Services, Westpoint, PA).

The neonicotinoid compounds can be applied to a seed as a component of a seed coating. Seed coating methods and compositions that are known in the art are useful when they are modified by the addition of one of the neonicotinoid compounds of the present invention. Such coating methods and apparatus for their application are disclosed in, for example, U.S. Patent Nos. 5,918,413, 5,891,246, 5,554,445, 5,389,399, 5,107,787, 5,080,925, 4,759,945 and 4,465,017. Seed coating compositions are disclosed, for example, in U.S. Patent Nos. 5,939,356, 5,882,713, 5,876,739, 5,849,320, 5,834,447, 5,791,084, 5,661,103, 5,622,003, 5,580,544, 5,328,942, 5,300,127, 4,735,015, 4,634,587, 4,383,391, 4,372,080, 4,339,456, 4,272,417 and 4,245,432, among others.

Useful seed coatings contain one or more binders and at least one of the subject neonicotinoid compounds.

Binders that are useful in the present invention preferably comprise an adhesive polymer that may be natural or synthetic and is without phytotoxic effect on the seed to be coated. The binder may be selected from polyvinyl acetates; polyvinyl acetate copolymers; ethylene vinyl acetate (EVA) copolymers; polyvinyl alcohols; polyvinyl alcohol copolymers; celluloses, including ethylcelluloses, methylcelluloses, hydroxymethylcelluloses, hydroxypropylcelluloses and carboxymethylcellulose; polyvinylpyrolidones; polysaccharides, including starch, modified starch, dextrins, maltodextrins, alginate and chitosans; fats; oils; proteins, including gelatin and zeins; gum arabics; shellacs; vinylidene chloride and vinylidene chloride copolymers; calcium lignosulfonates; acrylic copolymers; polyvinylacrylates; polyethylene oxide; acrylamide polymers and copolymers; polyhydroxyethyl acrylate, methylacrylamide monomers; and polychloroprene.

It is preferred that the binder be selected so that it can serve as a matrix for the subject neonicotinoid compound. While the binders disclosed above may all be useful as a matrix, the specific binder will depend upon the properties of the neonicotinoid. The term "matrix", as used herein, means a continuous solid phase of one or more binder compounds throughout which is distributed as a discontinuous phase one or more of the neonicotinoid compounds. Optionally, a filler and/or other components can also be present in the matrix. The term matrix is to be understood to include what may be viewed as a matrix system, a reservoir system or a microencapsulated system. In general, a matrix system consists of a neonicotinoid compound of the present invention and filler uniformly dispersed within a polymer, while a reservoir system consists of a separate phase comprising the subject neonicotinoid compounds, that is physically dispersed within a surrounding, rate-limiting, polymeric phase. Microencapsulation includes the coating of small particles or droplets of liquid, but also to dispersions in a solid matrix.

The amount of binder in the coating can vary, but will be in the range of about 0.01 to about 25% of the weight of the seed, more preferably from about 0.05 to about 15%, and even more preferably from about 0.1 % to about 10%.

As mentioned above, the matrix can optionally include a filler. The filler can be an absorbent or an inert filler, such as are known in the art, and may include woodflours, clays, activated carbon, sugars, diatomaceous earth, cereal flours, fine-grain inorganic solids, calcium carbonate, and the like. Clays and inorganic solids, which may be used, include calcium bentonite, kaolin, china clay, talc, perlite, mica, vermiculite, silicas, quartz powder, montmorillonite and mixtures thereof. Sugars, which may be useful, include dextrin and maltodextrin. Cereal flours include wheat flour, oat flour and barley flour.

The filler is selected so that it will provide a proper microclimate for the seed, for example the filler is used to increase the loading rate of the active ingredients and to adjust the control-release of the active ingredients. The filler can aid in the production or process of coating the seed. The amount of filler can vary, but generally the weight of the filler components will be in the range of about 0.05 to about 75% of the seed weight, more preferably about 0.1 to about 50%, and even more preferably about 0.5% to 15%.

The amount of neonicotinoid compound that is used for the treatment of the seed will vary depending upon the type of seed and the type of neonicotinoid compound, but the treatment will comprise contacting the seeds with an amount of the neonicotinoid compound, or combination of two or more neonicotinoid compounds, that is effective for increasing the yield and/or vigor of the agronomic plant that is grown from the treated seed.

In general, the amount of neonicotinoid compound that is applied to a seed in the treatment will range from about 0.1 gm to about 1,000 gm of the compound per 100 kg of the weight of the seed. Preferably, the amount of neonicotinoid compound will be within the range of about 5 gm to about 600 gm active per 100 kg of seed, more preferably within the range of about 10 gm to about 400 gm active per 100 kg of seed, and even more preferably within the range of about 20 gm to about 300 gm of neonicotinoid compound per 100 kg of seed weight. Alternatively, it has been found to be preferred that the amount of the neonicotinoid compound be over about 20 gm of the compound per 100 kg of the seed, and more preferably over about 40 gm per 100 kg of seed. When the neonicotinoid compound is imidacloprid, a preferred range of use includes about 40 gm/ 100 kg of seed to about 100 gm/100 kg.

\Optionally, a plasticizer can be used in the coating formulation. Plasticizers are typically used to make the film that is formed by the coating layer more flexible, to improve adhesion and spreadability, and to improve the speed of processing. Improved film flexibility is important to minimize chipping, breakage or flaking during storage, handling or sowing processes. Many plasticizers may be used, however, useful plasticizers include polyethylene glycol, glycerol, butylbenzylphthalate, glycol benzoates and related compounds. The range of plasticizer in the coating layer will be in the range of from bout 0.1 to about 20% by weight.

When the neonicotinoid compound used in the coating is an oily type formulation and little or no filler is present, it may be useful to hasten the drying process by drying the formulation. This optional step may be accomplished by means will known in the art and can include the addition of calcium carbonate, kaolin or bentonite clay, perlite, diatomaceous earth, or any absorbent material that is added preferably concurrently with the pesticidal coating layer to absorb the oil or excess moisture. The amount of calcium carbonate or related compounds necessary to effectively provide a dry coating will be in the range of about 0.5 to about 10% of the weight of the seed.

In a preferred embodiment, the seed coating that contains the neonicotinoid compound is a controlled release coating. When the terms "controlled release" are used herein to describe a seed coating, what is meant is a seed coating that acts as a reservoir of the neonicotinoid compound and is capable of releasing the neonicotinoid compound at a rate that is slower than the neonicotinoid compound would be released if it were present on the surface of the seed without being a component of a coating. Common techniques for providing controlled release coatings are described, for example, in Controlled-Release Delivery Systems for Pesticides, H. B. Scher, Ed., Marcel Dekker, Inc., NY (1999), and include, without limitation, matrix coatings, matrix microparticles, coated droplets, coated particles, microcapsules, and the like. Some coatings formed with the neonicotinoid compound are capable of effecting a slow rate of release of the compound by diffusion or movement through the matrix to the surrounding medium. The treated seeds may also be enveloped with a polymer film overcoating to protect the coating and/or to serve as a barrier to diffusion of the neonicotinoid compound. Such overcoatings are known in the art and may be applied using conventional fluidized bed and drum film coating techniques.

The neonicotinoid compound formulation may be applied to the seeds using conventional coating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

In another embodiment of the present invention, the neonicotinoid compound can be introduced onto or into a seed by use of solid matrix priming. For example, a quantity of the neonicotinoid compound can be mixed with a solid matrix material and then the seed can be placed into contact with the solid matrix material for a period to allow the neonicotinoid to be introduced to the seed. The seed can then optionally be separated from the solid matrix material and stored or used, or the mixture of solid matrix material plus seed can be stored or planted directly. Solid matrix materials which are useful in the present invention include polyacrylamide, starch, clay, silica, alumina, soil, sand, polyurea, polyacrylate, or any other material capable of absorbing or adsorbing the neonicotinoid compound for a time and releasing that compound into or onto the seed. It is useful to make sure that the neonicotinoid compound and the solid matrix material are compatible with each other. For example, the solid matrix material should be chosen so that it can release the compound at a reasonable rate, for example over a period of minutes, hours, or days.

The present invention further embodies imbibition as another method of treating seed with the neonicotinoid compound. For example, plant seed can be combined for a period of time with a solution comprising from about 1% by weight to about 75% by weight of the neonicotinoid compound in a solvent such as water. Preferably the concentration of the solution is from about 5% by weight to about 50% by weight, more preferably from about 10% by weight to about 25% by weight. During the period that the seed is combined with the solution, the seed takes up (imbibes) a portion of the neonicotinoid compound. Optionally, the mixture of plant seed and solution can be agitated, for example by shaking, rolling, tumbling, or other means. After imbibition, the seed can be separated from the solution and optionally dried, for example by patting or air drying.

In yet another embodiment, a powdered neonicotinoid compound can be mixed directly with seed. Optionally, a sticking agent can be used to adhere the powder to the seed surface. For example, a quantity of seed can be mixed with a sticking agent and optionally agitated to encourage uniform coating of the seed with the sticking agent. The seed coated with the sticking agent can then be mixed with the powdered neonicotinoid compound. The mixture can be agitated, for example by tumbling, to encourage contact of the sticking agent with the powdered neonicotinoid compound, thereby causing the powdered compound to stick to the seed.

The treated seeds of the present invention can be used for the propagation of plants in the same manner as conventional treated seed. The treated seeds can be stored, handled, sowed and tilled in the same manner as any other pesticide treated seed. Appropriate safety measures should be taken to limit contact of the treated seed with humans, food or feed materials, water and birds and wild or domestic animals.

The following example describes preferred embodiments of the invention. Other embodiments within the scope of the claims herein will be apparent to one skilled in the art from consideration of the specification or practice of the invention as disclosed herein. It is intended that the specification, together with the example, be considered to be exemplary only, with the scope and spirit of the invention being indicated by the claims which follow the examples. In the example all percentages are given on a weight basis unless otherwise indicated.

### EXAMPLE 1

This example illustrates the treatment of transgenic corn seeds with imidacloprid.

Corn seeds were prepared to express *Bacillus thuringiensis* endotoxin Cry3Bb.11231 or Cry3Bb.11098 by the methods described for these respective events in WO 99/31248.

Corn seeds of the same hybrid species, with and without the respective transgenic events, were treated with imidacloprid (available as GAUCHO® from Gustafson LLC, Plano, TX) as follows. A seed treatment formulation containing imidacloprid was prepared by mixing a measured amount of the imidacloprid-containing material in water as a carrier. Also added to the mixture were other non-neonicotinoid ingredients, such as colorants, sticking agents, surfactants, lubricants, and other materials that are commonly known in the art for use in seed treatment formulations. The formulation was then applied at room temperature to a measured weight of corn seed in a rotostatic seed treater. The respective weights of the imidacloprid preparation and the corn seed were calculated to provide the desired rate of treatment of imidacloprid on the seed. The imidacloprid was mixed into sufficient water to permit efficient distribution of the formulation to all of the seeds in the batch while minimizing loss of treatment formulation due to lack of uptake of the formulation by the seeds. Treated seeds were allowed to sit uncapped for at least four hours before planting.

When the seeds were treated with imidacloprid, a sufficient amount of Gaucho^{®} 600 FS (containing 48.7% by weight imidacloprid) was thoroughly mixed into water to form a seed treatment formulation, and the formulation was applied to a weight of corn seed via a rotostatic seed treater to provide treatment levels of 0.165 mg imidacloprid per kernel. (If one assumes that about 1650 corn kernels weigh one pound, then this rate is equivalent to 60 grams imidacloprid per 100 kg of seed), or 1.34 mg imidacloprid per kernel (about 487 grams imidacloprid per 100 kg of seed).

### EXAMPLE 2

This example illustrates the effect of the treatment of corn seed with imidacloprid in a hybrid seed production trial.

Twelve commercial corn hybrids were treated with imidacloprid at 0.165 mg/kernel (GAUCHO^{®} 600). All application rates are given as the weight of the active ingredient (imidacloprid) per seed kernel. The seed treatment method was the same as described in Example 1.

The seed were planted at twenty-four trial locations across the U.S. central corn belt, using standard planting equipment. Each trial location consisted of six hybrids, with experimental treatments established where each hybrid received either a fungicide treatment alone (MAXIM^{®} XL at 0.165 oz. active ingredient (Al)/cwt of seed), or a fungicide treatment plus a seed treatment with the neonicotinoid compound.

Trials were established as small plot (2 - 4 row by 15 - 40 feet in length) replicated experiments (four replications) in a split-plot randomized complete block design. In the experimental design, hybrids were established as main plots and seed treatments were established as subplots. Each trial received standard herbicide applications for weed control and other standard crop maintenance procedures, excepting that none of the trials received any additional insecticide treatments during the course of the growing season.

Experimental treatment effect was evaluated by assessing final plant stand (at growth stages V4/V5) and plot yields at harvest maturity. Plot yields were standardized at 15% moisture. The data from the trials are shown in Table 5.

**Table 5: Yield and stand count in breeding station trials of corn hybrids which were untreated or treated with imidacloprid.**

| Response | Hybrid Code | Stand count (plts/ac), or Corn yield (bu/ac) | | | Actual Yield Over Expected | Actual Yield Over 2x of Expected |
|---|---|---|---|---|---|---|
| | | Control | Imidacloprid treated | Difference | | |
| Stand | A | 31076 | 31920 | 843.8 | | |
| Stand | B | 31622 | 32061 | 439.0 | | |
| Stand | C | 30467 | 31217 | 749.5 | | |
| Stand | D | 30881 | 31828 | 946.8 | | |
| Stand | E | 31391 | 32011 | 620.0 | | |
| Stand | F | 29624 | 30786 | 1162.3 | | |
| Stand | G | 27577 | 28766 | 1189.2 | | |
| Stand | H | 27964 | 28004 | 39.6 | | |
| Stand | | 26638 | 28460 | 1822.2 | | |
| Stand | J | 27844 | 28273 | 429.3 | | |
| Stand | K | 27961 | 28984 | 1022.8 | | |
| Stand | L | 28182 | 28986 | 803.7 | | |
| Yield | A | 161.5 | 163.5 | 2.0 | Yes | No |
| Yield | B | 166.7 | 170.8 | 4.1 | Yes | Yes |
| Yield | C | 153.7 | 159.6 | 5.8 | Yes | Yes |
| Yield | D | 170.1 | 169.4 | -0.7 | No | No |
| Yield | E | 170.2 | 171.2 | 1.0 | No | No |
| Yield | F | 168.4 | 173.1 | 4.7 | Yes | Yes |
| Yield | G | 164.0 | 167.5 | 3.5 | Yes | No |
| Yield | H | 159.9 | 164.6 | 4.8 | Yes | Yes |
| Yield | I | 163.1 | 172.3 | 9.2 | Yes | Yes |
| Yield | J | 175.9 | 179.5 | 3.7 | Yes | Yes |
| Yield | K | 171.2 | 171.3 | 0.1 | No | No |
| Yield | L | 173.8 | 180.7 | 6.9 | Yes | Yes |

| | | | | | | |
|---|---|---|---|---|---|---|
| Notes: a. Key to corn hybrids is: A = DK440, B = DKC46-26, C = DK493, D = DKC51-88, E = DK537, F = LH244XLH295, G = DK567, H = HC33XLH277, I = DKC57-38, J = DK585, K = DK611, and L = RX708. b. Hybrids A - F were grown at 10 locations; hybrids G - L were grown at 14 locations. c. Column marked "Response" shows final stand counts at V5 stage (plants/ac), and plot yields (bu/ac) at maturity. d. All seeds received standard fungicide treatment. | | | | | | |

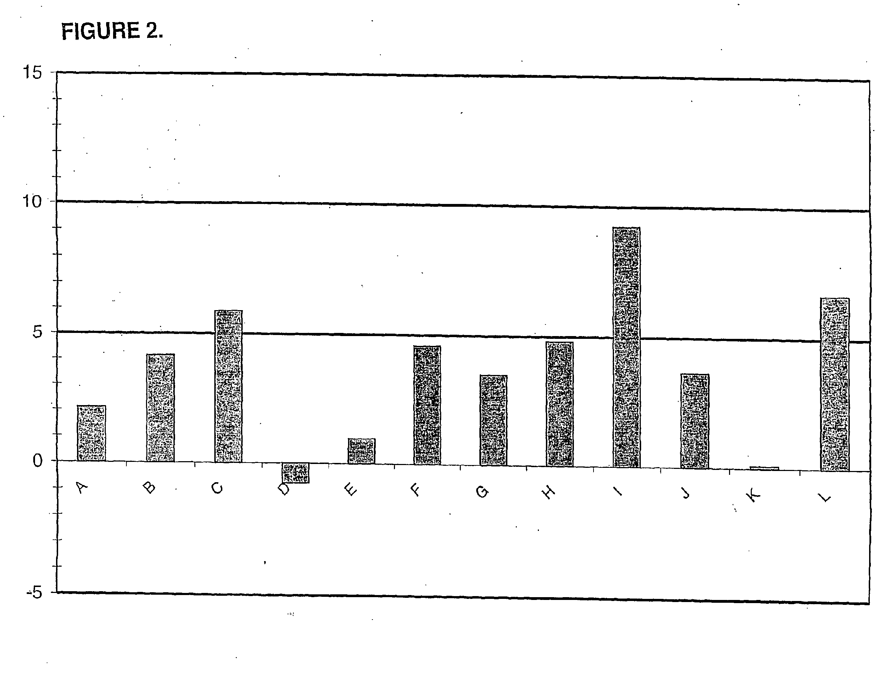

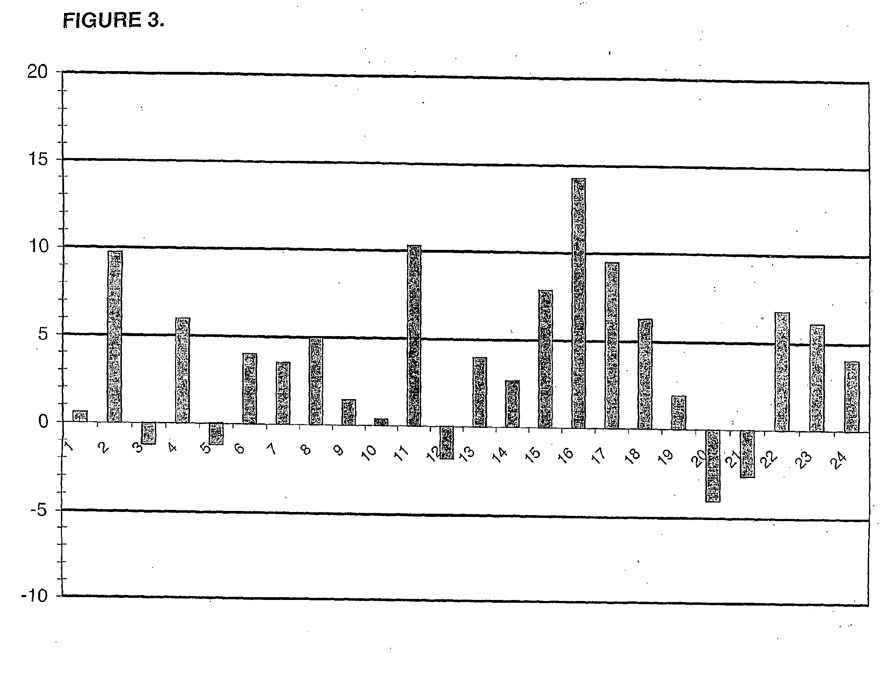

The yield results from this set of field trials are also shown in the form of bar charts that show the increase or decrease (in bu/ac) in corn yield for seeds treated with imidacloprid as compared against untreated seeds as a function of the type of corn hybrid that was used (See Figure 2). In Figure 3, a bar chart shows the increase or decrease (in bu/ac) on corn yield for seeds treated with imidacloprid for the twenty four different locations at which the seeds were planted. Both of these charts show consistent and commercially important increases in corn yield when the seed is treated with imidacloprid irrespective of the level of insect infestation

Results from the experiments described above conclusively show the effect of imidacloprid in improving plant stand and increasing crop yield. It was notable, however, that the yield increase provided by treatment with the neonicotinoid compound in relation to the corresponding stand increases was unexpectedly high. According to publications by Purdue University, (See, *e.g.,* Nielsen, R. L., *Estimating Yield and Dollar Returns From Corn Replanting,* AY-264-W (Rev. Jul-02), Purdue Cooperative Extension Service, West Lafayette, IN (July 2002), available at http://www.agry.purdue.edu/ext/pubs/AY-264-W.pdf; 4/29/03), a difference in 1,000 plants per acre in corn planted at optimal populations will provide an expected difference in yield of about 1%. (See also, Shaw, Corn Production, pp. 659 - 662 in, Corn and Corn Improvement, Number 18 in the series, Agronomy, Sprague, G. F., et al.. Eds., Am. Soc. of Agronomy, Inc., Madison, Wl (1988). In Table 5, the column labeled "Actual yield over expected" shows that 9 out of 12 hybrid/seed treatment combinations showed a yield increase that was more than the increase that which would have been expected on the basis of stand improvement alone as compared to the fungicide-treated control. In fact, over half of the hybrid/seed treatment combinations (7 out of 12) showed a yield increase that was over two-times that which would have been predicted on the basis of stand improvement. ("Actual yield over 2X of expected"). This increase was unexpected and was surprisingly high. It indicated that corn yield was increased by treatment with imidacloprid, and that the increase in yield was superior to the yield increase that could be explained by increased stand counts.

### EXAMPLE 3

This example shows that the treatment of corn seeds with imidacloprid resulted in an increase in corn yield even at low insect pest pressure.

Three different corn hybrids (EXP050, EXP056, and EXP062A) were treated by the method described in Example 1 with GAUCHO^{®} 600 FS at an application rate of 0.165 mg imidacloprid/kernel and planted at different locations. This rate of imidacloprid has been shown to not significantly reduce root injury at locations with economically damaging levels of corn rootworm, but is effective in protecting corn seedlings against stand reducing and growth limiting secondary insect pests of corn. The corn yield from an untreated control sample, from corn grown with conventional soil applied insecticides, and corn having the seed treatment of imidacloprid, were measured at harvest and are reported in Table 6. (Conventional soil-applied insecticidal treatment comprised FORCE 3G applied at 4 - 5 oz/1000 ft. of row (30 in. row spacing), LORSBAN 15G applied at the rate of 8 oz/1000 ft. of row, and COUNTER 20G applied at a rate of 6 oz/1000 ft. of row).

**Table 6: Corn yield in field tests of non-transgenic hybrid corn with and without seed treatment with imidacloprid in areas with low pest pressure.**

| | | YIELD (BU/AC) | | |
|---|---|---|---|---|
| HYBRID | TILLAGE PRACTICE | UNTREATED CONTROL | SOIL APPLIED (Force 3G, Lorsban 15G, Counter 20G) | Gaucho^{®} (0.165 mg/kernel) |
| EXP050 | MINIMUM | 134 | 131 | 140 |
| EXP056 | MINIMUM | 130 | 130 | 132 |
| EXP062A | MINIMUM | 151 | 154 | 154 |
| MEAN | | 138.3 | 138.3 | 142 |

Secondary insect pressure on all sites was insignificant to nonexistent. Low insect pressure was also evident from the fact that soil applied insecticides did not positively affect the yield. Treatment with imidacloprid, however, increased the yield by about 4 bu/ac (about 2.9%). These results showed that seed treatment with imidacloprid increased corn yield, even when the level of insect pest pressure was below that which would have indicated the need for insecticide treatment.

### EXAMPLE 4

This example shows that imidacloprid increases corn yield in field trials with hybrid corn with different tillage regimes.

Seed of three corn hybrids were treated with imidacloprid in the manner described in Example 3. Seed were planted using standard planting equipment in field experiments across the U.S. corn belt. All experiments were conducted as strip trials, under a variety of tillage regimes, and all trials received standard weed control and cultural practices common to commercial corn production. Plot yield was collected using standard mechanical harvesting equipment.

Soil insecticides were applied in the manner described in Example 2. Considerable increase in corn yield was also observed when corn seed treated with imidacloprid were planted in soils treated with soil-applied insecticide. The increase in yield was observed under all tillage conditions and for all the hybrids tested. Table 7 compares the yield from untreated corn seeds and corn seeds treated with imidacloprid when planted on soil treated with soil-applied insecticide. Seeds treated with imidacloprid produced considerably higher yield that the seeds that did not receive imidacloprid treatment. Soil-applied insecticides are known to be an effective method for controlling secondary insects, so the increase in corn yield was surprising.

**Table 7: Yield in field trials with low insect pressure for corn having different tillage practices and with only soil insecticide treatment or soil insecticide treatment plus seed treatment with Gaucho.**

| TILLAGE PRACTICE^{a} | HYBRID | YIELD (Soil applied insecticide) in Bu/Ac | YIELD (Gaucho seed treatment + Soil insecticide) in Bu/Ac |
|---|---|---|---|
| Conservation | EXP050 | 129 | 152 |
| Conservation | EXP050 | 176 | 174 |
| Conservation | EXP050 | 182 | 187 |
| Conservation | EXP056 | 177 | 166 |
| Conservation | EXP050 | 160 | 177 |
| Conservation | EXP056 | 214 | 199 |
| Conservation | EXP062A | 219 | 222 |
| MEAN | | 179.6 | 182.4 |
| Conventional | EXP050 | 212 | 217 |
| Conventional | EXP050 | 209 | 211 |
| Conventional | EXP056 | 228 | 217 |
| Conventional | EXP056 | 153 | 157 |
| Conventional | EXP056 | 213 | 216 |
| Conventional | EXP062A | 188 | 185 |
| Conventional | EXP056 | 182 | 183 |
| Conventional | EXP056 | 181 | 192 |
| Conventional | EXP056 | 188 | 188 |
| Conventional | EXP056 | 187 | 197 |
| Conventional | EXP062A | 192 | 201 |
| Conventional | EXP062A | 193 | 194 |
| Conventional | EXP050 | 150 | 152 |
| Conventional | EXP062A | 194 | 207 |
| MEAN | | 190.8 | 194.1 |
| No Till | EXP056 | 105 | 123 |
| No Till | EXP056 | 176 | 174 |
| No Till | EXP056 | 173 | 172 |
| No Till | EXP056 | 153 | 157 |
| No Till | EXP062A | 123 | 133 |
| No Till | EXP062A | 164 | 185 |
| No Till | EXP062A | 167 | 185 |
| MEAN | | 151.8 | 161.3 |
| TOTAL MEAN | | 178.1 | 183 |

| | | | |
|---|---|---|---|
| Notes: a. Methods described as no-till, minimum till, conservation or conventional tillage differ from each other mainly in the degree to which the soil is disturbed prior to planting. By definition, conservation tillage leaves at least 30 percent of the soil covered by crop residues. No-Till - Tillage system refers to situations where no tillage methods are applied to the soil prior to or at planting. Conservation/Minimum tillage refers to reduced tillage practices allowing at least 30% of soil surface to remain covered with crop residue. Conventional Tillage refers to tillage practices where less than 30% of soil surface is covered with previous crop residue. Such practices may include moldboard plowing, disking, or multiple field cultivation passes prior to or at planting of crop. Strip and Ridge-Till, although usually grouped in conservation tillage because of beneficial effects on soil and water retention, are grouped in conventional tillage here because the tilled zones in which the crop is planted provide an environment more similar to true conventional tillage. | | | |

The data from this trial also indicated that the yield of corn grown with the use of no-till cultivation was increased by a higher percentage (increase of 6.3%) than corn receiving convention tillage (increase of 1.7%), or conservation/minimum tillage (increase of 1.6%).

### EXAMPLE 5

This example shows the effect on yield of treating isoline and transgenic corn seed with imidacloprid.

Corn hybrids with and without transgenic events expressing insecticidal proteins were evaluated for field efficacy. The hybrids that were evaluated were RX670 and RX601, each as an isoline (having no transgenic events) and each having a transgenic event expressing the Cry3Bb protein having activity against *Diabrotica spp.* (corn rootworm)designated as MON853, or a transgenic event expressing the Cry3Bb protein having activity against corn rootworm -- designated as MON863, or a combination of MON853 and a transgenic event expressing the Cry1 A protein having activity against European corn borer -- designated as MON810, or a combination of MON863 and MON810. Accordingly, an isoline and four transgenic forms were tested for each hybrid. Each type of seed was tested with and without seed treatment with 60 gm of imidacloprid per 100 kg of seed, applied in a Niklas seed treater. The isoline seeds were also tested with and without the use of conventional soil-applied insecticides, which were applied as described in Example 3.

Corn yield for the tests is shown in Tables 8 and 9.

**Table 8: Corn yield in field tests of non-transgenic hybrid corn with and without seed treatment with imidacloprid in areas with low pest pressure.**

| | | YIELD (BU/AC) | | |
|---|---|---|---|---|
| LOCATION | HYBRID | UNTREATED CONTROL and (Root Damage Rating)^{a} | SOIL APPLIED (Force 3G, Lorsban, Counter)^{b} | Gaucho (60g/100kg seed) |
| 1 | RX670 | 76.8 (RDR = 2.3) | 74.8 | 73 |
| 2 | RX601 | 105.1 (RDR = 1.9) | 98.7 | 101.5 |
| 3 | RX601 | 199.3 (RDR = 2.5) | 171.1 | 180 |
| 4 | RX601 | 119.8 (RDR = 2.6) | 117.1 | 117.1 |

| | | | | |
|---|---|---|---|---|
| Notes: a. Root Damage Rating (RDR) is measured according to the lowa Root Rating system (Hill and Peters, 1971, *ibid.)* and is expressed on a scale of from 0-6. Any score below 3 indicates a damage level that would be considered to indicate that no insecticide treatment was required. b. Seed treatment with Force 3G, Lorsban 15G, and Counter 20G, was carried out according to the practice and at the rates described in Example 3. | | | | |

The data shown in Table 8 indicated that the yield for isoline corn was increased by imidacloprid treatment in one-half of the cases tested. The increases, however, were not substantial. The data also showed that root damage pressure due to corn rootworm during the tests was not significant.

In contrast, however, when imidacloprid was applied to transgenic seeds in this test, the increase in corn yield over that obtained from untreated transgenic seed was substantial. Table 9 shows that in all of the trials, transgenic seed treated with imidacloprid yielded higher than the isolines, and also higher than the untreated transgenic strains. In the relative absence of insect pressure, this result was unexpected.

**Table 9: Corn yield in field trials having low pest pressure for corn seed having transgenic events giving corn root worm and European Corn Borer protection.**

| | YIELD (BU/AC) | | | | | | | | |
|---|---|---|---|---|---|---|---|---|---|
| LOCATION AND HYBRID | UNTREATED CONTROL (Root Damage Rating) | HYBRID 853 | HYBRID 853 + Gaucho | HYBRID 863 | HYBRID 863 + Gaucho | HYBRID 853/810 | HYBRID 853/810 + Gaucho | HYBRID 863/810 | HYBRID 863/810 + Gaucho |
| 1 RX(670) | 76.8 (RDR=2.3) | 52.5 | 78 | 70.7 | 85.8 | | 91.1 | | 93.3 |
| 2 (RX601) | 105.1 (RDR=1.9) | | | | | 102.6 | 107.4 | 111.6 | 115.3 |
| 3 (RX601) | 199.3 (RDR=2.5) | | 187.1 | | 208.9 | | | | |
| 4 (RX601) | 117.1 (RDR=2.6) | | | | | | 114.3 | | 118.7 |

### EXAMPLE 6

This example illustrates how the United States crop reporting district tables for insecticide use in corn can be used to determine whether insect pressure in a particular location indicates a need for treatment with an insecticide.

Referring to Table 1, a person selects a location to plant corn within U.S. crop reporting district (CRD) no. 01050. From Table 1, it can be seen that in 2001, no insecticide treatment of corn is reported on corn acreage in that CRD. Accordingly, it can be determined that the level of insect pressure at that location is below that at which treatment of the corn seed with an insecticide would be indicated.

By consulting Table 1, similar conclusions may be drawn for CRD's 01010, 01020, 01030, 01060, 04020, 04050, 05050, 05070, 06060, 13020, 16090, 20050, 22010, 22040, 22060, 22070, 23010, 23020, 26010, 26020, 26030, 27020, 27030, 28020, 28040, 28070, 28090, 29080, 30030, 30080, 30090, 32010, 33010, 34080, 37040, 38010, 38020, 38030, 38040, 38050, 38070, 38080, 40020, 40030, 40040, 40050, 40060, 40070, 40080, 40090, 44010, 45010, 45040, 46020, 46040, 46050, 46070, 46080, 48021, 49060, 53010, 53020, 53090, 55020, and 55030.

### EXAMPLE 7

This example illustrates how records on insecticide use on corn by county can be used to determine whether insect pressure in a particular location indicates a need for treatment with an insecticide.

If a person selects a location to plant corn in a county within a U.S. crop reporting district (CRD), where some level of insecticide use in the CRD is indicated -- for example in CRD number 01040, but the county in which the person elects to plant corn is know to be free of insecticide use on corn, then it can be determined that the level of insect pressure at such county is below that at which treatment of the corn seed with an insecticide would be indicated.

A similar conclusion may be drawn for every county for which the level of insecticide use on corn can be determined.

All references cited in this specification, including without limitation all papers, publications, patents, patent applications, presentations, texts, reports, manuscripts, brochures, books, internet postings, journal articles, periodicals, and the like, are hereby incorporated by reference into this specification in their entireties. The discussion of the references herein is intended merely to summarize the assertions made by their authors and no admission is made that any reference constitutes prior art. Applicants reserve the right to challenge the accuracy and pertinency of the cited references.

In view of the above, it will be seen that the several advantages of the invention are achieved and other advantageous results obtained. [000154] As various changes could be made in the above methods and compositions without departing from the scope of the invention, it is intended that all matter contained in the above description and shown in the accompanying drawings shall be interpreted as illustrative and not in a limiting sense.

## Claims

1. A method of increasing the yield and/or vigor of an agronomic plant that is grown from a seed comprising a foreign polynucleotide sequence encoding for the production of an insecticidal protein, or a foreign polynucleotide sequence which provides herbicide resistance, or both, the method comprising:
a. determining whether the seed is to be planted in a location having a level of insect pest infestation that would indicate treatment with an insecticide; and, if such treatment is not indicated,
b. carrying out an action that is selected from the group consisting of:
i. treating the seed with a neonicotinoid compound, and
ii. planting in the location a seed that has been treated with a neonicotinoid compound.

2. A method of increasing the yield and/or vigor of an agronomic plant that is grown from a seed comprising a foreign polynucleotide sequence encoding for the production of an insecticidal protein, or a foreign polynucleotide sequence which provides herbicide resistance, or both, where the seed is planted in a location having a level of infestation by an insect that is a pest for the agronomic plant and against which a neonicotinoid compound has insecticidal activity, the method comprising:
a. determining whether the level of infestation by the insect that is a pest for the agronomic plant indicates treatment with an insecticide; and, if treatment is not indicated,
b. treating the seed with a neonicotinoid compound.

3. The method according to claim 2, comprising:
a. comparing a level of infestation by the insect at the location with a level of infestation by the insect at which treatment with an insecticide would be indicated; and, if the level of infestation of the location by the insect is lower than the level of infestation at which treatment is indicated,
b. treating the seed with a neonicotinoid compound.

4. The method according to claim 2, comprising:
a. determining the level of infestation by the insect at the location;
b. determining a level of infestation by the insect at which treatment with an insecticide would be indicated;
c. comparing the level of infestation by the insect at the location with the level of infestation by the insect at which treatment with an insecticide would be indicated; and, if the level of infestation of the location by the insect is lower than the level of infestation at which treatment is indicated,
d. treating the seed with a neonicotinoid compound.

5. The method according to claim 2, comprising:
a. determining whether the level of infestation by the insect that is a pest for the agronomic plant indicates that treatment with an insecticide is needed; and, if treatment is not indicated,
b. planting in the location a seed that has been treated with a neonicotinoid compound.

6. The method according to claim 2, comprising:
a. determining the level of infestation by the insect at the location;
b. determining a level of infestation by the insect at which treatment with an insecticide would be indicated;
c. comparing the level of infestation by the insect at the location with the level of infestation by the insect at which treatment with an insecticide would be indicated; and, if the level of infestation of the location by the insect is lower than the level of infestation at which treatment is indicated,
d. planting the seed after it has been treated with a neonicotinoid compound.

7. The method according to any one of claims 1 through 6, wherein the neonicotinoid compound comprises a compound having the formula: 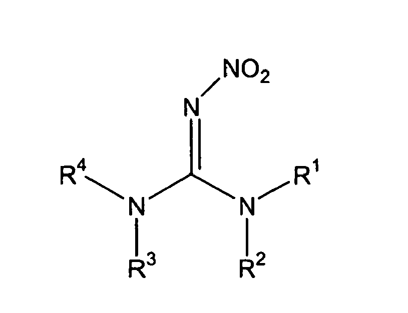 where:
R¹ is hydrogen, or C₁ - C₄ alkyl;
R² is hydrogen, C₁ - C₄ alkyl, C₁ - C₄ alkenyl, C₁ - C₄ alkynyl, hydroxyl, amino, aryl, thio, alkylaryl, arylalkyl, or C₄ - C₆ heterocyclic;
R³ is hydrogen, C₁ - C₄ alkyl, C₁ - C₄ alkenyl, C₁ - C₄ alkynyl, hydroxyl, amino, aryl, thio, alkylaryl, arylalkyl, or 4 - 6-member heterocyclic; or is such that R² and R³ can join to form a 4 - 6 member heterocyclic, which may optionally be substituted or unsubstituted; and
R⁴, if present, is hydrogen, C₁ - C₄ alkyl, C₁ - C₄ alkenyl, C₁ - C₄ alkynyl, hydroxyl, amino, aryl, thio, alkylaryl, arylalkyl, C₄ - C₆ heterocyclic, halothiazoylalkyl, or furylalkyl.

8. The method according to any one of claims 1 through 6, wherein the neonicotinoid compound comprises a compound having the formula: 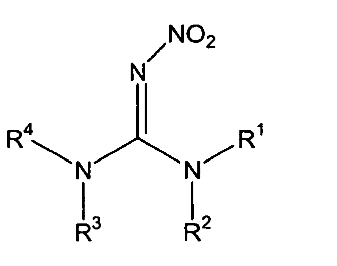 where:
R¹ is hydrogen, or methyl;
R² is hydrogen, or methyl;
R³ is hydrogen, methyl, or of a form that can join with R² to form an oxadiazine ring or a 2,3-diazol ring; and
R⁴, if present, is chlorothiazoylmethyl, or furylmethyl.

9. The method according to any one of claims 1 through 6, wherein the neonicotinoid compound is selected from the group consisting of acetamiprid, imidacloprid, thiamethoxam, clothianidin, dinotefuran, nitenpyram, flonicamid, nithiazine and thiacloprid.

10. The method according to claim 9, wherein the neonicotinoid compound is selected from the group consisting of acetamiprid, imidacloprid, thiamethoxam, clothianidin, dinotefuran and nitenpyram.

11. The method according to any one of claims 1 - 6 wherein the seed comprises a foreign polynucleotide sequence encoding a modified *B*. *thuringiensis* δ-endotoxin.

12. The method according to claim 11, wherein the modified δ-endotoxin is one that is expressed by the foreign *B. thuringiensis* gene sequence that is present in a strain selected from the group consisting of strains having deposit numbers NRRL B-21579, NRRL B-21580, NRRL B-21581, NRRL B-21635, and NRRL B-21636.

13. The method according to claim 11, wherein the modified δ-endotoxin is one that is expressed by the foreign *B. thuringiensis* gene sequence that is present in a strain selected from the group consisting of strains having deposit numbers NRRL B-21744, NRRL B-21745, NRRL B-21746, NRRL B-21747, NRRL B-21748, NRRL B-21749, NRRL B-21750, NRRL B-21751, NRRL B-21752, NRRL B-21753,NRRL B-21754, NRRL B-21755, NRRL B-21756, NRRL B-21757, NRRL B-21758, NRRL B-21759, NRRL B-21760, NRRL B-21761, NRRL B-21762, NRRL B-21763, NRRL B-21764, NRRL B-21765, NRRL B-21766, NRRL B-21767, NRRL B-21768, NRRL B-21769, NRRL B-21770, NRRL B-21771, NRRL B-21772, NRRL B-21773, NRRL B-21774, NRRL B-21775, NRRL B-21776, NRRL B-21777, NRRL B-21778, and NRRL B-21779.

14. The method according to claim 11, wherein the modified δ-endotoxin is selected from the group consisting of Cry3Bb.11230, Cry3Bb.11231, Cry3Bb.11232, Cry3Bb.11233, Cry3Bb.11234, Cry3Bb.11235, Cry3Bb.11236, Cry3Bb.11237, Cry3Bb.11238, Cry3Bb.11239, Cry3Bb.11241, Cry3Bb.11242, Cry3Bb.11098, a binary insecticidal protein CryET33 and CryET34, a binary insecticidal protein CryET80 and CryET76, a binary insecticidal protein tlC100 and tlC101, and a binary insecticidal protein PS149B1.

15. The method according any one of claims 1 through 6, having the added step of treating the soil in which the seed is planted with the neonicotinoid compound.

16. The method according to any one of claims 1 through 6, having the additional step of cultivating the seed and the plant which grows from the seed according to no-till practice.

17. The method according to claim 1, wherein determining whether the seed is to be planted in a location having a level of insect pest infestation that would indicate the need for treatment with an insecticide comprises determining whether the seed is to be planted in a location having a level of insect pest infestation that would indicate the need for treatment with a neonicotinoid insecticide.

18. The method according to any one of claims 7, 10, and 11, wherein the seed is treated with an amount of the neonicotinoid compound from about 0.1 gm/100 kg of seed to about 1,000 gm/100kg of seed.

19. The method according to claim 18, wherein the seed is treated with a neonicotinoid compound in an amount of from about 5 gm/100 kg of seed to about 600 gm/1 00 kg of seed.

20. The method according to claim 19, wherein the seed is treated with a neonicotinoid compound in an amount of from about 10 gm/100 kg of seed to about 400 gm/100 kg of seed.

21. The method according to claim 20, wherein the seed is treated with a neonicotinoid compound in an amount of from about 20 gm/1 00 kg of seed to about 300 gm/1 00 kg of seed.

22. The method according to any one of claims 7, 10, and 11, wherein the agronomic plant is selected from the group consisting of cereals, wheat, barley, rye, aits, rice, sorghum, beet, pear-like fruits, stone fruits, soft fruits, apple, pear, plum, peach, Japanese apricot, prune, almond, cherry, strawberry, raspberry, black berry, legumes, kidney bean, lentil, pea, soybean, oil plants, rape, mustard, poppy, olive, sunflower, coconut, castor-oil plant, cocoa bean, peanut, Cucurbitaceae, pumpkin, cucumber, melon, citrus, orange, lemon, grape fruit, mandarin, Watson pomelo, citrus natsudaidai, vegetables, lettuce, cabbage, celery cabbage, Chinese radish, carrot, onion, tomato, potato, green pepper, camphor trees, avocado, cinnamon, camphor, corn, tobacco, nuts, coffee, sugar cane, tea, grapevine, hop and banana.

23. The method according to any one of claims 7, 10, and 11, wherein the agronomic plant is selected from the group consisting of rice, wheat, barley, rye, corn, potato, carrot, sweet potato, sugar beet, bean, pea, chicory, lettuce, cabbage, cauliflower, broccoli, turnip, radish, spinach, asparagus, onion, garlic, eggplant, pepper, celery, canot, squash, pumpkin, zucchini, cucumber, apple, pear, quince, melon, plum, cherry, peach, nectarine, apricot, strawberry, grape, raspberry, blackberry, pineapple, avocado, papaya, mango, banana, soybean, tomato, sorghum and raspberries and banana.

24. The method according to any one of claims 7, 10, and 11, wherein the agronomic plant is selected from the group consisting of cotton, flax, hemp, jute, ramie, sisal, pine, oak, redwood, poplar, gum, ash, fir, birch, hemlock, larch, mahogany, ebony, ornamental shrubs, and ornamental trees.

25. The method according to any one of claims 7, 10, and 11, wherein the agronomic plant is selected from the group consisting of corn, cereals, barley, rye, rice, vegetables, clovers, legumes, beans, peas, alfalfa, sugar cane, sugar beets, tobacco, cotton, rapeseed (canola), sunflower, safflower, and sorghum.

26. The method according to claim 25, wherein the agronomic plant is corn.

27. The method according to claim 25, wherein the agronomic plant is a soybean plant.

28. The method according to any one of claims 7, 10, and 11, wherein the treatment of the seed of the plant comprises, in addition, treatment of the seed with a fungicide selected from the group consisting of mefenoxam, oxadixyl, tebuconazole, tetraconazole, simeconazole, fludioxonil, fluquinconazole, difenoconazole, captan, metalaxyl, carboxin, azoxystrobin, ipconazole, and thiram.

29. The method according to any one of claims 7, 10, and 11, wherein the seed possesses a transgenic event providing the plant with resistance to a herbicide and the treatment comprises foliar application of the herbicide.

30. The method according to claim 29, wherein the herbicide is selected from the group consisting of growth regulators, phenoxy acetic acids, phenoxy propionic acids, phenoxy butyric acids, benzoic acids, picolinic acid and related compounds, clopyralid, quinclorac, inhibitors of auxin transport, semicarbones, s-triazines, other triazines, substituted ureas, uracils, benzothiadiazoles, benzonitroles, phenylcarbamates, pyridazinones, phenypyriddazines, pigment inhibitors, pyridazinones, isoxazoles, growth inhibitors, mitotic disruptors, dinitroanilines, oxysulfurons, pyridines, amides, inhibitors of shoots of emerging seedlings, carbamothioates, inhibitors of roots only of seedlings, amides, phenylureas, inhibitors of roots and shoots of seedlings, chloroacetamides, inhibitors of aromatic amino acid synthesis, inhibitors of branched chain amino acid synthesis, sulfonylureas, midazolinones, triazolopyrimidines, tyrimidinyloxybenzoates, lipid biosynthesis inhibitors, aryoxyphenoxyproprionates, cyclohexanediones, inhibitors of cell wall biosynthesis, nitriles, benzamides, cell membrane disrupters, dilute sulfuric acid, monocarbamide dihydrogen sulfate, herbicidal oils, bipyridyliums, diphenylethers, oxidiazoles, N-phenylheterocycles, and inhibitors of glutamine synthetase.

31. The method according to claim 29, wherein the herbicide is selected from the group consisting of chlorimuron-ethyl, chloroacetic acid, chlorotoluron, chlorpropham, chlorsulfuron, chlorthal-dimethyl, chlorthiamid, cinmethylin, cinosulfuron, clethodim, clodinafop-propargyl, clomazone, clomeprop, clopyralid, cloransulam-methyl, cyanazine, cycloate, cyclosulfamuron, cycloxydim, cyhalofop-butyl, 2,4-D, daimuron, dalapon, dazomet, 2,4DB, desmedipham, desmetryn, dicamba, dichlobenil, dichlorprop, dichlorprop-P, diclofop-methyl, difenzoquat metilsulfate, diflufenican, dimefuron, dimepiperate, dimethachlor, dimethametryn, dimethenamid, dimethipin, dimethylarsinic acid, dinitramine, dinocap, dinoterb, diphenamid, diquat dibromide, dithiopyr, diuron, DNOC, EPTC, esprocarb, ethalfluralin, ethametsulfuron-methyl, ethofumesate, ethoxysulfuron, etobenzanid, fenoxaprop-P-ethyl, fenuron, ferrous sulfate, flamprop-M, flazasulfuron, fluazifop-butyl, fluazifop-P-butyl, fluchloralin, flumetsulam, flumiclorac-pentyl, flumioxazin, fluometuron, fluoroglycofen-ethyl, flupoxam, flupropanate, flupyrsulfuron-methyl-sodium, flurenol, fluridone, flurochloridone, fluroxypyr, flurtamone, fluthiacet-methyl, fomesafen, fosamine, glufosinate-ammonium, glyphosate, halosulfuron-methyl, haloxyfop, HC-252, hexazinone, imazamethabenz-methyl, imazamox, imazapyr, imazaquin, imazethapyr, imazosuluron, imidazilinone, indanofan, ioxynil, isoproturon, isouron, isoxaben, isoxaflutole, lactofen, lenacil, linuron, MCPA, MCPA-thioethyl, MCPB, mecoprop, mecoprop-P, mefenacet, metamitron, metazachlor, methabenzthiazuron, methylarsonic acid, methyldymron, methyl isothiocyanate, metobenzuron, metobromuron, metolachlor, metosulam, metoxuron, metribuzin, metsulfuron-methyl, molinate, monolinuron, naproanilide, napropamide, naptalam, neburon, nicosulfuron, nonanoic acid, norflurazon, oleic acid (fatty acids), orbencarb, oryzalin, oxadiargyl, oxadiazon, oxasulfuron, oxyfluorfen, paraquat dichloride, pebulate, pendimethalin, pentachlorophenol, pentanochlor, pentoxazone, petroleum oils, phenmedipham, picloram, piperophos, pretilachlor, primisulfuron-methyl, prodiamine, prometon, prometryn, propachlor, propanil, propaquizafop, propazine, propham, propisochlor, propyzamide, prosulfocarb, prosulfuron, pyraflufen-ethyl, pyrazolynate, pyrazosulfuron-ethyl, pyrazoxyfen, pyributicarb, pyridate, pyriminobac-methyl, pyrithiobac-sodium, quinclorac, quinmerac, quinoclamine, quizalofop, quizalofop-P, rimsulfuron, sethoxydim, siduron, simazine, simetryn, sodium chlorate, STS-system, sulcotrione, sulfentrazone, sulfometuron-methyl, sulfosulfuron, sulfuric acid, tar oils, 2,3,6-TBA, TCA-sodium, tebutam, tebuthiuron, terbacil, terbumeton, terbuthylazine, terbutryn, thenylchlor, thiazopyr, thifensulfuron-methyl, thiobencarb, tiocarbazil, tralkoxydim, tri-allate, triasulfuron, triaziflam, tribenuron-methyl, triclopyr, trietazine, trifluralin, triflusulfuron-methyl, vernolate, and mixtures thereof.

32. The method according to claim 29, wherein the herbicide is selected from the group consisting of glyphosate, glyfosinate, glufosinate, imidazilinone and STS system.

33. The method according to claim 32, wherein the herbicide comprises glyphosate.

34. The method according to claim 32, wherein the modified δ-endotoxin is selected from Cry3Bb 11231 and Cry3Bb 11098.

35. The method according to any one of claims 7, 10, and 11, wherein the seed is treated with a neonicotinoid compound which is a component of a controlled release coating.

36. A method of breeding a hybrid plant having increased yield and/or vigor from two parent plants, the method comprising:
treating the seeds of one or both of the parent plants with a neonicotinoid compound prior to planting the seeds, wherein the seed of one or both of the parent plants contain a foreign polynucleotide sequence encoding for the production of an insecticidal protein, or a foreign polynucleotide sequence which provides herbicide resistance, or both;
pollinating the female parent with pollen of the male parent; and
gathering the seed produced by the female parent plant.

37. The method according to claim 36, wherein the insecticidal protein protein comprises an insect toxin.

38. The method according to claim 37, wherein the insect toxin is a *Bacillus thuringiensis* delta-endotoxin.

39. The method according to claim 37, wherein the insect toxin is a modified *B. thuringiensis* delta-endotoxin of the type that is described in claim 14.

40. A method of increasing the yield and/or vigor of an agronomic plant that is grown from a seed that is planted in a location where treatment of the seed or the agronomic plant with an insecticide is not indicated, the method comprising treating a seed comprising a foreign polynucleotide sequence encoding for the production of an insecticidal protein, or a foreign polynucleotide sequence which provides herbicide resistance, or both, with a neonicotinoid compound and planting the treated seed in a location where treatment of the seed or the agronomic plant with an insecticide is not practiced.

41. A method of increasing the yield and/or vigor of an agronomic plant that is grown from a seed that is planted in a location having a level of infestation by an insect that is a pest for the agronomic plant and against which a neonicotinoid insecticide has insecticidal activity, the method comprising treating a seed comprising a foreign polynucleotide sequence encoding for the production of an insecticidal protein, or a foreign polynucleotide sequence which provides herbicide resistance, or both, with a neonicotinoid compound and planting the treated seed in a location where insecticide treatment of the seed or the agronomic plant is not practiced.

42. The method according to any one of claims 40 and 41, wherein planting the treated seed in a location where treatment of the seed or the agronomic plant with an insecticide is not practiced comprises planting the seed in a crop reporting district in which no insecticide was used on the crop during the previous year.

43. The method according to claim 42, wherein planting the treated seed in a location where treatment of the seed or the agronomic plant with an insecticide is not practiced comprises planting the seed in a crop reporting district in which no neonicotinoid insecticide was used on the crop during the previous year.

44. The method according to claim 40, wherein planting the treated seed in a location where treatment of the seed or the agronomic plant with an insecticide is not practiced comprises planting the seed in a county in which no insecticide was used on the crop during the previous year.

45. The method according to claim 44, wherein planting the treated seed in a location where treatment of the seed or the agronomic plant with an insecticide is not practiced comprises planting the seed in a county in which no neonicotinoid insecticide was used on the crop during the previous year.

46. A method of increasing the yield and/or vigor of an agronomic plant that is grown from a seed that is planted in a location having a level of infestation by an insect that is a pest for the agronomic plant and against which a neonicotinoid insecticide has insecticidal activity, the method comprising:
a. treating a seed comprising a foreign polynucleotide sequence encoding for the production of an insecticidal protein, or a foreign polynucleotide sequence which provides herbicide resistance, or both, with a neonicotinoid insecticide; and
b. planting the treated seed in a location having a level of insect infestation below that at which such insecticide treatment is indicated.

47. A seed that is treated by the method according to any one of claims 7, 10, and 11.

48. A method of increasing the yield and/or vigor of an agronomic plant that is grown from a seed comprising a foreign polynucleotide sequence encoding for the production of an insecticidal protein, or a foreign polynucleotide sequence which provides herbicide resistance, or both, the method comprising:
a. selecting a location in which the seed is to be planted where the level of insect pest infestation is below that at which treatment with an insecticide is indicated; and
b. carrying out an action that is selected from the group consisting of:
i. treating the seed with a neonicotinoid compound, and
ii. planting in the location a seed that has been treated with a neonicotinoid compound.

## Patentansprüche

1. Verfahren zum Erhöhen des Ertrags und/oder der Vitalität einer Ackerbaupflanze, welche aus einem Samen gewachsen ist, welcher eine fremde Polynukleotidsequenz, welche für die Bildung eines insektiziden Proteins kodiert, oder eine fremde Polynukleotidsequenz, welche eine Herbizidresistenz zur Verfügung stellt, oder beide umfasst, wobei das Verfahren umfasst:
a. Bestimmen, ob der Samen an einem Ort zu pflanzen ist, welcher ein Niveau an Insektenschädlingsbefall aufweist, welches eine Behandlung mit einem Insektizid indizieren würde; und, wenn solche Behandlung nicht indiziert ist,
b. Ausführen einer Tätigkeit, welche ausgewählt ist aus der Gruppe, bestehend aus:
i. Behandlung des Samens mit einer Neonicotinoidverbindung, und
ii. Pflanzen an dem Ort eines Samens, welcher mit einer Neonicotinoidverbindung behandelt worden ist.

2. Verfahren zum Erhöhen des Ertrags und/oder der Vitalität einer Ackerbaupflanze, welche aus einem Samen gewachsen ist, welcher eine fremde Polynukleotidsequenz, welche für die Bildung eines insektiziden Proteins kodiert, oder eine fremde Polynukleotidsequenz, welche eine Herbizidresistenz zur Verfügung stellt, oder beide umfasst, wobei der Samen in einem Ort gepflanzt wird, welcher ein Niveau an Befall durch ein Insekt aufweist, welches ein Schädling für die Ackerbaupflanze ist und gegen welches eine Neonicotinoidverbindung eine insektizide Wirksamkeit aufweist, wobei das Verfahren umfasst:
a. Bestimmen, ob das Niveau an Befall durch das Insekt, welches ein Schädling für die Ackerbaupflanze ist, eine Behandlung mit einem Insektizid indiziert; und, wenn die Behandlung nicht indiziert ist,
b. Behandlung des Samens mit einer Neonicotinoidverbindung.

3. Verfahren gemäß Anspruch 2, umfassend:
a. Vergleichen eines Niveaus an Befall durch das Insekt an dem Ort mit einem Niveau an Befall durch das Insekt, bei dem eine Behandlung mit einem Insektizid indiziert sein würde; und, wenn das Niveau an Befall des Ortes durch das Insekt niedriger ist als das Niveau an Befall, bei dem eine Behandlung indiziert ist,
b. Behandlung des Samens mit einer Neonicotinoidverbindung.

4. Verfahren gemäß Anspruch 2, umfassend:
a. Bestimmen des Niveaus an Befall durch das Insekt an dem Ort;
b. Bestimmen eines Niveaus an Befall durch das Insekt, bei dem eine Behandlung mit einem Insektizid indiziert sein würde;
c. Vergleichen des Niveaus an Befall durch das Insekt an dem Ort mit dem Niveau an Befall durch das Insekt, bei dem eine Behandlung mit einem Insektizid indiziert sein würde; und wenn das Niveau an Befall des Orts durch das Insekt niedriger ist als das Niveau an Befall, bei dem eine Behandlung indiziert ist,
d. Behandlung des Samens mit einer Neonicotinoidverbindung.

5. Verfahren gemäß Anspruch 2, umfassend:
a. Bestimmen, ob das Niveau an Befall durch das Insekt, welches ein Schädling für die Ackerbaupflanze ist, indiziert, dass eine Behandlung mit einem Insektizid benötigt wird; und, wenn eine Behandlung nicht indiziert ist,
b. Pflanzen an dem Ort einen Samen, welcher mit einer Neonicotinoidverbindung behandelt worden ist.

6. Verfahren gemäß Anspruch 2, umfassend:
a. Bestimmen des Niveaus an Befall durch das Insekt an dem Ort;
b. Bestimmen eines Niveaus an Befall durch das Insekt, bei dem eine Behandlung mit einem Insektizid indiziert sein würde;
c. Vergleichen des Niveaus an Befall durch das Insekt an dem Ort mit dem Niveau an Befall durch das Insekt, bei dem eine Behandlung mit einem Insektizid indiziert sein würde; und, wenn das Niveau an Befall des Orts durch das Insekt niedriger ist als das Niveaus an Befall, bei dem eine Behandlung indiziert ist,
d. Pflanzen des Samens, nachdem er mit einer Neonicotinoidverbindung behandelt worden ist.

7. Verfahren gemäß irgendeinem der Ansprüche 1 bis 6, worin die Neonicotinoidverbindung eine Verbindung mit der Formel umfasst: 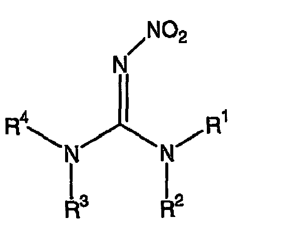 worin:
R¹ Wasserstoff oder C₁ - C₄ Alkyl darstellt;
R² Wasserstoff, C₁ - C₄ Alkyl, C₁ - C₄ Alkenyl, C₁ - C₄ Alkinyl, Hydroxyl, Amino, Aryl, Thio, Alkylaryl, Arylalkyl oder einen C₄ - C₆-Heterocyclus darstellt;
R³ Wasserstoff, C₁ - C₄ Alkyl, C₁ - C₄ Alkenyl, C₁ - C₄ Alkinyl, Hydroxyl, Amino, Aryl, Thio, Alkylaryl, Arylalkyl oder einen 4 - 6-gliedrigen Heterocyclus darstellt; oder derart ist, dass R² und R³ verbunden sein können, um einen 4 - 6-gliedrigen Heterocyclus zu bilden, welcher wahlweise substituiert oder unsubstituiert sein kann; und
R⁴, wenn vorhanden, Wasserstoff, C₁- C₄ Alkyl, C₁- C₄ Alkenyl, C₁- C₄ Alkinyl, Hydroxyl, Amino, Aryl, Thio, Alkylaryl, Arylalkyl, C₄ - C₆ Heterocyclus, Halothiazoylalkyl oder Furylalkyl darstellt.

8. Verfahren gemäß irgendeinem der Ansprüche 1 bis 6, worin die Neonicotinoidverbindung eine Verbindung mit der Formel umfasst: 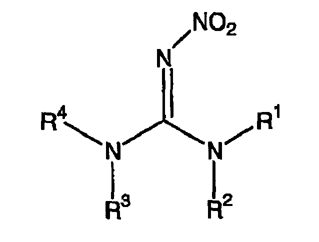 worin:
R¹ Wasserstoff oder Methyl darstellt;
R² Wasserstoff oder Methyl darstellt;
R³ Wasserstoff, Methyl oder eine Form darstellt, welche mit R² verbunden sein kann, um einen Oxadiazinring oder einen 2,3-Diazolring zu bilden; und
R⁴, wenn vorhanden, Chlorthiazoylmethyl oder Furylmethyl darstellt.

9. Verfahren gemäß irgendeinem der Ansprüche 1 bis 6, worin die Neonicotinoidverbindung ausgewählt ist aus der Gruppe, bestehend aus Acetamiprid, Imidacloprid, Thiamethoxam, Clothianidin, Dinotefuran, Nitenpyram, Flonicamid, Nithiazin und Thiacloprid.

10. Verfahren gemäß Anspruch 9, worin die Neonicotinoidverbindung ausgewählt ist aus der Gruppe, bestehend aus Acetamiprid, Imidacloprid, Thiamethoxam, Clothianidin, Dinotefuran und Nitenpyram.

11. Verfahren gemäß irgendeinem der Ansprüche 1 - 6, worin der Samen eine fremde Polynukleotidsequenz umfasst, welche für ein modifiziertes *B. thuringiensis* δ-Endotoxin kodiert.

12. Verfahren gemäß Anspruch 11, worin das modifizierte δ-Endotoxin eines ist, welches durch die fremde *B. thuringiensis* Gensequenz exprimiert wird, welche in einem Stamm vorhanden ist, welcher ausgewählt ist aus der Gruppe, bestehend aus Stämmen mit Hinterlegungsnummern NRRL B-21579, NRRL B-21580, NRRL B-21581, NRRL B-21635 und NRRL B-21636.

13. Verfahren gemäß Anspruch 11, worin das modifizierte δ-Endotoxin eines ist, welches durch die fremde *B. thuringiensis* Gensequenz exprimiert wird, welche in einem Stamm vorhanden ist, welcher ausgewählt ist aus der Gruppe, bestehend aus Stämmen mit Hinterlegungsnummern NRRL B-21744, NRRL B-21745, NRRL B-21746, NRRL B-21747, NRRL B-21748, NRRL B-21749, NRRL B-21750, NRRL B-21751, NRRL B-21752, NRRL B-21753, NRRL B-21754, NRRL B-21755, NRRL B-21756, NRRL B-21757, NRRL B-21758, NRRL B-21759, NRRL B-21760, NRRL B-21761, NRRL B-21762, NRRL B-21763, NRRL B-21764, NRRL B-21765, NRRL B-21766, NRRL B-21767, NRRL B-21768, NRRL B-21769, NRRL B-21770, NRRL B-21771, NRRL B-21772, NRRL B-21773, NRRL B-21774, NRRL B-21775, NRRL B-21776, NRRL B-21777, NRRL B-21778 und NRRL B-21779.

14. Verfahren gemäß Anspruch 11, worin das modifizierte ö-Endotoxin ausgewählt ist aus der Gruppe, bestehend aus Cry3Bb.11230, Cry3Bb.11231, Cry3Bb.11232, Cry3Bb.11233, Cry3Bb.11234, Cry3Bb.11235, Cry3Bb.11236, Cry3Bb.11237, Cry3Bb.11238, Cry3Bb.11239, Cry3Bb.11241, Cry3Bb.11242, Cry3Bb.11098, einem binären insektiziden Protein CryET33 und CryET34, einem binären insektiziden Protein CryET80 und CryET76, einem binären insektiziden Protein tlC100 und tlC101 und einem binären insektiziden Protein PS149B1.

15. Verfahren gemäß irgendeinem der Ansprüche 1 bis 6, aufweisend den zusätzlichen Schritt der Behandlung des Bodens, in den der Samen eingepflanzt wird, mit der Neonicotinoidverbindung.

16. Verfahren gemäß irgendeinem der Ansprüche 1 bis 6, aufweisend den zusätzlichen Schritt des Kultivierens des Samens und der Pflanze, welche aus dem Samen wächst, gemäß einer nicht pflügenden Praxis.

17. Verfahren gemäß Anspruch 1, worin Bestimmen, ob der Samen an einem Ort zu pflanzen ist, welcher ein Niveau an Insektenschädlingsbefall, welches den Bedarf zur Behandlung mit einem Insektizid indizieren würde, Bestimmen umfasst, ob der Samen in einem Ort zu pflanzen ist, welcher ein Niveau an Insektenschädlingsbefall aufweist, welches den Bedarf zur Behandlung mit einem Neonicotinoidinsektizid indizieren würde.

18. Verfahren gemäß irgendeinem der Ansprüche 7, 10 und 11, worin der Samen mit einer Menge der Neonicotinoidverbindung von etwa 0,1 g/100 kg Samen bis etwa 1.000 g/100 kg Samen behandelt wird.

19. Verfahren gemäß Anspruch 18, worin der Samen mit einer Neonicotinoidverbindung in einer Menge von etwa 5 g/100 kg Samen bis etwa 600 g/100 kg Samen behandelt wird.

20. Verfahren gemäß Anspruch 19, worin der Samen mit einer Neonicotinoidverbindung in einer Menge von etwa 10 g/100 kg Samen bis etwa 400 g/100 kg Samen behandelt wird.

21. Verfahren gemäß Anspruch 20, worin der Samen mit einer Neonicotinoidverbindung in einer Menge von etwa 20 g/100 kg Samen bis etwa 300 g/100 kg Samen behandelt wird.

22. Verfahren gemäß irgendeinem der Ansprüche 7, 10 und 11, worin die Ackerbaupflanze ausgewählt ist aus der Gruppe, bestehend aus Getreiden, Weizen, Gerste, Roggen, Werder, Reis, Hirse, Rübe, birnenähnlichen Früchten, Steinfrüchten, Beerenobst, Apfel, Birne, Pflaume, Pfirsich, Japanischer Aprikose, Backpflaume, Mandel, Kirsche, Erdbeere, Himbeere, Brombeere, Hülsenfrüchten, Kidneybohne, Linse, Erbse, Sojabohne, Ölpflanzen, Raps, Senf, Mohnblume, Olive, Sonnenblume, Kokosnuss, Rizinus, Kakaobohne, Erdnuss, Kürbisgewächsen, Kürbis, Gurke, Melone, Zitrusgewächsen, Orange, Zitrone, Grapefruit, Mandarine, Watson-Pampelmuse, Amanatsu, Gemüsen, Salat, Kohl, Selleriekohl, Chinesischer Rettich, Karotte, Zwiebel, Tomate, Kartoffel, grüner Pfeffer, Kampferbäumen, Avocado, Zimt, Kampfer, Mais, Tabak, Nüssen, Kaffee, Zuckerrohr, Tee, Weintraube, Hopfen und Banane.

23. Verfahren gemäß irgendeinem der Ansprüche 7, 10 und 11, worin die Ackerbaupflanze ausgewählt ist aus der Gruppe, bestehend aus Reis, Weizen, Gerste, Roggen, Mais, Kartoffel, Karotte, Süßkartoffel, Zuckerrübe, Bohne, Erbse, Chicoree, Salat, Kohl, Blumenkohl, Brokkoli, Rübe, Rettich, Spinat, Spargel, Zwiebel, Knoblauch, Aubergine, Pfeffer, Sellerie, Mohrrübe, Kürbispflanze, Kürbis, Zucchini, Gurke, Apfel, Birne, Quitte, Melone, Pflaume, Kirsche, Pfirsich, Nektarine, Aprikose, Erdbeere, Weintraube, Himbeere, Brombeere, Ananas, Avocado, Papaya, Mango, Banane, Sojabohne, Tomate, Hirse und Himbeeren und Banane.

24. Verfahren gemäß irgendeinem der Ansprüche 7, 10 und 11, worin die Ackerbaupflanze ausgewählt ist aus der Gruppe, bestehend aus Baumwolle, Flachs, Hanf, Jute, Ramie, Sisal, Kiefer, Eiche, Mammutbaum, Pappel, Gummibaum bzw. Eukalyptus, Esche, Fichte bzw. Tanne, Birke, Schierling, Lärche, Mahagonibaum, Ebenholgewächs, Ziersträuchern und Zierbäumen.

25. Verfahren gemäß irgendeinem der Ansprüche 7, 10 und 11, worin die Ackerbaupflanze ausgewählt ist aus der Gruppe, bestehend aus Mais, Getreiden, Gerste, Roggen, Reis, Gemüsen, Klee, Hülsenfrüchten, Bohnen, Erbsen, Luzerne, Zuckerrohr, Zuckerrüben, Tabak, Baumwolle, Rübsamen (Raps), Sonnenblume, Färberdistel und Hirse.

26. Verfahren gemäß Anspruch 25, worin die Ackerbaupflanze Mais darstellt.

27. Verfahren gemäß Anspruch 25, worin die Ackerbaupflanze eine Sojabohnenpflanze darstellt.

28. Verfahren gemäß irgendeinem der Ansprüche 7, 10 und 11, worin die Behandlung des Samens der Pflanze zusätzlich eine Behandlung des Samens mit einem Fungizid umfasst, welches ausgewählt ist aus der Gruppe, bestehend aus Mefenoxam, Oxadixyl, Tebuconazol, Tetraconazol, Simeconazol, Fludioxonil, Fluquinconazol, Difenoconazol, Captan, Metalaxyl, Carboxin, Azoxystrobin, Ipconazol und Thiram.

29. Verfahren gemäß irgendeinem der Ansprüche 7, 10 und 11, worin der Samen eine transgene Begebenheit besitzt, welche die Pflanze mit Resistenz zu einem Herbizid zur Verfügung stellt, und die Behandlung eine Blattanwendung des Herbizids umfasst.

30. Verfahren gemäß Anspruch 29, worin das Herbizid ausgewählt ist aus der Gruppe, bestehend aus Wachstumsregulatoren, Phenoxyessigsäuren, Phenoxypropionsäuren, Phenoxybuttersäuren, Benzoesäuren, Picolinsäuren und verwandte Verbindungen, Copyralid, Quinclorac, Inhibitoren vom Auxintransport, Semicarbonen, s-Triazinen, anderen Triazinen, substituierten Harnstoffen, Uracilen, Benzothiadiazolen, Benzonitrolen, Phenylcarbamaten, Pyridazinonen, Phenypyriddazinen, Pigmentinhibitoren, Pyridazinonen, Isoxazolen, Wachstumsinhibitoren, Mitoseunterbrechern, Dinitroanilinen, Oxysulfuronen, Pyridinen, Amiden, Inhibitoren von Schösslingen aus sprießenden Sämlingen, Carbamothioaten, Inhibitoren von Wurzeln nur aus Sämlingen, Amiden, Phenylharnstoffen, Inhibitoren von Wurzeln und Schösslingen aus Sämlingen, Chloracetamiden, Inhibitoren der Synthese einer aromatischen Aminosäure, Inhibitoren der Synthese einer verzweigten Aminosäure, Sulfonylharnstoffen, Midazolinonen, Triazolopyrimidinen, Tyrimidinyloxybenzoaten, Lipidbiosyntheseinhibitoren, Aryoxyphenoxypropionaten, Cyclohexandionen, Inhibitoren der Zellwandbiosynthese, Nitrilen, Benzamiden, Zellmembranunterbrechern, verdünnter Schwefelsäure, Monocarbamiddihydrogensulfat, Herbizidölen, Bipyridyliumen, Diphenylether, Oxidiazolen, N-Phenylheterocyclen und Inhibitoren der Glutaminsynthetase.

31. Verfahren gemäß Anspruch 29, worin das Herbizid ausgewählt ist aus der Gruppe, bestehend aus Chlorimuron-ethyl, Chloressigsäure, Chlortoluron, Chlorpropham, Chlorsulfuron, Chlorthal-dimethyl, Chlorthiamid, Cinmethylin, Cinosulfuron, Clethodim, Clodinafop-propargyl, Clomazon, Clomeprop, Clopyralid, Cloransulam-methyl, Cyanazin, Cycloat, Cyclosulfamuron, Cycloxydim, Cyhalofop-butyl, 2,4-D, Daimuron, Dalapon, Dazomet, 2,4DB, Desmedipham, Desmetryn, Dicamba, Dichlobenil, Dichlorprop, Dichlorprop-P, Diclofop-methyl, Difenzoquat-metilsulfat, Diflufenican, Dimefuron, Dimepiperat, Dimethachlor, Dimethametryn, Dimethenamid, Dimethipin, Dimethylarsinsäure, Dinitramin, Dinocap, Dinoterb, Diphenamid, Diquatdibromid, Dithiopyr, Diuron, DNOC, EPTC, Esprocarb, Ethalfluralin, Ethametsulfuron-methyl, Ethofumesat, Ethoxysulfuron, Etobenzanid, Fenoxaprop-P-ethyl, Fenuron, Eisensulfat, Flamprop-M, Flazasulfuron, Fluazifop-butyl, Fluazifop-P-butyl, Fluchloralin, Flumetsulam, Flumiclorac-pentyl, Flumioxazin, Fluometuron, Fluorglycofenethyl, Flupoxam, Flupropanat, Flupyrsulfuron-methyl-natrium, Flurenol, Fluridon, Flurochloridon, Fluroxypyr, Flurtamon, Fluthiacet-methyl, Fomesafen, Fosamin, Glufosinat-ammonium, Glyphosat, Halosulfuron-methyl, Haloxyfop, HC-252, Hexazinon, Imazamethabenz-methyl, Imazamox, Imazapyr, Imazaquin, Imazethapyr, Imazosuluron, Imidazilinon, Indanofan, loxynil, Isoproturon, Isouron, Isoxaben, Isoxaflutol, Lactofen, Lenacil, Linuron, MCPA, MCPA-Thioethyl, MCPB, Mecoprop, Mecoprop-P, Mefenacet, Metamitron, Metazachlor, Methabenzthiazuron, Methylarsonsäure, Methyldymron, Methylisothiocyanat, Metobenzuron, Metobromuron, Metolachlor, Metosulam, Metoxuron, Metribuzin, Metsulfuron-methyl, Molinat, Monolinuron, Naproanilid, Napropamid, Naptalam, Neburon, Nicosulfuron, Nonansäure, Norflurazon, Ölsäure (Fettsäuren), Orbencarb, Oryzalin, Oxadiargyl, Oxadiazon, Oxasulfuron, Oxyfluorfen, Paraquatdichlorid, Pebulat, Pendimethalin, Pentachlorphenol, Pentanochlor, Pentoxazon, Mineralöle, Phenmedipham, Picloram, Piperophos, Pretilachlor, Primisulfuron-methyl, Prodiamin, Prometon, Prometryn, Propachlor, Propanil, Propaquizafop, Propazin, Propham, Propisochlor, Propyzamid, Prosulfocarb, Prosulfuron, Pyraflufen-ethyl, Pyrazolynat, Pyrazosulfuron-ethyl, Pyrazoxyfen, Pyributicarb, Pyridat, Pyriminobac-methyl, Pyrithiobac-natrium, Quinclorac, Quinmerac, Quinoclamin, Quizalofop, Quizalofop-P, Rimsulfuron, Sethoxydim, Siduron, Simazin, Simetryn, Natriumchlorat, STS-System, Sulcotrion, Sulfentrazon, Sulfometuron-methyl, Sulfosulfuron, Schwefelsäure, Teeröle, 2,3,6-TBA, TCA-natrium, Tebutam, Tebuthiuron, Terbacil, Terbumeton, Terbuthylazin, Terbutryn, Thenylchlor, Thiazopyr, Thifensulfuron-methyl, Thiobencarb, Tiocarbazil, Tralkoxydim, Tri-allat, Triasulfuron, Triaziflam, Tribenuron-methyl, Triclopyr, Trietazin, Trifluralin, Triflusulfuron-methyl, Vernolat und deren Mischungen.

32. Verfahren gemäß Anspruch 29, worin das Herbizid ausgewählt ist aus der Gruppe, bestehend aus Glyphosat, Glyfosinat, Glufosinat, Imidazilinon und STS-System.

33. Verfahren gemäß Anspruch 32, worin das Herbizid Glyphosat umfasst.

34. Verfahren gemäß Anspruch 32, worin das modifizierte δ-Endotoxin ausgewählt ist aus Cry3Bb 11231 und Cry3Bb 11098.

35. Verfahren gemäß irgendeinem der Ansprüche 7,10 und 11, worin der Samen mit einer Neonicotinoidverbindung behandelt wird, welche eine Komponente einer Beschichtung zur kontrollierten Freigabe darstellt.

36. Verfahren zum Züchten einer hybriden Pflanze mit erhöhtem Ertrag und/oder Vitalität von zwei Elternpflanzen, wobei das Verfahren umfasst:
Behandeln der Samen von einer oder beiden der Elternpflanzen mit einer Neonicotinoidverbindung vor dem Pflanzen der Samen, worin die Samen von einer oder beiden der Elternpflanzen eine fremde Polynukleotidsequenz, welche für die Bildung eines insektiziden Proteins kodiert, oder eine fremde Polynukleotidsequenz, welche eine Herbizidresistenz zur Verfügung stellt, oder beide enthalten;
Bestäuben des weiblichen Elternteils mit Pollen des männlichen Elternteils; und
Ernten des von der weiblichen Elternpflanze gebildeten Samens.

37. Verfahren gemäß Anspruch 36, worin das insektizide Protein ein Insektentoxin umfasst.

38. Verfahren gemäß Anspruch 37, worin das Insektentoxin ein *Bacillus thuringiensis* delta-Endotoxin darstellt.

39. Verfahren gemäß Anspruch 37, worin das Insektentoxin ein modifiziertes *B. thuringiensis* delta-Endotoxin des Typs darstellt, welches in Anspruch 14 beschrieben ist.

40. Verfahren zum Erhöhen des Ertrags und/oder der Vitalität einer Ackerbaupflanze, welche aus einem Samen gewachsen ist, welcher an einem Ort gepflanzt ist, an dem eine Behandlung des Samen oder der Ackerbaupflanze mit einem Insektizid nicht indiziert ist, wobei das Verfahren Behandlung eines Samens, welcher eine fremde Polynukleotidsequenz, welche für die Bildung eines insektiziden Proteins kodiert, oder eine fremde Polynukleotidsequenz, welche Herbizidresistenz zur Verfügung stellt, oder beide umfasst, mit einer Neonicotinoidverbindung, und Pflanzen des behandelten Samens an einem Ort umfasst, an dem eine Behandlung des Samens oder der Ackerbaupflanze mit einem Insektizid nicht praktiziert wird.

41. Verfahren zum Erhöhen des Ertrags und/oder der Vitalität einer Ackerbaupflanze, welche aus einem Samen gewachsen ist, welcher an einem Ort gepflanzt ist, welcher ein Niveau an Befall durch ein Insekt aufweist, welches ein Schädling für die Ackerbaupflanze ist und gegen welches ein Neonicotinoidinsektizid eine insektizide Wirksamkeit aufweist, wobei das Verfahren Behandlung eines Samens, welcher eine fremde Polynukleotidsequenz, welche für die Bildung eines insektiziden Proteins kodiert, oder eine fremde Polynukleotidsequenz, welche eine Herbizidresistenz zur Verfügung stellt, oder beide umfasst, mit einer Neonicotinoidverbindung und Pflanzen des behandelten Samens an einem Ort umfasst, an dem eine Insektizidbehandlung des Samens oder der Ackerbaupflanze nicht praktiziert wird.

42. Verfahren gemäß einem der Ansprüche 40 und 41, worin Pflanzen des behandelten Samens an einem Ort, an dem eine Behandlung des Samens oder der Ackerbaupflanze mit einem Insektizid nicht praktiziert wird, Pflanzen des Samens in einem für eine Saat gemeldeten Gebiet umfasst, in dem kein Insektizid auf die Saat während des vorangehenden Jahrs angewendet wurde.

43. Verfahren gemäß Anspruch 42, worin Pflanzen des behandelten Samens an einem Ort, an dem eine Behandlung des Samens oder der Ackerbaupflanze mit einem Insektizid nicht praktiziert wird, Pflanzen des Samens in einem für eine Saat gemeldeten Gebiet umfasst, in dem kein Neonicotinoidinsektizid auf die Saat während des vorangehenden Jahrs angewendet wurde.

44. Verfahren gemäß Anspruch 40, worin Pflanzen des behandelten Samens an einem Ort, an dem eine Behandlung des Samens oder der Ackerbaupflanze mit einem Insektizid nicht praktiziert wird, Pflanzen des Samens in einem Bezirk umfasst, in dem kein Insektizid auf die Saat während des vorangehenden Jahrs angewendet wurde.

45. Verfahren gemäß Anspruch 44, worin Pflanzen des behandelten Samens an einem Ort, an dem eine Behandlung des Samens oder der Ackerbaupflanze mit einem Insektizid nicht praktiziert wird, Pflanzen des Samens in einem Bezirk umfasst, in dem kein Neonicotinoidinsektizid auf die Saat während des vorangehenden Jahrs angewendet wurde.

46. Verfahren zum Erhöhen des Ertrags und/oder der Vitalität einer Ackerbaupflanze, welche aus einem Samen gewachsen ist, welcher an einem Ort gepflanzt ist, welcher ein Niveau an Befall durch ein Insekt aufweist, welches ein Schädling für die Ackerbaupflanze ist und gegen welches ein Neonicotinoidinsektizid eine insektizide Wirksamkeit aufweist, wobei das Verfahren umfasst:
a. Behandlung eines Samens, welcher eine fremde Polynukleotidsequenz, welche für die Bildung eines insektiziden Proteins kodiert, oder eine fremde Polynukleotidsequenz, welche Herbizidresistenz zur Verfügung stellt, oder beide umfasst, mit einem Neonicotinoidinsektizid; und
b. Pflanzen des behandelten Samens an einem Ort, welcher ein Niveau an Insektenbefall aufweist, welches unterhalb von dem liegt, bei dem eine solche Insektizidbehandlung indiziert ist.

47. Samen, welcher durch das Verfahren gemäß irgendeinem der Ansprüche 7, 10 und 11 behandelt ist.

48. Verfahren zum Erhöhen des Ertrags und/oder der Vitalität einer Ackerbaupflanze, welche aus einem Samen gewachsen ist, welcher eine fremde Polynukleotidsequenz, welche für die Bildung eines insektiziden Proteins kodiert, oder eine fremde Polynukleotidsequenz, welche Herbizidresistenz zur Verfügung stellt, oder beide umfasst, wobei das Verfahren umfasst:
a. Auswählen eines Orts, an dem der Samen zu pflanzen ist, an dem das Niveau an Insektenschädlingsbefall unterhalb von dem liegt, bei dem eine Behandlung mit einem Insektizid indiziert ist; und
b. Durchführen einer Tätigkeit, welche ausgewählt ist aus der Gruppe, bestehend aus:
i. Behandlung des Samens mit einer Neonicotinoidverbindung, und
ii. Pflanzen an dem Ort einen Samen, welcher mit einer Neonicotinoidverbindung behandelt worden ist.

## Revendications

1. Procédé d'augmentation du rendement et/ou de la vigueur d'une plante agronomique qui est cultivée à partir d'une graine comprenant une séquence polynucléotidique étrangère codant pour la production d'une protéine insecticide, ou d'une séquence polynucléotidique étrangère qui fournit la résistance aux herbicides, ou les deux, le procédé comprenant :
a. la détermination du fait ou non que la graine doit être plantée dans un emplacement ayant un niveau d'infestation des ravageurs insectes qui indiquerait le traitement avec un insecticide ; et, si un tel traitement n'est pas indiqué,
b. la conduite d'une action qui est choisie parmi le groupe constitué :
i. du traitement de la graine avec un composé de type néonicotinoïde, et
ii. de la plantation au niveau du site d'une graine qui a été traitée avec un composé de type néonicotinoïde.

2. Procédé d'augmentation du rendement et/ou de la vigueur d'une plante agronomique qui est cultivée à partir d'une graine comprenant une séquence polynucléotidique étrangère codant pour la production d'une protéine insecticide, ou d'une séquence polynucléotidique étrangère qui fournit la résistance aux herbicides, ou les deux, où la graine est plantée au niveau d'un site ayant un niveau d'infestation par un insecte qui est un ravageur de la plante agronomique et contre lequel un composé de type néonicotinoïde possède une activité insecticide, le procédé comprenant :
a. la détermination du fait ou non que le niveau d'infestation par l'insecte qui est un ravageur pour la plante agronomique indique le traitement avec un insecticide ; et, si le traitement n'est pas indiqué,
b. le traitement de la graine avec un composé de type néonicotinoïde.

3. Le procédé selon la revendication 2, comprenant :
a. la comparaison d'un niveau d'infestation par l'insecte au site du niveau d'infestation par l'insecte auquel le traitement avec un insecticide serait indiqué ; et, si le niveau d'infestation du site par l'insecte est inférieur au niveau d'infestation auquel le traitement est indiqué,
b. le traitement de la graine avec un composé de type néonicotinoïde.

4. Procédé selon la revendication 2, comprenant :
a. la détermination du niveau d'infestation par l'insecte au niveau du site ;
b. la détermination d'un niveau d'infestation par l'insecte auquel le traitement avec un insecticide serait indiqué ;
c. la comparaison du niveau d'infestation par l'insecte au niveau du site avec le niveau d'infestation par l'insecte auquel le traitement avec un insecticide serait indiqué ; et, si le niveau d'infestation du site par l'insecte est inférieur au niveau d'infestation auquel le traitement est indiqué,
d. le traitement de la graine avec un composé de type néonicotinoïde.

5. Procédé selon la revendication 2, comprenant :
a. la détermination du fait ou non que le niveau d'infestation par l'insecte qui est un ravageur de la plante agronomique indique que le traitement avec un insecticide est requis ; et, si le traitement n'est pas indiqué,
b. la plantation au niveau du site d'une graine qui a été traitée avec un composé de type néonicotinoïde.

6. Procédé selon la revendication 2, comprenant :
a. la détermination du niveau d'infestation par l'insecte au niveau du site ;
b. la détermination d'un niveau d'infestation par l'insecte auquel le traitement avec un insecticide serait indiqué ;
c. la comparaison du niveau d'infestation par l'insecte au niveau du site avec le niveau d'infestation par l'insecte auquel le traitement avec un insecticide serait indiqué ; et, si le niveau d'infestation du site par l'insecte est inférieur au niveau d'infestation auquel le traitement est indiqué,
d. la plantation de la graine après qu'elle ait été traitée avec un composé de type néonicotinoïde.

7. Procédé selon l'une quelconque des revendications 1 à 6, dans lequel le composé de type néonicotinoïde comprend un composé de formule : 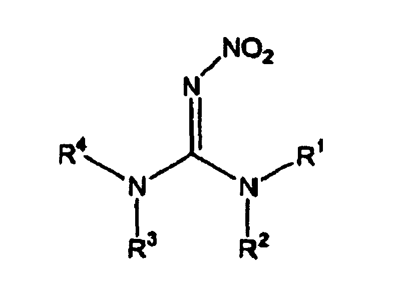 où
R¹ est un atome d'hydrogène, ou un groupe alkyle en C₁-C₄;
R² est un atome hydrogène, un groupe alkyle en C₁-C₄, alcényle en C₁-C₄, alcynyle en C₁-C₄, hydroxyle, amino, aryle, thio, alkylaryle, arylalkyle, ou hétérocyclique en C₄-C₆ ;
R³ est un atome d'hydrogène, un groupe alkyle en C₁-C₄, alcényle en C₁-C₄, alcynyle en C₁-C₄, hydroxyle, amino, aryle, thio, alkylaryle, arylalkyle, ou hétérocyclique à 4 à 6 chaînons ; ou est tel que R² et R³ peuvent se joindre pour former un groupe hétérocyclique à 4 à 6 chaînons, qui peut être éventuellement substitué ou non substitué ; et
R ⁴ s'il est présent, est un atome d'hydrogène, un groupe alkyle en C₁-C₄, alcényle en C₁-C₄, alcynyle en C₁-C₄, hydroxyle, amino, aryle, thio, alkylaryle, arylalkyle, hétérocyclique en C₄-C₆, halogénothiazoylalkyle, ou furylalkyle.

8. Procédé selon l'une quelconque des revendications 1 à 6, dans lequel le composé de type néonicotinoïde comprend un composé de formule : 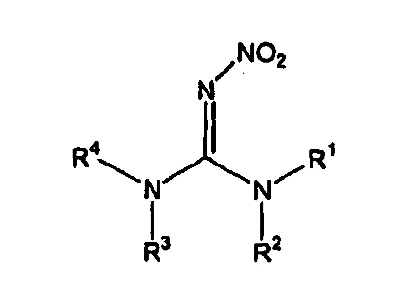 où :
R¹ est un atome d'hydrogène, ou un groupe méthyle ;
R² est un atome d'hydrogène, ou un groupe méthyle ;
R³ est un atome d'hydrogène, un groupe méthyle, ou d'une forme qui peut se joindre à R² pour former un cycle oxadiazine ou un cycle 2,3-diazol ; et
R⁴, s'il est présent, est un groupe chlorothiazoylméthyle, ou furylméthyle.

9. Procédé selon l'une quelconque des revendications 1 à 6, dans lequel le composé de type néonicotinoïde est choisi parmi le groupe constitué de l'acétamipride, l'imidaclopride, du thiaméthoxame, de la clothianidine, du dinotéfurane, du nitenpyrame, du flonicamide, de la nithiazine et du thiaclopride.

10. Procédé selon la revendication 9, dans lequel le composé de type néonicotinoïde est choisi parmi le groupe constitué de l'acétamipride, de l'imidaclopride, du thiaméthoxame, de la clothianidine, du dinotéfurane et du nitenpyrame.

11. Procédé selon l'une quelconque des revendications 1 à 6, dans lequel la graine comprend une séquence polynucléotidique étrangère codant une δ-endotoxine modifiée de *B. thuringiensis.*

12. Procédé selon la revendication 11, dans lequel la δ-endotoxine modifiée est une qui est exprimée par la séquence de gène étrangère de *B*. *thuringiensis* qui est présente dans une souche choisie parmi le groupe constitué des souches ayant les numéros de dépôt NRRL B-21579, NRRL B-21580, NRRL B-21581, NRRL B-21635, et NRRL B-21636.

13. Procédé selon la revendication 11, dans lequel la δ-endotoxine modifiée est une qui est exprimée par la séquence de gène étrangère de *B*. *thuringiensis* qui est présente dans une souche choisie parmi le groupe constituée des souches ayant les numéros de dépôt NRRL B-21744, NRRL B-21745, NRRL B-21746, NRRL B-21747, NRRL B-21748, NRRL B-21749, NRRL B-21750, NRRL B-21751, NRRL B-21752, NRRL B-21753, NRRL B-21754, NRRL B-21755, NRRL B-21756, NRRL B-21757, NRRL B-21758, NRRL B-21759, NRRL B-21760, NRRL B-21761, NRRL B-21762, NRRL B-21763, NRRL B-21764, NRRL B-21765, NRRL B-21766, NRRL B-21767, NRRL B-21768, NRRL B-21769, NRRL B-21770, NRRL B-21771, NRRL B-21772, NRRL B-21773, NRRL B-21774, NRRL B-21775, NRRL B-21776, NRRL B621777, NRRL B-21778, et NRRL B-21779.

14. Procédé selon la revendication 11, dans lequel la δ-endotoxine modifiée est choisie parmi le groupe constitué de Cry3Bb.11230, Cry3Bb.11231, Cry3Bb.11232, Cry3Bb.11233, Cry3Bb.11234, Cry3Bb.11235, Cry3Bb.11236, Cry3Bb.11237, Cry3Bb.11238, Cry3Bb.11239, Cry3Bb.11241, Cry3Bb.11242, Cry3Bb.11098, une protéine insecticide binaire CryET33 et CryET34, une protéine insecticide binaire CryET80 et CryET76, une protéine insecticide binaire tlC100 et TlC101, et une protéine insecticide binaire PS149B1.

15. Procédé selon l'une quelconque des revendications 1 à 6, ayant l'étape ajoutée de traitement du sol dans lequel la graine est plantée avec le composé de type néonicotinoïde.

16. Procédé selon l'une quelconque des revendications 1 à 6, ayant l'étape supplémentaire de culture de la graine et du plant qui se développe à partir de la graine selon une pratique sans labour.

17. Procédé selon la revendication 1, dans lequel la détermination du fait ou non que la graine doit être plantée dans un site ayant un niveau d'infestation de ravageurs insectes qui devrait indiquer le besoin de traitement avec un insecticide comprend la détermination du fait ou non que la graine doit être plantée dans un site ayant un niveau d'infestation de ravageurs insectes qui indiquerait le besoin de traitement avec un insecticide de type néonicotinoïde.

18. Procédé selon l'une quelconque des revendications 7, 10 et 11, dans lequel la graine est traitée avec une quantité du composé de type néonicotinoïde d'environ 0,1 gm/100 kg de semence jusqu'à environ 1 000 gm/100 kg de semence.

19. Procédé selon la revendication 18, dans lequel la graine est traitée avec un composé de type néonicotinoïde en une quantité d'environ 5 gm/100 kg de semence jusqu'à environ 600 gm/100 kg de semence.

20. Procédé selon la revendication 19, dans lequel la graine est traitée avec un composé de type néonicotinoïde en une quantité d'environ 10 gm/100 kg de semence jusqu'à environ 400 gm/100 kg de semence.

21. Procédé selon la revendication 20, dans lequel la graine est traitée avec un composé de type néonicotinoïde en une quantité d'environ 20 gm/100 kg de semence jusqu'à environ 300 gm/100 kg de semence.

22. Procédé selon l'une quelconque des revendications 7, 10 et 11, dans lequel la plante agronomique est choisie parmi le groupe constitué des céréales, du blé, de l'orge, du seigle, de l'avoine, du riz, du sorgho, de la betterave, des fruits semblables aux poires, des fruits à noyaux, des fruits à chair tendre, de la pomme, de la poire, de la prune, de la pêche, de l'abricot japonais, du pruneau, de l'amande, de la cerise, de la fraise, de la framboise, de la mûre, des légumineuses, du haricot commun, de la lentille, du pois, du soja, des plantes oléagineuses, du colza, de la moutarde, du pavot, de l'olive, du tournesol, du cocotier, du ricin, du cacaoyer, du plant d'arachide, des cucurbitacées, de la citrouille, du concombre, du melon, des citrus, de l'orange, du citronnier, du pamplemoussier, de la mandarine, du pamplemoussier de Watson, du citrus natsudaidai, des légumes, de la laitue, du chou, du chou céleri, du radis chinois, de la carotte, de l'oignon, de la tomate, de la pomme de terre, du poivron, des camphriers, de l'avocatier, du cannelier, du camphre, du maïs, du tabac, des noix, du café, de la canne à sucre, du thé, de la vigne, du houblon et de la banane.

23. Procédé selon l'une quelconque des revendications 7, 10, et 11, dans lequel la plante agronomique est choisie parmi le groupe constitué du riz, du blé, de l'orge, du seigle, du maïs, de la pomme de terre, de la carotte, de la patate douce, de la betterave sucrière, du haricot, du pois, de la chicorée, de la laitue, du chou, du chou-fleur, du brocoli, du navet, du radis, de l'épinard, de l'asperge, de l'oignon, de l'ail, de l'aubergine, du poivre, du céleri, du « canot », de la courge, de la citrouille, de la courgette, du concombre, de la pomme, de la poire, du coing, du melon, de la prune, de la cerise, de la pêche, de la nectarine, de l'abricot, de la fraise, du raisin, de la framboise, de la mûre, de l'ananas, de l'avocat, de la papaye, de la mangue, de la banane, du soja, de la tomate, du sorgho et des framboises et des bananes.

24. Procédé selon l'une quelconque des revendications 7, 10, et 11, dans lequel la plante agronomique est choisie dans le groupe constitué du coton, du lin, du chanvre, du jute, de la ramie, du sisal, du pin, du chêne, du séquoia de Californie, du peuplier, de la gomme, du frêne, du sapin, du bouleau, du tsuga du Canada, du mélèze, de l'acajou, de l'ébène, des arbustes ornementaux, et des arbres ornementaux.

25. Procédé selon l'une quelconque des revendications 7, 10 et 11, dans lequel la plante agronomique est choisie parmi le groupe constitué du maïs, des céréales, de l'orge, du seigle, du riz, des légumes, des trèfles, des légumineuses, des haricots, des pois, de la luzerne, de la canne à sucre, des betteraves sucrières, du tabac, du coton, du colza (canola), du tournesol, du carthame, et du sorgho.

26. Procédé selon la revendication 25, dans lequel la plante agronomique est le maïs.

27. Procédé selon la revendication 25, dans lequel la plante agronomique est un plant de soja.

28. Procédé selon l'une quelconque des revendications 7, 10 et 11, dans lequel le traitement de la graine du plant comprend, de plus, le traitement de la graine avec un fongicide choisi parmi le groupe constitué du méfénoxame, de l'oxadixyle, du tébuconazole, du tétraconazole, du siméconazole, du fludioxonile, du fluquinconazole, du difénoconazole, du captane, du métalaxyle, de la carboxine, de l'azoxystrobine, de l'ipconazole et du thirame.

29. Procédé selon l'une quelconque des revendications 7, 10 et 11, dans lequel la graine possède un événement transgénique fournissant au plant la résistance à un herbicide et le traitement comprend l'application foliaire de l'herbicide.

30. Procédé selon la revendication 29, dans lequel l'herbicide est choisi parmi le groupe constitué des régulateurs de croissance, des acides phénoxy acétiques, des acides phénoxy propioniques, des acides phénoxy butyriques, des acides benzoïques, de l'acide picolinique et des composés apparentés, du clopyralide, du quinclorac, des inhibiteurs du transport des auxines, des semi-carbones, des s-triazines, d'autres triazines, des urées substituées, des uraciles, des benzothiadiazoles, des benzonitroles, des phénylcarbamates, des pyridazinones, des phénylpyriddazines, des inhibiteurs de pigment, des pyridazinones, des isoxazoles, des inhibiteurs de croissance, des agents de rupture de la mitose, des dinitroanilines, des oxysulfurons, des pyridines, des amides, des inhibiteurs de pousses des plantules qui émergent, des carbamothioates, des inhibiteurs des racines uniquement au niveau des plantules, des amides, des phénylurées, des inhibiteurs des racines et des pousses des plantules, des chloroacétamides, des inhibiteurs de la synthèse des acides aminés aromatiques, des inhibiteurs de la synthèse des acides aminés à chaîne ramifiée, des sulfonylurées, des midazolinones, des triazolopyrimidines, des tyrimidinyloxybenzoates, des inhibiteurs de la biosynthèse des lipides, des aryoxyphénoxypropionates, des cyclohexanediones, des inhibiteurs de la biosynthèse de la paroi cellulaire, des nitriles, des benzamides, des agents de rupture de la membrane cellulaire, de l'acide sulfurique dilué, du dihydrogéno sulfate de monocarbamide, des huiles herbicides, des bipyridyliums, des diphényléthers, des oxydiazoles, des N-phénylhétérocycles et des inhibiteurs de la glutamine synthétase.

31. Procédé selon la revendication 29, dans lequel l'herbicide est choisi parmi le groupe constitué du chlorimuron-éthyle, de l'acide chloroacétique, du chlorotoluron, chlorprophame, chlorsulfuron, chlorthal-diméthyle, chlorthiamide, de la cinméthyline, du cinosulfuron, cléthodime, clodinafop-propargyle, clomazone, cloméprop, clopyralide, cloransulam-méthyle, de la cyanazine, du cycloate, cyclosulfamuron, cycloxydime, cyhalofop-butyle, 2,4-D, du daimuron, dalapon, dazomet, 2,4DB, du desmédiphame, de la desmétryne, du dicamba, dichlobénile, dichlorprop, dichlorprop-P, diclofop-méthyle, difenzoquat métisulfate, diflufénican, diméfuron, dimépipérate, diméthachlore, de la diméthamétryne, du diméthénamide, de la diméthipine, de l'acide diméthylarsinique, de la dinitramine, du dinocap, dinoterb, diphénamide, dibromure de diquat, dithiopyr, diuron, DNOC, EPTC, de l'esprocarbe, de l'éthalfluraline, de l'éthamétsulfuron-méthyle, de l'éthofumésate, de l'éthoxysulfuron, de l'étobenzanide, du fénoxaprop-P-éthyle, fénuron, sulfate de fer, flamprop-M, flazasulfuron, fluazifop-butyle, fluazifop-P-butyle, de la fluchloraline, du flumétsulame, flumiclorac-pentyle, de la flumioxazine, du fluométuron, fluoroglycofen-éthyle, flupoxame, flupropanate, flupyrsulfuron-méthyl-sodium, flurénol, de la fluridone, flurochloridone, du fluroxypyr, de la flurtamone, du fluthiacet-méthyle, fomésafène, de la fosamine, du glufosinate-ammonium, glyphosate, de l'halosulfuron-méthyle, de l'haloxyfop, HC-252, de la hexazinone, de l'imazaméthabenz-méthyle, de l'imazamox, de l'imazapyr, de l'imazaquin, de l'imazéthapyr, de l'imazosulfuron, de l'imidazilinone, de l'indanofan, de l'ioxynil, de l'isoproturon, de l'isouron, de l'isoxabène, de l'isoxaflutole, du lactofène, lénacil, linuron, MCPA, MCPA-, thioéthyle, MCPB, du mécoprop, mécoprop-P, méfénacet, métamitron, métazachlore, méthabenzothiazuron, de l'acide méthylarsonique, du méthyldymron, de l'isothiocyanate de méthyle, du métobenzuron, métobromuron, métolachlore, métosulam, métoxuron, de la métribuzine, du métsulfuron-méthyle, molinate, monolinuron, naproanilide, napropamide, naptalame, néburon, nicosulfuron, de l'acide nonanoïque, du norflurazon, de l'acide oléique (acides gras), de l'orbencarbe, de l'oryzaline, de l'oxadiargyle, de l'oxadiazon, de l'oxasulfuron, de l'oxyfluorfène, du dicholorure de paraquat, pébulate, de la pendiméthaline, du pentachlorophénol, pentanochlore, de la pentoxazone, des huiles de pétrole, du phenmédiphame, piclorame, pipérophos, prétilachlore, primisulfuron-méthyle, de la prodiamine, prometon, de la pcométryne, du propachlore, propanil, propaquizafop, de la propazine, du prophame, propisochlore, de la propyzamide, du prosulfocarbe, prosulfuron, pyraflufène-éthyle, pyrazolynate, pyrazosulfuron-éthyle, pyrazoxyfène, pyributicarbe, pyridate, pyriminobac-méthyle, pyrithiobac-sodium, quinclorac, quinmérac, de la quinoclamine, du quizalofop, quizalofop-P, rimsulfuron, séthoxydime, siduron, de la simazine, simétryne, du chlorate de sodium, système STS, de la sulcotrione, du sulfentrazone, sulfométuron-méthyle, sulfosulfuron, de l'acide sulfurique, des huiles de goudron, du 2,3,6-TBA, TCA-sodium, tébutame, tébuthiuron, terbacile, terbuméton, de la terbuthylazine, terbutryne, du thénylchlore, thiazopyr, thifensulfuron-méthyle, thiobencarbe, tiocarbazil, tralcoxydime, tri-allate, triasulfuron, triaziflame, tribénuron-méthyle, triclopyr, de la triétazine, trifluraline, du triflusulfuron-méthyle, vernolate, et des mélanges de ceux-ci.

32. Procédé selon la revendication 29, dans lequel l'herbicide est choisi parmi le groupe constitué du glyphosate, du glyfosinate et du glufosinate, de l'imidazilinone et du système STS.

33. Procédé selon la revendication 32, dans lequel l'herbicide comprend du glyphosate.

34. Procédé selon la revendication 32, dans lequel la δ-endotoxine modifiée est choisie parmi Cry3Bb 11231 et Cry3Bb 11098.

35. Procédé selon l'une quelconque des revendications 7, 10 et 11, dans lequel la graine est traitée avec un composé de type néonicotinoïde qui est un composant d'un enrobage à libération contrôlée.

36. Procédé de croisement d'une plante hybride ayant un rendement et/ou une vigueur accrus provenant de deux plants parents, le procédé comprenant :
le traitement des graines d'un ou des deux plants parents avec un composé de type néonicotinoïde avant la plantation des graines, dans lequel les graines d'une ou des deux plantes parentes contiennent une séquence polynucléotidique étrangère codant pour la production d'une protéine insecticide, ou une séquence polynucléotidique étrangère qui fournit la résistance aux herbicides, ou les deux ;
la pollinisation du parent femelle avec le pollen du parent mâle ; et
le rassemblement des semences produites par le plant parent femelle.

37. Procédé selon la revendication 36, dans lequel la protéine insecticide comprend une toxine d'insecte.

38. Procédé selon la revendication 37, dans lequel la toxine d'insecte est une delta-endotoxine de *Bacillus thuringiensis.*

39. Procédé selon la revendication 37, dans lequel la toxine d'insecte est une delta-endotoxine modifiée de *B. thuringiensis* du type qui est décrit dans la revendication 14.

40. Procédé d'augmentation du rendement et/ou de la vigueur d'une plante agronomique qui est cultivée à partir d'une graine qui est plantée au niveau d'un site où le traitement de la graine ou de la plante agronomique avec un insecticide n'est pas indiqué, le procédé comprenant le traitement d'une graine comprenant une séquence polynucléotidique étrangère codant pour la production d'une protéine insecticide, ou une séquence polynucléotidique étrangère qui fournit la résistance aux herbicides, ou les deux, avec un composé de type néonicotinoïde et la plantation de la graine traitée au niveau d'un site où le traitement de la graine ou du plant agronomique avec un insecticide n'est pas pratiqué.

41. Procédé d'augmentation du rendement et/ou de la vigueur d'une plante agronomique qui est cultivée à partir d'une graine qui est plantée dans un site ayant un niveau d'infestation par un insecte qui est un ravageur du plant agronomique et contre lequel un insecticide de type néonicotinoïde a une activité insecticide, le procédé comprenant le traitement d'une graine comprenant une séquence polynucléotidique étrangère codant pour la production d'une protéine insecticide, ou une séquence polynucléotidique étrangère qui fournit la résistance aux insecticides, ou les deux, avec un composé de type néonicotinoïde et la plantation de la graine traitée dans un site où le traitement insecticide de la graine ou de la plante agronomique n'est pas pratiqué.

42. Procédé selon l'une quelconque des revendications 40 et 41, dans lequel la plantation de la graine traitée dans un site où le traitement de la graine ou de la plante agronomique avec un insecticide n'est pas pratiqué comprend la plantation de la graine dans une division de relevés des cultures dans laquelle aucun insecticide n'était utilisé sur les cultures durant l'année précédente.

43. Procédé selon la revendication 42, dans lequel la plantation de la graine traitée au niveau d'un site où le traitement de la graine ou de la plante agronomique avec un insecticide n'est pas pratiqué comprend la plantation de la graine dans une division de relevés des cultures dans laquelle aucun insecticide de type néonicotinoïde n'était utilisé sur la culture durant l'année précédente.

44. Procédé selon la revendication 40, dans lequel la plantation de la graine traitée au niveau d'un site où le traitement de la graine ou de la plante agronomique avec un insecticide n'est pas pratiqué comprend la plantation de la graine dans un comté dans lequel aucun insecticide n'était utilisé sur les cultures durant l'année précédente.

45. Procédé selon la revendication 40, dans lequel la plantation de la graine traitée au niveau d'un site où le traitement de la graine ou de la plante agronomique avec un insecticide n'est pas pratiqué comprend la plantation de la graine dans un comté dans lequel aucun insecticide de type néonicotinoïde n'était utilisé sur les cultures durant l'année précédente.

46. Procédé d'augmentation du rendement et/ou de la vigueur d'une plante agronomique qui est cultivée à partir d'une graine qui est plantée dans un site ayant un niveau d'infestation par un insecte qui est un ravageur pour la plante agronomique et contre lequel un insecticide de type néonicotinoïde a une activité insecticide, le procédé comprenant :
a. le traitement d'une graine comprenant une séquence polynucléotidique étrangère codant pour la production d'une protéine insecticide, ou d'une séquence polynucléotidique étrangère qui fournit la résistance aux herbicides, ou les deux, avec un insecticide de type néonicotinoïde ; et
b. la plantation de la graine traitée au niveau d'un site ayant un niveau d'infestation par les insectes situé au-dessous de celui auquel un tel traitement insecticide est indiqué.

47. Graine qui est traitée par le procédé selon l'une quelconque des revendications 7, 10 et 11.

48. Procédé d'augmentation du rendement et/ou de la vigueur d'une plante agronomique qui est cultivée à partir d'une graine comprenant une séquence polynucléotidique étrangère codant pour la production d'une protéine insecticide, ou d'une séquence polynucléotidique étrangère qui fournit la résistance aux herbicides, ou les deux, le procédé comprenant :
a. le choix d'un site dans lequel la graine doit être plantée où le niveau d'infestation des ravageurs insectes se situe en-dessous de celui auquel le traitement avec un insecticide est indiqué ; et
b. la conduite d'une action qui est choisie parmi le groupe constitué :
i. du traitement de la graine avec un composé de type néonicotinoïde, et
ii. la plantation au niveau du site d'une graine qui a été traitée avec un composé de type néonicotinoïde.
